(19) Europäisches Patentamt
European Patent Office
Office européen des brevets

(11) EP 1 761 748 B1

(12) EUROPEAN PATENT SPECIFICATION

(45) Date of publication and mention of the grant of the patent:
**07.01.2009 Bulletin 2009/02**

(21) Application number: **05747166.6**

(22) Date of filing: **02.06.2005**

(51) Int Cl.:
***G01J 3/52*** *(2006.01)*

(86) International application number:
**PCT/GB2005/002171**

(87) International publication number:
**WO 2005/124301 (29.12.2005 Gazette 2005/52)**

(54) **COLOUR DISPLAY SYSTEM FOR AIDING THE SELECTION AND COMBINATION OF COLOURS**

FARBANZEIGESYSTEM ZUR HILFE BEI DER AUSWAHL UND KOMBINATION VON FARBEN

SYSTEME DE REPRESENTATION DE COULEURS

(84) Designated Contracting States:
**AT BE BG CH CY CZ DE DK EE ES FI FR GB GR HU IE IS IT LI LT LU MC NL PL PT RO SE SI SK TR**

(30) Priority: **22.06.2004 GB 0413956**

(43) Date of publication of application:
**14.03.2007 Bulletin 2007/11**

(73) Proprietor: **Imperial Chemical Industries Limited**
**London**
**SW1E 5BG (GB)**

(72) Inventors:
- **TAYLOR, Celia**
  **Berkshire SL2 5DS (GB)**
- **WARD, Mary**
  **Berkshire SL2 5DS (GB)**

(74) Representative: **Ellis, Christopher Paul**
**ICI Paints**
**Legal Affairs Dept.**
**Patent & Trade Marks Section**
**P.O. Box 1883**
**Wexham Road**
**Slough, Berkshire SL2 5FD (GB)**

(56) References cited:
**WO-A-99/56968**
**GB-A- 2 361 158**
**US-A1- 2004 046 802**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 761 748 B1

## Description

### Technical Field

This invention relates to a colour display system for aiding the selection and combination of colours in colour scheming.

### Background to the Invention and Prior Art

Consumers and professional specifiers alike sometimes have difficulty in quickly and reliably identifying colour combinations that are likely to appeal to the human eye. While those with particular aptitude will have the capability to use other aspects of an interior design such as relative surface areas, texture and lighting to use virtually any combination of colour to achieve attractive displays, most find some degree of guidance in narrowing down the choice of alternatives helpful as long as the guidance is not overly prescriptive. In the absence of such guidance and under pressure of deadlines, colour schemers are more likely to repeat previous schemes, rather than explore other potential combinations more suited to the task in question.

Various guides have been used to proposed colour schemes following the choice of an initial key colour. The ICI Paints Colour and Contrast guide recommends colours schemes based on the principles of the Colour wheel combined with maintaining similar tonal purity for the proposed choices. The ICI Eye for Colour system also measures a colour and then recommends a single contrasting hue and two harmonising hues, each at a number of lightness values.

Colour wheels are a 2-dimensional representation of colours that have a fixed relationship to colours with which they co-ordinate. Colours are represented in a progression of hues around a circle. Usually only the most saturated colour available is shown, but these very bright colours are only used infrequently for interior decorating. Some wheels show other less saturated colours of the same hue in progressively smaller segments towards the centre. However, these are generally show only a few colours, typically 60, or use very small colour representations.

If it were possible to create a colour wheel that uses colours within a tonal zone rather than the most saturated colour available, it would be much more useful as a practical colour scheming tool. However, it is difficult to produce a colour display which relates colours of the same hue but different tonal purity zones.

Some improvement is offered by known colour grid systems. Such a system comprises a two-dimensional array of colour sample elements in the form of areas of colour coating on strips of card. The cards are arranged in blocks which are, in turn, arranged in a grid of horizontal rows and vertical columns. The colours of the colour elements, their arrangements on the strips, the arrangement of the strips and blocks are such that, typically, there is a progression of hue in one direction in the array and a progression of tonal purity in an orthogonal direction. Such a system offers advantages over colour wheels since colour wheels make ineffective use of their coated surface area. The system also offers advantages over a computerised system in that a multiplicity of users can use the system simultaneously and colour reproduction can be controlled tightly. Such a system allows a large number of colour sample elements to be viewed simultaneously and in an ordered arrangement. However, it has been found that unskilled users find the systems to be of limited use in selecting combinations of colours that appeal to the eye of the average person.

US2004046802 describes a colour display system having colour samples arranged in parallel lines according to their associated hue and chromacity properties and in a series of hue increments in the direction of rows, and in a series of lightness increments in the orthogonal direction.

### Summary of the Invention

It is an object of the present invention to provide an instrument which allows unskilled users to select combinations of colours over a wide range of hues and tonal purity in a comparatively reliable way.

According to a first aspect of this invention, there is provided a colour display system for aiding the selection and combination of colours in colour scheming, wherein: the system comprises an array of colour sample elements each of a respective colour, the elements being grouped in discrete blocks according to hue, chromaticity and lightness; the colour sample elements of each block all have colours which are within a hue range respective to that block and which have predetermined chromaticity and lightness properties associated with that block; the blocks are arranged in at least 3 parallel lines according to their associated chromaticity and lightness properties such that all of the blocks in each line have similar or the same respective associated chromaticity and lightness properties; each line contains M blocks, where $6 \le M \le 12$, which are arranged in a hue range sequence along the line; within each block the colour sample elements are arranged in a series of hue increments in the direction of the said lines and corresponding to the sequence of the hues of the elements in the visible spectrum, and in a series of lightness increments such that lightness increases in the orthogonal direction; and the angular range of hues in each block, as defined by the CIELAB colour space, vary in size between blocks such that the blocks containing the 90 degrees CIELAB hue have a hue angle range of one half or less than one half the size of the hue angle range of the blocks containing the 270 degrees CIELAB hue. Preferably, the hue range sequence along each line corresponds to the sequence of the hue ranges in the visible spectrum such that the array contains M parallel non-overlapping hue range segments in a direction orthogonal to the lines. In particular, it is preferred that the lines are horizontally oriented rows and the hue range segments comprise vertically oriented columns in the array.

In a particularly preferred embodiment, for any first block in any one of the rows, there is another, second, block which has a conformity of at least 75%, based on a reference colour wheel having *n* sectors of equal angle which map onto the CIELAB colour space as mapped sectors of unequal angles which, between a first angular range of 140 and 230 degrees Hue in the CIELAB colour space, have an average subtended angle per sector of $(2 \pm 0.2)360/n$ degrees in the CIELAB colour space. The maximum angle subtended by any of the mapped sector of the CIELAB colour space is that of a sector lying between 150 and 220 degrees Hue.

In this specification the term "conformity" means a parameter quantifying the degree to which elements of a first block of elements in an array of colour elements combine with elements of a second block of elements in the array, the parameter being as calculated in (a) and (b) below.

(a) For each element i of the first block, count the elements of the second block which have a hue within a predetermined angular deviation from the hue directly opposite that of the element i on a reference colour wheel.

(b) Sum the counts for all elements i of the first block and express the sum as a percentage of the total number of possible pairings of the elements i and the elements of the second block.

In the above preferred embodiment, there is a second angular range of between 78 and 98 degrees Hue in the CIELAB colour space in which the mapped sectors have an average subtended angle per sector of $(0.4 \pm 0.04) 360/n$ degrees. Within this region, it is preferred that there is a slight maximum at or near 20 degrees Hue.

For a 48 step reference colour wheel, where the first step contains pure yellow (90 degrees Hue CIELAB), the third angular range includes steps 29 to 44 (corresponding to about five degrees to 70 degrees Hue CIELAB, with the maximum occurring in steps 31, 32 or 33 (i.e. between about 13 degrees and 27 degrees Hue CIELAB).

The remaining steps subtend angles having an average which is such that the total of all subtended angles of the mapped sectors sum to 360 degrees in the CIELAB colour space.

It is preferred, but not essential, that the hue angles subtended by the mapped sectors vary progressively rather than in a series of discontinuities around the CIELAB colour space.

The number of sectors on the reference colour wheel, *n*, is advantageously an integer divisible by six and/or eight, and is at least six. One preferred value is 48.

The number of blocks in each line is preferably seven or eight, with no more than two blocks encompassing a hue angle range of at least 140 degrees Hue in the CIELAB colour space, this range including the 255 degree and 313 degree CIELAB hues.

In one variant, the hue ranges of the individual blocks in each line are of equal angular extent on the reference colour wheel. In another variant, particularly applicable in the case where M is an odd number, the hue ranges of the individual blocks in each line are of unequal angular extent on the reference colour wheel with, e.g., the angular extent of the hue range of one of the blocks of the line being at least 1.5 times the angular extent of the hue range of at least one of the other blocks of the line.

The applicants have found that the average person's perception of colour is such that they are particularly sensitive to and aware of differences in hue in the yellow region of the visible spectrum, especially when compared to, for instance, the green and blue regions when hues are measured against one of the established colour definition standards such as the CIELAB colour space. The observation that the average person tends to prefer contrasting colour combinations from opposing sectors of a colour wheel is, in itself, of uncertain and, therefore, limited use in devising an improved aid to colour scheming because there are a number of different colour wheels. The system set out above takes account of these factors and other observations relating to how people react to different colour combinations in providing a particular arrangement of colour sample elements in an array is defined in terms of an established colour measurement standard. The result is a reduction in the need for skill in achieving successful combinations over a wide range of colours. This is done while still providing the user with latitude in the selection process.

According to another aspect of the invention there is provided an interior or exterior design process as defined in claim 20.

It is preferred that, in the systems described above, given that the blocks are arranged in at least 3 parallel lines, and the lightness and chromaticity properties of the colours of the colour sample elements in the at least 3 lines conform to the following conditions (i), (ii) and (iii) respectively:

(i) the colour is substantially fully saturated or is a mixture of the fully saturated colour and black;

(ii) the colour does not meet condition (i) and is a mixture of a saturated colour and a visibly significant level of white, but has no visibly significant level of black, for any given hue, the lightness being of higher than any colour in (i); and
(iii) the colour does not meet condition (i) nor condition (ii) but is in the group of colours that are mixtures dominated by grey, but contain a visibly significant level of saturated colour, and for any hue and lightness have a lower chromaticity than those colours of the same hue and lightness meeting conditions (i) and (ii).

The zone of colours meeting condition (iii) may be divided into, e.g., two groups of different chromaticities such that, in one group, the colours have a higher chromaticity than the colours of the same hue and lightness in the other group. In this case, the blocks are arranged in at least 4 parallel lines in the array.

In the preferred array, the colours falling under condition (i) may be termed "Vibrant", and those falling under condition (ii) may be termed "Fresh". Where the colours falling under (iii) are divided into two groups, those with higher chromaticity may be termed "Warm" and those with lower chromaticity "Calm".

The colours within each block may be arranged such that lightness increases consistently in one direction, and that hue increases consistently in an orthogonal direction. It is not essential that every available hue increment or slice is represented in each block, nor that all the hue increments represented in a block are equally represented. However, it is desirable that the hue differences between hue slices within a block are less than 15 degrees. It is also preferred that within each hue increment at least two lightness levels are available and preferably four or more as this enables more choice of monochromatic schemes within a block.

As noted above, there are a number of different reference colour wheels which may be used, and which each oppose acceptable contrasting colours in slightly different ways. In this specification we describe a particularly preferred transform which may be applied to the standard CIELAB colour wheel to produce a particular reference colour wheel which is used by the described embodiments, but in other embodiments any other reference colour wheel which opposes acceptable contrasting colours in other ways may be used. However, whatever reference colour wheel is used as the basis for a colour display array according to the invention, in embodiments of the invention it is possible to apply the principle of conformity as described above to select colours for the colour sample elements in each group which will provide a predetermined conformity. The conformity parameter is a measure of how well a colour display array will be able to facilitate easy selection of acceptable contrasting colours for a particular reference colour wheel, with a higher conformity value indicating that the array will be able to more easily facilitate contrasting colour selection.

Others aspects of the invention include design processes, decorating and colour scheming methods, collections of coloured items brought together and retail spaces out in accordance with the principles set out herein. In particular, they include an interior or exterior design process as set out in claim 21 hereinafter, a method of decorating interior or exterior surfaces of a building, as set out in claim 24, a method of colour scheming as set out in claim 25, a collection of coloured items as set out in claim 28, and a retail space as set out in claim 30.

Coloured items here include, for example, coving, wall coverings, paving slabs, tiles, floor coverings (including carpets), fabrics (particularly furnishing fabrics and curtains), furniture, soft furnishings and blinds.

Reference is made here to "paint" and to "painting". The term here is used broadly to include coatings, in particular paints, varnishes and lacquers, and their application. These coatings can be ready-made or produced from tinting systems in-store. A collection of tinters produced according to the principles of this invention is also included within its scope.

Description of the Drawings

The invention will now be described by way of example with reference to the drawings in which:

Figure 1 is a front view of a display system in accordance with the invention;

Figure 2 is a diagram illustrating the CIELAB colour space coordinate system;

Figures 3A and 3B are graphs representing the transformation between CIELAB colour space and the hue steps of a reference colour wheel upon which the distribution of hues in the display system of Figure 1 is based;

Figure 4 is a graph plotting hue angle against colour card number for a first example array;

Figure 5 is a graph plotting hue angle against colour card number for a second example array;

Figure 6 is a graph plotting hue angle against colour card number for a third example array;

Figure 7 is a graph plotting hue angle against colour card number for a fourth example array; and

Figure 8 is a graph plotting hue angle against colour card number for a fifth example array.

Description of the Embodiments

A colour display system in accordance with the invention for aiding the selection and combination of colours in colour scheming comprises a two dimensional array 10 of colour sample elements 12 which are each of a respective colour. In the example illustrated in Figure 1, there are 1386 colour sample elements 12. These are grouped in 28 discrete blocks according to hue, chromaticity and lightness. The colour sample elements 12 of each block 14 all have colours which are within a hue range respective to that block and which have predetermined chromaticity and lightness properties associated with that block 14. The blocks 14 are arranged in 4 parallel rows 16 according to their associated chromaticity and lightness properties such that all the blocks 14 in each row 16 have similar or the same respective associated chromaticity and lightness properties.

In this example, each row 16 contains seven blocks 14 which are arranged in a hue range sequence along the row 16, extending from a first block 14A at one end of the row containing elements based on red hues through to a seventh block 14G at the other end of the row, containing elements based on violet hues. The blocks 14B to 14F between the two end blocks 14A, 14G have elements based respectively on orange, gold, yellow, green and blue hues, arranged in the order in which these hues appear in the visible spectrum.

As a result, the array 10 of colour sample elements contains seven parallel non-overlapping hue range segments 18A to 18G, each running in a direction orthogonal to the four rows 16, and appearing as vertical columns in the array 10.

It is to be understood that the display system shown in Figure 1 does not consist solely of the array 10 of 28 blocks 14 arranged as described above. The system also includes an auxiliary array 20 of four blocks containing colour sample elements of neutral colours, arranged as a group of blocks extending in the vertical direction. Accordingly, references to the colour sample elements and blocks above are references to elements and blocks of the first-mentioned array 10 alone, and do not include the elements and blocks of the auxiliary array 20.

Within each block 14A to 14G of the array 10, the colour sample elements 12 are arranged in a series of hue increments in the direction of the rows 16, the increments being arranged in a hue sequence corresponding to the hue sequence of the hues in the visible spectrum, and in a series of lightness increments (i.e. lightness) such that lightness increases in a downward vertical direction within each block. It follows that in the array 10 as a whole, the colour sample elements 12 produce a progressive change of hue in accordance with the visible spectrum in the horizontal direction. In the vertical direction, the juxtaposition of the lightest elements along the bottom line of each of the three uppermost rows with the darkest elements, respectively, of the blocks below serves to emphasise the divisions of the array into rows. The boundaries between the blocks 14A to 14G in each row are emphasized by guide cards 22 placed between the blocks, each illustrating an example of colour scheming using colours from the adjacent block.

Accordingly, the array comprises a number of colour elements 12 in which each colour appears only once in the array and the range of colours used is spread throughout the colour space, e.g. the colour space defined by the known CIELAB colour space in which hues are defined as angles in a cylindrical co-ordinate system. In general terms, different numbers of colour elements may be used, typically between 600 and 2000. As explained above, the sample elements are divided into blocks 14 and, as will be seen from Figure 1, the blocks 14 are arranged in a grid pattern. Within each block, the elements themselves are arranged in a grid pattern. As will be explained below, the position of the blocks, and the boundaries of the blocks in colour space produce certain properties in the arrangement of colour sample elements that allow the system to be used as a colour guide to assist colour scheming choices. In particular, the system allows users to focus on a selection of colours that co-ordinate well with an initial selected colour. This choice may be performed in a series of steps from an initial grouping of between 150 and 500 colours, down to a group of 50 to 100 colours. This is achieved by dividing the colour space into subsets of colour space of colours or zones, as exemplified by the rows 16. Colours are assigned to particular zones according to the relationship between chromaticity as a function of Y value, compared to the chromaticity and Y value of the most chromatic colour of that hue which can be typically reproduced.

These zones of colours are further subdivided into smaller subsets, which are the blocks 14A to 14G. Colours are assigned to a particular block within a zone, dependent on their hue. The blocks 14A to 14G are then arranged in a two dimensional array such that the allocation of each block is determined by the zone, and by the hue range of the block. Owing to this arrangement of the blocks, each block can be related to another block in a simple way to allow selection of colours which co-ordinate attractively. This selection can be particularly successfully achieved by choosing the angular ranges of the hues in each block in a manner described below and by arranging for the blocks to meet particular statistical criteria (hereinafter referred to as "conformity") based on a predetermined reference colour wheel.

Colour scheming may therefore be based on interrelated blocks within the array 10 based on principles that involve a geometrical relationship between an ideal combination and actual position (even for cases where the number of blocks 14 per zone to row 16 is odd). If the number of blocks per zone is odd, as in the case of the embodiment described above with reference to Figure 1, the array is particularly easy and intuitive to use, because an uneven distribution of hue increments from one block 14 to another allows simple and familiar terms to be used in instructing the user. The specific version described above with reference to Figure 1 allows an optimum number of colours per block 14 to facilitate colour scheming.

The blocks 14 are separated from other blocks 14 by a space or a line within the array 10, allowing guidance as to the use of the system to be located between the blocks, as described above, in the form of, for instance, colour scheming guide cards 22.

Within each block, the colour sample elements are on strips of card oriented vertically alongside each other in the block. The cards may be removed for comparison against articles and other colour sample elements. Each strip preferably contains colour sample elements 12 of only one hue increment.

The two dimensional array 10 may be presented to the observer horizontally for use on a desk top, or as a vertical arrangement to be viewed from a standing position. The latter is preferred because it offers scope for larger colour representations.

The blocks 14 of colour sample elements 12 correspond to irregular polygons in colour space defined in mathematical form as boundaries made up of curves defined in terms of lightness, and chromaticity for a small angular range of Hue angle, and a Hue Segment bounded by a maximum and minimum hue. The manner in which the boundaries are set determines the usefulness of the array as a guide to colour coordination.

Two factors are used to determine the boundaries. One factor relates to hue, and the way that hues may be combined to form the most attractive combinations in interior decoration. The other factor relates to lightness, chromaticity and the relationship between them, and how colours of similar tonal purity combine to form colour schemes. Applying both of these factors simultaneously to form an arrangement of colours in blocks allows users to focus their attention on a manageable group of colours while also enabling them explore a large number of potential colour combinations.

It is appropriate at this point to give some initial definitions. Hue is the quality of a colour that we describe as the colour of the rainbow or visible spectrum, that is, the property of the colour that is independent of lightness or chromaticity.

In CIELAB colour space, colours are defined by cylindrical co-ordinates. Thus, referring to Figure 2, the Hue Angle defines the hue component as the angular coordinate in a polar co-ordinate system around an achromatic lightness or reflectance axis Y or L, where zero degrees Hue is the *a* axis. In practice, zero degrees Hue in the CIELAB colour space corresponds approximately to the colour magenta. As hue angle increases, the hues pass through red, orange, yellow (at 90 degrees Hue also the b axis), green, turquoise, blue and violet, the violet region extending to 360 degrees Hue which corresponds to zero degrees Hue, forming the complete hue circle.

It will now be appreciated that a hue slice in colour space is a sector of colour space, containing colours of various undefined lightness and chromaticity, but within narrow angular ranges of hue. In this description, the slice subtends a hue angle of between 5 and 15 degrees.

At the centre of the CIELAB colour space, where *Y* equals zero, is the colour black. Lightness increases along the axis *Y* and chromaticity increases radially outwardly from the axis Y to a maximum at the circumference of the hue circle, as shown in Figure 2. Accordingly, any colour within the array 10 (Figure 1) can be defined against the international standard represented by the CIELAB colour space. A technique by which colours can be measured and, therefore, defined in the CIELAB colour space is set out in Appendix A hereto.

Each block 14 in the array 10 is made up of a series of equivalent colour zones corresponding to the rows 16 which form annular spaces around the Y axis of colour space, through consecutive hue slices.

It will be understood from the above that, within a hue slice, colour space can be divided into a number of zones, such that the differences between these zones within the same hue slice relate to the depth and greyness of the colours contained within the zones. It has been found that if colour space is divided into hue slices, and that all of the hue slices are then divided into zones using the method described, colours from a single zone or equivalent zones, of whatever hue, look attractive together. This has been demonstrated in colour displays that group a wide selection of colours within a zone, in horizontal bands, where hue progresses from one end of the display to another.

In the array described above, the hues are grouped into the blocks 14 within each zone, and hue blocks are separated from neighbouring hue blocks within the same zone by a clearly visible space containing instructions on the use of the guide. The purpose of the space or line is to make it clear that the blocks are separate from each other.

Blocks containing colours within similar hue ranges but in different zones are distinguishably different because either they are separated by a space or line or because of a sharp contrast in lightness, in an arrangement where lightness increases or decreases in a direction orthogonal to the hue progression.

Colours within each zone are separated into the hue blocks 14 in a similar manner, so that once a hue block 14 has been identified in one zone as having a specific hue range, blocks 14 consisting of the same hue range can be identified in each of the other zones.

The blocks 14 are arranged in a grid such that in one moving from block to block in one direction allows the user to find similar colours that are contained within the same zone but are different in hue, while moving from block to block in an orthogonal direction allows to user to find colours within that hue range but having different lightness and/or chromaticity characteristics.

Colour scheming may be performed, firstly, within a block 14. When the hue slices are also grouped using the manner described, into recommended hue bands, blocks of colours are formed such that any two or more colours selected from within that block co-ordinate well together in either a monochromatic or harmonious colour scheme.

The colours within a block contain a range of lightness and chromaticity values, consistent with its zone. In the preferred embodiment, the majority of the blocks 14 have 54 colour sample elements 12. In one row, there are 36 elements 12. In general terms, the blocks of arrays used in systems in accordance with the invention contain between 20 and 100 colour sample elements, and preferably more than 48 elements.

Colour scheming between the blocks is based on a property of the described system which is that for each block 14, there will be a corresponding opposing block 14 in the same zone or row 16 such that the vast majority of colours from the first block form very good combinations based on contrasting and split colour schemes when used with the vast majority of colours from the opposing block. For example, if a colour is selected from one of the yellow blocks 14D, the vast majority of colours in the violet block 14G in the same row 16 form a good combination with the yellow colour. The same will be true of any colour selected from the yellow block in question. Similar pairings are achieved between other blocks in each row, based on the fact that the distribution of hues horizontally in the array 10 is a transformation of the distribution of hues around a predetermined reference colour wheel. Thus, given that research has shown that good contrasting and split colour schemes arise by choosing colours from opposing sectors of the predetermined reference colour wheel, corresponding pairings of blocks can be used in the manner just described to produce successful combinations.

To illustrate in more detail how colour scheming may be performed in the manner summarised above, three stepwise processes are now described.

<u>(a) Finding the Nearest Colour</u>

Step1: Identify by visual inspection the column 18A - 18G blocks 14A - 14G having the same broadly general hue as a key colour. This narrows the number of colours from 1386 down to about 200. (In general terms, other embodiments of the invention result in a reduction from between 50 to 200 down to 80 to 200.)

Step 2: From the group of blocks identified in Step 1,identify by visual inspection the block that has similar tonal purity to the key colour. This block will contains 36 or 54 elements 24-100) in the general case.

Step 3: By visual inspection, scanning horizontally along the row of the more chromatic colours within the block selected in step 2, identify the colours of similar hue to the key colour. Typically this subset of the colours within the block contains a group of 4-18 colours.

Step 4: By visual inspection scanning vertically the subset of colours identified in Step 3,identify from colour or group of colours of the nearest lightness. Typically this identifies 1-3 colours.

Step 5: By visual inspection identify the colour of nearest chromaticity, lightness and hue to the original colours from the small group identified in step 4.

<u>(b) Identifying other colours with which to co-ordinate</u>

Step 6: Examine the row of blocks indicated as containing elements of the same tonal zone as the block selected in step 2. This group of typically 150 to 500 elements will go well with the key control elements.

Step 7: Examine the elements within the block identified in Step 2. This group of typically 24 to 100 colours will co-ordinate particularly well with the original colour forming either monochromatic or harmonising colour schemes.

Step 8: Identify and locate the opposing block using guidance given in a guide text grouping blocks in pairs. The colours within this block will co-ordinate particularly well with the original colour in the block identified in Step 2 in contrasting or split colour schemes. Typically this represents 24-100 colours

<u>(c) Alternative Steps</u>

When the user of the guide has a general idea of the colour they wish to use rather than a specific identified colour, the following steps are appropriate.

Step 1: Identify the block of elements most representing the area of colours envisaged as forming a basis for a particular colour scheme.

Step 2: Examine the elements within the block identified in the previous step. This group of typically 24 to 100 colours will co-ordinate particularly well with any other colour in the group forming either a monochromatic or harmonising colour schemes.

Step 3: Identify and locate the opposing block using the guidance given in the guide text.

The colours within this block will co-ordinate particularly well with the colours in the block identified in the previous step in contrasting or split colour schemes.

As stated above, the rows 16 each represent a particular zone in colour space, with respective chromaticity and lightness characteristics. These are explained in more detail below with reference to Figure 1.

### Zone 16-1 (Vibrant)

Within each hue slice this zone contains strong colours, including colours of maximum saturation for that hue, colours close to that colour, and colours that are mixtures of the maximum saturation colours for that hue, and black (i.e., "shades"). Colours that are virtually achromatic with very little white are generally rated Vibrant (Black is Vibrant); however, the boundary varies with hue. Colours falling into this zone according to its associated criteria are classed as Vibrant and are excluded from the other zones even if they meet the criteria associated with those other zones. Accordingly, the Vibrant criteria override those of the other zones.

### Zone 16-2 (Fresh)

This zone contains colours that are close to the maximum saturation available at that lightness level, but that are lighter than the most saturated colour available at that hue. Such colours are sometimes referred to as "tints". Accordingly, if the chromaticity is above a maximum value calculated for the lightness and hue in question, the colour lies in this zone unless it meets the overriding criteria of zone 16-1.

### Zone 16-3 (Warm)

This zone contains colours that are not contained within the other zones 16-1, 16-2, 16-4. They are intermediate in chromaticity at a given lightness. It follows that if the chromaticity is above a minimum value for zone 16-4, and below the maximum chromaticity value referred to above in connection with zone 16-2, the colour will lie in the Warm zone unless its parameters fall within the overriding criteria for zone 16-1 (Vibrant).

### Zone 16-4 (Calm)

In this zone, colours have low chromaticity for their lightness level but are not necessarily achromatic, but does not contain the very deepest low saturation colours that have very little or no white content. In other words, if the chromaticity of a colour is below a minimum value calculated for its lightness and hue, the colour will lie in this calm zone unless its rated Vibrant according to the overriding criteria (lacking white) referred to above.

The colours in the Warm and Calm zones may be referred to as "tones".

In other embodiments, it is possible to subdivide the above zones on the basis of lightness of chromaticity or both, as long as this is done within each hue slice or segment in a consistent fashion. However, dividing the array into more than six zones or rows reduces the number of potential colour schemes identified by the system.

Division of the array 10 into hue segments 18 is now considered. These segments preferably form the hue boundaries of the blocks 14, but it is conceivable within the scope of the invention for different blocks 14 in different rows 16 to have different hue boundaries.

The hue boundaries of the blocks 14 are defined in terms of Hue Steps on a reference colour wheel using the following method. Although it is not essential that the hue boundaries are the same across all the lightness and chromaticity zones, it is preferred that they are because it allows the user of the guide to locate any given colour more quickly within the array. (A transformation from Hue angles in CIELAB space to the Hue Steps referred to above is performed because the CIELAB hue circle does not represent an appropriate basis for reliable colour combination.)

The hue increments of the array may map onto the hue steps of the reference colour wheel linearly or non-linearly. In the array of Figure 1 there are 63 hue increments and 22 colour sample elements per increment. (In the general case there may be 12 to 150 elements per increment.) They are grouped into blocks of the array so as to meet "conformity" criteria, as will be explained in more detail below. Within each block the hue increments may be distributed evenly or unevenly in terms of their distribution on the reference colour wheel.

For the purpose of defining the hue boundaries of the blocks, the reference colour wheel is divided into an even number *n* of sectors such that when the most saturated colours available of each hue are arranged in order of hue equidistantly around the circumference of a circle (the reference colour wheel), colours lying opposite each other form the best contrasting colour combination and the difference in hue angle between any two adjacent colours on the circumference is no more than 1.5* 360/*n* degrees Hue, *n* may be divisible by 6 or 8, preferably both, giving a preferred value of 48.

The Hues chosen include pure yellow, that is the most saturated colour having a CIELAB Hue angle between 88 degrees and 92 degrees.

The ranges of hues included in the ith Hue Step (on the reference colour wheel) corresponding to the ith colour around the wheel are determined as follows, $H_i$ being the ith hue of the wheel expressed in degrees, where $1 \leq i \leq n$.

For the apparent discontinuity where $H_i$ is the colour on the circle of lowest hue, given that Hue +360 =Hue when Hue angle is expressed in degrees.

$$0.5*(H_i + H_{i-1} - 360) \leq Hue < 0.5*(H_i + H_{i+1})$$

For the other colours

$$0.5*(H_i + H_{i-1}) \leq Hue < 0.5*(H_i + H_{i+1})$$

where $H_{i+1} > H_i$ and $1 < i < n$,

$$0.5*(H_1 + H_n) \leq Hue_1 < 0.5*(H_1 + H_2)$$

where $H_{i+1} > H_i$, and

$$0.5*(H_n + H_{(n-1)}) \leq Hue_n < 0.5*(H_n + H_1)$$

where $H_{i+1} > H$,

On the reference colour wheel:

Hue step 1 corresponds to Hue range encompassing the position on the circle of pure yellow;

Hue step 2 corresponds to the Hue range immediately adjacent Hue step 1, in the direction of increasing Hue; and

Hue Step *n* corresponds to the Hue range immediately adjacent Hue step 1, in the direction of decreasing Hue.

In order to offer sufficient variety of colour type within a block, M, the number of blocks per block type, ≤ 12, but also to work well as a colour guide, M ≥ 6.

It will be recalled that where N is the number of Hue steps in the colour wheel and M is the number of blocks per zone. In the system described above with reference to Figure 1, M equals 7. For simplicity of explanation, however, it is assumed, firstly, that M is an even number.

In the above analysis, I represents the number of any given hue step around the reference colour wheel, in the following analysis, j is the number of any given block 14 along the array 10. Thus, we designate d(j) as the number of hue steps in each block. When M is an even number, d(j) = *n*/M.

At this stage, it is assumed that the blocks in the array 10 are evenly distributed around the reference colour wheel. In practice, this is not usually the case when M is an odd number.

It is preferred that *n* and M are chosen such that *n*/M is an integer, but this is not essential.

Consider the following conditions:

<u>For j=1, where D+ (*n*/M) ≤ (*n*+1)</u>
The block contains Hue Step Min(j=1), Hue Step Max( j=1) and all hue steps in between. Here,
Hue Step Min(j)= D+1
Hue Step Max (j)= Hue Step Min(j)+d(j)-1
<u>For i=1 where D+d(j)>N</u>

Here, there is a discontinuity since the block contains the Maximum Hue Step N. So for that block:

Hue Step Min(j) =1; and
Hue Step Max(j)=N
but hue steps within the range D to (D-*n*+d(j)) are excluded
For the ith Block, where j>1 and Hue Step Max(j-1)<= *n*-d(j)-2

The block contains Hue Step Min(j), Hue Step Max(j) and all hue steps in between

$$\text{Hue step Min(j)} = \text{Hue Step Max(j-1)} + 1;$$

and

$$\text{Hue Step Max(j)} = \text{Hue Step Min (j)} + \text{d(j)} - 1$$

For the jth Block , where j>1 and Hue Step Max(j-1)> *n*-d(j)-2, there is a discontinuity since the block contains the Maximum Hue Step *n*. So for that block:

Hue Step min(j)=1; Hue step max (j)=*n*; but hue steps within the range Hue step max(j-1) to Hue Step Max (j-1) +d(j) -*n* are excluded.

For example, if *n*= 48, and M = 8, *n*/M=6, and if the position of pure yellow in the array is defined by D, and D = 23, then:

j=1 contains hue steps 29 to 34 inclusive
j=2 contains hue steps 35 to 40 inclusive
j=3 contains hue steps 41 to 46 inclusive
j=4 contains hue steps 47 and 48 inclusive and also hue steps 1 to 4 (4<excluded steps<47)
j=5 contains hue steps 5 to 10 inclusive
j=6 contains hue steps 11 to 16 inclusive
j=7 contains hue steps 17 to 22 inclusive
j=8 contains hue steps 23 to 28 inclusive

so for that example, Hue step 1, the hue step containing pure yellow is found in block 4.

Preferred values of D where M is even

It is preferred that D is chosen so that hue step 1 does not appear at the edge of a block, and is ideally situated close to the centre of a block. It is also preferred that D is chosen such that it does not appear in Block 1 or Block M. It is also preferred that the block opposing the block containing pure yellow does not form block 1 or block M. This is because colours in the block containing yellow are generally frequently specified

Preferred value for M

Where M is even, the opposing block is fully aligned, and easily identified where J≥M/2, the opposing block is simply J+ M/2, where J> M/2, the opposing block is simply j-M/2.

The reference colour wheel is selected to reflect the average person's impressions as to which colour combinations represent successful colour schemes, based on research and observation using hues from the complete visible spectrum. The mapping of the hue steps of the reference colour wheel into CIELAB hue angles is shown in Figures 3A and 3B. Generalisations of the transformation represented by these curves are contained hereinabove and in the claims.

Using a selected reference colour wheel, colours having a hue with a given hue angle may, according to research and observation, be successfully matched in a contrasting or split colour scheme with colours whose hues lie within a sector of the reference colour wheel located generally oppositely (i.e. centred on a 180 degree opposite location) on the wheel.

It has been found that if the reference colour wheel is divided into M sectors, where M is at least 6 and no more than 12, it is possible to select a colour of any single hue within one sector and combine it with colours of any hue from the opposing sector on the wheel to obtain an acceptable combination with a high degree of probability. This probability can be expressed as a "conformity" calculated as follows:-

(i) For each hue step i of a first sector of the reference colour wheel, count the hue steps of a second sector, which is in a generally opposing position on the wheel, which have a hue within a predetermined angular deviation from the hue directly opposite of the hue step i on the wheel.

(ii) Sum the counts for all hue steps i for the first sector and express the sum as a percentage of the total number of possible pairings of the hue steps i of the first sector and the hue steps of the second sector.

The preferred angular deviation is $\pm$ 30 degrees on the reference colour wheel. Alternative deviations are possible, e.g. $\pm$ 20 degrees or $\pm$ 45 degrees, depending on the closeness of the match required.

It will be appreciated that the higher the value of M (the number of sectors), the higher the value of the conformity. If M is too high, each sector contains relatively few hues, with the result that the number of hues available to the user is too small.

It will be appreciated from the above that "conformity" can be used in the selection of M.

A value of 12 allows a very high degree of conformity, since all colours within a block or sector fall within one zone, and are within *n*/12 hue steps. Also, all colours in a sector or block J will fall within *5n*/12 - *7n*/12 hue steps of the initially selected hue step, ensuring contrasting and split colour schemes.

Too many colours in the array 10 prevent the system being a practical size or having colour representations of adequate size. An array containing 4 zone types and 12 blocks per zone type, provides a total of 48 blocks. If the colour range reproduced contains 480 colours, this will only permit 10 colours per block. Even if 1200 colours are displayed, there will be only 25 colours per block. It is therefore beneficial to have fewer blocks, as the vast majority of colours still meet the criteria of combinations shown in the 12 hue block per row array.

Another reason for reducing the number of blocks is that it allows a greater variety of harmonious colour schemes within the block.

In addition, having fewer blocks allows the user to identify immediately colour groupings with simple colour terms such as red, orange, green, and so on.

Experimentation has shown that at least 6 blocks are required per zone for the guide to operate, and at least three zones.

As stated above, the array may have an odd number of blocks per row/zone.

Experimentation with a system in which M is odd using the principles of described above has shown that the proportion of colours that produce acceptable colour schemes is good as long as $M \geq 6$, but identifying the opposing block is much more difficult, and even when identified, the number of colours conforming was worse than expected. For example a model of a 7 block per zone system showed a percentage conformity of about 65%, compared to a 6 block system of over 80%.

Further experimentation with mathematical models of the system reveals that by using blocks of unequal size on the reference colour wheel, levels of conformity can rise to over 80% in particular if one block contains, e.g. twice the number of the steps of the two blocks most closely opposing the largest block, and the other blocks contain equal hue step ranges to each other. Depending on the required degree of certainty in matching, different conformity thresholds can be specified e.g. 60%, 65%, 70%, 75%, 80%, 85%, 90% or 95% in constructing the array.

If K is the particular block chosen to contain most hue steps; if d( j=K) =2x; if 3<x< N/M; and it is preferred that x is an integer, then:

Where

$$K < (M+1)/2,$$

$$d(j = K + (M-1)/2) = x,$$

and

$$d(j = K + (M+1)/2) = x$$

for all other values of j,

$$d(j)= (n- 4X)/(M-3)$$

Where

$$K >( M+1)/2$$

$$d(j= K- (M-1)/2)=x,$$

and

$$d(j= K-( M+1)/2)=x$$

for all other values of j,

$$d(j)= (n- 4X)/(M-3)$$

Where

$$K=(M+1)/2,$$

$$d(j=1)=x,$$

and

$$d(j=M)=x$$

for all other values of j,

$$d(j)= (n- 4X)/(M-3)$$

Once this step has been completed, the hue step ranges for each block can be calculated as before, but using the variable value of (j).
It is, therefore, possible to use an odd number of blocks while still achieving a high level of conformity. Conversely, using such a degree of variation with an even number of blocks was found to produce lower levels of conformity, than using equal blocks.

| for 1200 colours in 4 zones | No of Blocks per zone | % conformity | % conformity |
|---|---|---|---|
| Average Colours per block | | Equal | Unequal |
| 50 | 6 | 81 | 77 |
| 43 | 7 | 69 | 81 |
| 38 | 8 | 94 | 85 |
| 33 | 9 | 80 | 94 |
| 25 | 12 | 100 | |

Unequal blocks are of special interest where the colour popularity in one hue area is very different from that in another, or where one hue area exhibits a very rapid transition in terminology, owing to the average persons' greater sensitivity to and awareness of hue differences in the corresponding part of the reference colour wheel. For example, hues that are relatively close to yellow are termed green or orange, whereas hues close to pure blue are still termed as blue.

Therefore, an array based on an odd number of colour blocks, where the colour block containing pure yellow has a hue step range approximately half of the hue step range of the block most nearly opposing it, tends to be more easily understood and more useful, even though arrays based on even numbers of blocks are easier to form.

So for example, where Hue step Y is pure yellow and 48 hue steps are used to form the reference colour wheel, Hue Step Y-3 can be orange, hue step Y-2 red toned yellow, hue step Y-1 Yellow, hue Step Y Yellow, hue Step Y+1 Yellow, hue step Y+2 green toned yellow, and hue step Y+3 lime green.

Conversely, in the green area, the colours recognised as green extend over 9 or 10 hue steps, partly because blue/greens are generally described in terms of green or blue rather than as a separate universally recognised colour area. Even though the allocation of the hue steps to hue angles can partly rectify this issue, attempting to allocate too many hue steps in the yellow area distorts the relationships of the colour wheel in other areas.

Using fewer blocks is preferred for increased colour choice within a block, but more blocks allows higher degrees of conformity. Similarly, more zones allows tighter restriction on tonal purity. The presence of at least four tonal zones in the array has been found to allow good colour schemes to be generated from an array having >80% conformity.

Specific examples illustrating the selection of colours for blocks of arrays according to further embodiments of the invention will now be described. The specific examples illustrate that many different specific layouts in terms of the number of blocks, the number of stripe cards in each block and the colours chosen for each stripe card can produce an array which meets a chosen conformity characteristic. Particularly, the examples will show that a relatively high conformity value of > 80% can be achieved with several different layouts.

Example 1

In the arrangement of Example 1 to be described first, an array is provided having rows (referred to interchangeably below as "rows" or "zones") of stripe cards arranged in blocks (referred to interchangeably below as "sectors" or "blocks") as previously described, but where the numbers of stripe cards in each sector is not equal to the split of the colour wheel steps. In particular, the number of colour wheel steps on the reference colour wheel is 48 as previously described, but the total number of stripe cards is 45. The reference colour wheel used in this and the following examples is the reference colour wheel described previously.

| Sector | Cards | Colour Wheel steps | Hue at start | Step at start | Step at end |
|---|---|---|---|---|---|
| R | 6 | 7 | 346 | 27 | 33 |
| O | 6 | 7 | 29.32 | 34 | 40 |
| Go | 6 | 5 | 61.14 | 41 | 45 |
| Y | 5 | 5 | 82.28 | 46 | 2 |
| G | 8 | 7 | 97.89 | 3 | 9 |
| B | 7 | 7 | 166.59 | 10 | 16 |
| V | 7 | 10 | 256.6 | 17 | 26 |

The table above sets out the number of stripe cards in the array of Example 1 to be described, and in which blocks they are disposed. In particular, for each row of the array 7 blocks of stripe cards are provided, having the following colours: reds (R), oranges (O), golds (Go), yellows (Y), greens (G), blues (B), and violets (V), in that order from the left of the array. The second column of the table indicates the number of cards in each block (e.g. the gold block has 6 cards), and the third column the number of steps on the reference colour wheel over which the colours in that block are spread (e.g. the colours in the violet block are spread over 10 steps of the reference colour wheel). The fourth column gives the hue angle with reference to the CIELAB colour wheel (note, not the reference colour wheel) of the starting angle of the sector of the CIELAB wheel covered by the block (here, the "starting angle" is the most anti-clockwise boundary of the sector), and the fifth column gives the starting step on the reference colour wheel of the sector of the reference colour wheel covered by the block. Finally, the last column gives the finishing step of the reference colour wheel for each sector. Note that the reference wheel colour sectors for each block are inclusive of the starting and finishing steps shown in the fifth and sixth columns, as well as all steps in between.

The above table relates to each row in the array of Example 1, for the reason that in example 1 a block in the same column but a different row (or zone) contains colours of the same hue range as another block in the same column, but with different luminance and chrominance values. As explained previously, luminance and chrominance changes can produce different zones of colours with different tonal properties but the same hue. The tables below set out the hue, chrominance, and luminance values of the colours on the left most stripe card and the right most stripe card in each block, for each zone. It should be understood that the colours present on other stripe cards in a block would possess hue, luminance and chrominance values within the ranges established by the shown values.

Moreover, within the below tables, the hue values given are hue angles on the CIELAB colour wheel, the light reflectance values are based on the CIELAB TriStimulus Y value with a scale of 0 - 100 (with 0 being black, and 100 being white), and the chromaticity values are CIELAB chromaticity values, again with a scale of 0 -100 (with 0 being least, and 100 being the most). These values are described in more detail next.

The Y tristimulus value

When, as is customary , Y is evaluated such that for the similarly illuminated and viewed perfect diffuser, Y=100, then Y is equal to the reflectance factor, expressed as a percentage. A detailed description can be found on page 53 of "*Measuring Colour*" by R G Hunt, Third edition, ISBN 0863433871, which is hereby incorporated here in by reference.

The other colorimetric terms used in the examples relate to CIELAB colour space, otherwise known as the CIE 1976 L*, a*,b* colour space. These are hue and chroma, as discussed next

Hue

Hue is an attribute of visual sensation according to which an area appears to be similar to one of or to proportions of two of the perceived colours red, green yellow and blue. The quantitative measure of this attribute is hue angle, H . In the examples, "Hue" refers to CIE 1976 hue angle $h_{ab}$ =arctan (b*/a*). This is a term understood by those skilled in the art and is described more fully on page 65, of *Measuring Colour"* by R G Hunt, Third edition, ISBN 0863433871,

Chroma

Chroma is the colourfulness of an area judged in proportion to the brightness of a similarly illuminated area that appears to be white. The quantitative measure of this attribute is Chroma ,C, where C refers to the CIE 1976 a,b, Chroma $C^*_{a,b}=(a^2 + b^2)^{1/2}$.

Again, this is a term understood by those skilled in the art and is described on page 65 of "*Measuring Colour*" by R G Hunt, Third edition, ISBN 0863433871,

All colorimetric terms referred to in the examples detailed below were calculated from reflectance measurements using standard values for D65 illumination and have been calculated using the CIE colour matching functions for the 1931 Standard Colorimetric Observer.

| Table Example 1 Sector R (6 cards in each mood zone) | | | | | | |
|---|---|---|---|---|---|---|
| | | | | | | |
| Start of Sector R | | | | End of sector R | | |
| H | Y | C | | H | Y | C |
| 349 | 13 | 8 | | 24 | 17 | 18 |
| 349 | 24 | 6 | | 24 | 30 | 13 |

(continued)

| Table Example 1 Sector R (6 cards in each mood zone) | | | | | | |
|---|---|---|---|---|---|---|
| | | | | | | |
| Start of Sector R | | | | End of sector R | | |
| H | Y | C | | H | Y | C |
| 349 | 41 | 4 | | 24 | 49 | 8 |
| 349 | 56 | 3 | | 24 | 64 | 5 |
| 349 | 65 | 2 | | 24 | 73 | 4 |
| 349 | 73 | 2 | | 24 | 83 | 2 |
| | | | | | | |
| 349 | 25 | 44 | | 24 | 28 | 43 |
| 349 | 35 | 38 | | 24 | 47 | 32 |
| 349 | 56 | 24 | | 24 | 63 | 21 |
| 349 | 64 | 18 | | 24 | 69 | 13 |
| 349 | 71 | 13 | | 24 | 76 | 9 |
| 349 | 77 | 9 | | 24 | 83 | 7 |
| | | | | | | |
| 349 | 7 | 23 | | 24 | 7 | 27 |
| 349 | 10 | 32 | | 24 | 15 | 56 |
| 349 | 11 | 43 | | 24 | 15 | 50 |
| 349 | 15 | 38 | | 24 | 21 | 44 |
| 349 | 26 | 34 | | 24 | 30 | 40 |
| 349 | 34 | 28 | | 24 | 38 | 32 |
| | | | | | | |
| | | | | | | |
| 349 | 13 | 25 | | 24 | 13 | 44 |
| 349 | 26 | 25 | | 24 | 28 | 36 |
| 349 | 39 | 18 | | 24 | 42 | 25 |
| 349 | 56 | 12 | | 24 | 53 | 18 |
| 349 | 68 | 7 | | 24 | 67 | 11 |
| 349 | 83 | 3 | | 24 | 83 | 4 |

It will be seen that the above values are arranged into blocks of six; each block of six represents the colours on one stripe card, and the position of the blocks of values in the table corresponds to the row of the array to which the values relate. The above table represents the red blocks.

The orange block values are shown in the table below:

| Table Example 1 Sector O Contains 6 cards in each mood zone | | | | | | |
|---|---|---|---|---|---|---|
| | | | | | | |

(continued)

| Start of Sector O | | | | End of sector O | | |
|---|---|---|---|---|---|---|
| H | Y | C | | H | Y | C |
| 32 | 16 | 16 | | 58 | 19 | 18 |
| 32 | 29 | 11 | | 58 | 30 | 19 |
| 32 | 48 | 7 | | 58 | 40 | 15 |
| 32 | 64 | 4 | | 58 | 59 | 9 |
| 32 | 73 | 3 | | 58 | 67 | 8 |
| 32 | 83 | 2 | | 58 | 83 | 4 |
| | | | | | | |
| 32 | 30 | 51 | | 58 | 44 | 54 |
| 32 | 45 | 37 | | 58 | 49 | 38 |
| 32 | 57 | 25 | | 58 | 57 | 29 |
| 32 | 68 | 13 | | 58 | 72 | 16 |
| 32 | 78 | 11 | | 58 | 81 | 11 |
| 32 | 83 | 8 | | 58 | 85 | 8 |
| | | | | | | |
| 32 | 7 | 23 | | 58 | 9 | 16 |
| 32 | 10 | 43 | | 58 | 13 | 33 |
| 32 | 13 | 56 | | 58 | 24 | 57 |
| 32 | 15 | 55 | | 58 | 31 | 51 |
| 32 | 29 | 42 | | 58 | 34 | 47 |
| 32 | 43 | 30 | | 58 | 42 | 39 |
| | | | | | | |
| 32 | 16 | 41 | | 58 | 20 | 49 |
| 32 | 25 | 28 | | 58 | 31 | 42 |
| 32 | 41 | 26 | | 58 | 44 | 31 |
| 32 | 53 | 19 | | 58 | 55 | 27 |
| 32 | 67 | 11 | | 58 | 65 | 19 |
| 32 | 83 | 4 | | 58 | 77 | 12 |

The gold values are shown in the table below:

| Table Example 1 Sector Go 6 cards in each mood zone | | | | | | |
|---|---|---|---|---|---|---|
| | | | | | | |
| Start of Sector Go | | | | End of sector Go | | |
| H | Y | C | | H | Y | C |
| 63 | 18 | 17.7 | | 80 | 20 | 19 |
| 63 | 33 | 16.7 | | 80 | 33 | 14 |

(continued)

| Start of Sector Go | | | | End of sector Go | | |
|---|---|---|---|---|---|---|
| 63 | 51 | 10.9 | | 80 | 51 | 10 |
| 63 | 66 | 7 | | 80 | 67 | 8 |
| 63 | 74 | 5.7 | | 80 | 71 | 7 |
| 63 | 83 | 4.4 | | 80 | 79 | 5 |
| | | | | | | |
| 63 | 39 | 59 | | 80 | 56 | 63 |
| 63 | 54 | 44 | | 80 | 61 | 52 |
| 63 | 65 | 33 | | 80 | 70 | 37 |
| 63 | 72 | 25 | | 80 | 79 | 24 |
| 63 | 78 | 15 | | 80 | 81 | 18 |
| 63 | 86 | 11 | | 80 | 85 | 11 |
| | | | | | | |
| 63 | 8 | 19 | | 80 | 12 | 26 |
| 63 | 16 | 41 | | 80 | 23 | 53 |
| 63 | 28 | 65 | | 80 | 49 | 76 |
| 63 | 42 | 73 | | 80 | 61 | 87 |
| 63 | 51 | 68 | | 80 | 66 | 63 |
| 63 | 60 | 58 | | 80 | 71 | 43 |
| | | | | | | |
| 63 | 19 | 49 | | 80 | 41 | 70 |
| 63 | 34 | 47 | | 80 | 49 | 56 |
| 63 | 46 | 35 | | 80 | 58 | 42 |
| 63 | 55 | 27 | | 80 | 64 | 33 |
| 63 | 64 | 17 | | 80 | 69 | 22 |
| 63 | 77 | 12 | | 80 | 77 | 17 |

The yellow values are shown in the table below:-

| Table Example 1 Sector Y 5 cards in each mood zone | | | | | | |
|---|---|---|---|---|---|---|
| | | | | | | |
| Start of Sector Y | | | | End of sector Y | | |
| H | Y | C | | H | Y | C |
| 84 | 27 | 22.6 | | 98 | 18 | 15 |
| 84 | 39 | 22.5 | | 98 | 26 | 14 |
| 84 | 53 | 21.8 | | 98 | 43 | 11 |
| 84 | 64 | 16.5 | | 98 | 57 | 10 |
| 84 | 76 | 11.2 | | 98 | 65 | 9 |

(continued)

| Start of Sector Y | | | | End of sector Y | | |
|---|---|---|---|---|---|---|
| H | Y | C | | H | Y | C |
| 84 | 83 | 6.4 | | 98 | 83 | 8 |
| | | | | | | |
| 84 | 64 | 63 | | 98 | 62 | 76 |
| 84 | 66 | 54 | | 98 | 67 | 63 |
| 84 | 74 | 37 | | 98 | 73 | 50 |
| 84 | 78 | 27 | | 98 | 79 | 37 |
| 84 | 81 | 17 | | 98 | 83 | 25 |
| 84 | 86 | 12 | | 98 | 83 | 19 |
| | | | | | | |
| 84 | 9 | 18 | | 98 | 7 | 9 |
| 84 | 19 | 44 | | 98 | 29 | 46 |
| 84 | 48 | 75 | | 98 | 39 | 61 |
| 84 | 64 | 90 | | 98 | 53 | 64 |
| 84 | 66 | 81 | | 98 | 52 | 53 |
| 84 | 69 | 61 | | 98 | 59 | 49 |
| | | | | | | |
| 84 | 28 | 61 | | 98 | 21 | 34 |
| 84 | 59 | 53 | | 98 | 37 | 30 |
| 84 | 61 | 43 | | 98 | 55 | 30 |
| 84 | 63 | 35 | | 98 | 66 | 27 |
| 84 | 77 | 24 | | 98 | 78 | 25 |
| 84 | 83 | 13 | | 98 | 83 | 15 |

The green values are shown in the table below:

| Table Example 1 Sector G 8 cards in each mood zone | | | | | | |
|---|---|---|---|---|---|---|
| | | | | | | |
| Start of Sector G | | | | End of sector G | | |
| H | Y | C | | H | Y | C |
| 103 | 22 | 21 | | 162 | 16 | 15 |
| 103 | 35 | 17 | | 162 | 29 | 12 |
| 103 | 52 | 14 | | 162 | 46 | 6 |
| 103 | 67 | 13 | | 162 | 63 | 5 |
| 103 | 75 | 12 | | 162 | 72 | 4 |
| 103 | 83 | 11 | | 162 | 83 | 3 |
| | | | | | | |

(continued)

| Start of Sector G | | | | End of sector G | | |
|---|---|---|---|---|---|---|
| 103 | 48 | 65 | | 162 | 33 | 48 |
| 103 | 55 | 56 | | 162 | 44 | 40 |
| 103 | 69 | 42 | | 162 | 57 | 31 |
| 103 | 78 | 33 | | 162 | 72 | 22 |
| 103 | 77 | 30 | | 162 | 76 | 15 |
| 103 | 85 | 17 | | 162 | 83 | 13 |
| | | | | | | |
| 103 | 7 | 10 | | 162 | 10 | 31 |
| 103 | 29 | 45 | | 162 | 15 | 35 |
| 103 | 39 | 62 | | 162 | 21 | 54 |
| 103 | 53 | 57 | | 162 | 33 | 40 |
| 103 | 52 | 54 | | 162 | 40 | 35 |
| 103 | 59 | 48 | | 162 | 49 | 30 |
| | | | | | | |
| 103 | 24 | 36 | | 162 | 16 | 35 |
| 103 | 40 | 30 | | 162 | 28 | 32 |
| 103 | 54 | 24 | | 162 | 48 | 23 |
| 103 | 71 | 18 | | 162 | 60 | 16 |
| 103 | 83 | 13 | | 162 | 67 | 15 |
| 103 | 83 | 10 | | 162 | 83 | 10 |

The blue values are shown in the table below:-

| Table Example 1 Sector B 7 cards in each mood zone | | | | | | |
|---|---|---|---|---|---|---|
| | | | | | | |
| Start of Sector B | | | | End of sector B | | |
| H | Y | C | | H | Y | C |
| 172 | 16 | 14 | | 250 | 15 | 15 |
| 172 | 24 | 13 | | 250 | 28 | 12 |
| 172 | 43 | 12 | | 250 | 40 | 9 |
| 172 | 57 | 9 | | 250 | 55 | 7 |
| 172 | 73 | 5 | | 250 | 64 | 5 |
| 172 | 83 | 3 | | 250 | 73 | 3 |
| | | | | | | |
| 172 | 31 | 45 | | 250 | 26 | 39 |
| 172 | 50 | 36 | | 250 | 37 | 35 |
| 172 | 64 | 26 | | 250 | 53 | 26 |

(continued)

| Start of Sector B | | | | End of sector B | | |
|---|---|---|---|---|---|---|
| 172 | 71 | 18 | | 250 | 61 | 21 |
| 172 | 77 | 16 | | 250 | 70 | 12 |
| 172 | 82 | 12 | | 250 | 77 | 8 |
| | | | | | | |
| 172 | 8 | 25 | | 250 | 7 | 15 |
| 172 | 16 | 39 | | 250 | 9 | 25 |
| 172 | 18 | 45 | | 250 | 13 | 36 |
| 172 | 33 | 45 | | 250 | 22 | 32 |
| 172 | 40 | 29 | | 250 | 32 | 26 |
| 172 | 57 | 22 | | 250 | 43 | 21 |
| | | | | | | |
| 172 | 19 | 37 | | 250 | 11 | 26 |
| 172 | 33 | 28 | | 250 | 20 | 24 |
| 172 | 49 | 21 | | 250 | 38 | 29 |
| 172 | 61 | 17 | | 250 | 50 | 16 |
| 172 | 75 | 11 | | 250 | 56 | 13 |
| 172 | 83 | 9 | | 250 | 72 | 9 |

The violet values are shown in the table below:

| Table Example 1 Sector V 7 cards in each mood zone | | | | | | |
|---|---|---|---|---|---|---|
| | | | | | | |
| Start of Sector V | | | | End of sector V | | |
| H | Y | C | | H | Y | C |
| 262 | 17 | 13 | | 341 | 9 | 8 |
| 262 | 26 | 11 | | 341 | 20 | 9 |
| 262 | 39 | 10 | | 341 | 35 | 7 |
| 262 | 54 | 8 | | 341 | 48 | 5 |
| 262 | 63 | 7 | | 341 | 64 | 4 |
| 262 | 72 | 3 | | 341 | 73 | 2 |
| | | | | | | |
| 262 | 22 | 35 | | 341 | 27 | 38 |
| 262 | 32 | 31 | | 341 | 47 | 27 |
| 262 | 46 | 23 | | 341 | 60 | 21 |
| 262 | 64 | 14 | | 341 | 69 | 10 |
| 262 | 69 | 10 | | 341 | 75 | 5 |
| 262 | 71 | 9 | | 341 | 83 | 3 |

(continued)

| Start of Sector V | | | | End of sector V | | |
|---|---|---|---|---|---|---|
| | | | | | | |
| 262 | 8 | 188 | | 341 | 6 | 18 |
| 262 | 10 | 337 | | 341 | 9 | 31 |
| 262 | 18 | 351 | | 341 | 9 | 33 |
| 262 | 23 | 340 | | 341 | 15 | 30 |
| 262 | 34 | 304 | | 341 | 27 | 29 |
| 262 | 50 | 177 | | 341 | 45 | 20 |
| | | | | | | |
| 262 | 8 | 26 | | 341 | 11 | 20 |
| 262 | 14 | 24 | | 341 | 23 | 21 |
| 262 | 27 | 24 | | 341 | 36 | 16 |
| 262 | 47 | 16 | | 341 | 54 | 11 |
| 262 | 63 | 10 | | 341 | 67 | 7 |
| 262 | 72 | 3 | | 341 | 83 | 3 |

As mentioned above, the colours of the other stripe cards in any particular block fall within the ranges represented in the tables above. This is shown in the table below, which gives the CIELAB hue angle for each card, counted in each row from the left (the count is irrespective of the block to which a card belongs). Note that in this example, as apparent from the tables above, the colours on any particular stripe card all have the same hue, and vary in luminance and chromaticity.

Example 1:

Table of Hue verses Card Number from Left

| Card | R | O | Go | Y | G | B | V |
|---|---|---|---|---|---|---|---|
| 1 | 349 | | | | | | |
| 2 | 356 | | | | | | |
| 3 | 3 | | | | | | |
| 4 | 10 | | | | | | |
| 5 | 17 | | | | | | |
| 6 | 24 | | | | | | |
| 7 | | 32 | | | | | |
| 8 | | 37 | | | | | |
| 9 | | 42 | | | | | |
| 10 | | 48 | | | | | |
| 11 | | 53 | | | | | |
| 12 | | 58 | | | | | |
| 13 | | | 63 | | | | |
| 14 | | | 66 | | | | |

(continued)

| Card | R | O | Go | Y | G | B | V |
|---|---|---|---|---|---|---|---|
| 15 | | | 70 | | | | |
| 16 | | | 73 | | | | |
| 17 | | | 77 | | | | |
| 18 | | | 80 | | | | |
| 19 | | | | 84 | | | |
| 20 | | | | 87 | | | |
| 21 | | | | 91 | | | |
| 22 | | | | 95 | | | |
| 23 | | | | 98 | | | |
| 24 | | | | | 103 | | |
| 25 | | | | | 111 | | |
| 26 | | | | | 119 | | |
| 27 | | | | | 127 | | |
| 28 | | | | | 135 | | |
| 29 | | | | | 144 | | |
| 30 | | | | | 153 | | |
| 31 | | | | | 162 | | |
| 32 | | | | | | 172 | |
| 33 | | | | | | 186 | |
| 34 | | | | | | 203 | |
| 35 | | | | | | 219 | |
| 36 | | | | | | 230 | |
| 37 | | | | | | 239 | |
| 38 | | | | | | 250 | |
| 39 | | | | | | | 262 |
| 40 | | | | | | | 274 |
| 41 | | | | | | | 285 |
| 42 | | | | | | | 297 |
| 43 | | | | | | | 308 |
| 44 | | | | | | | 321 |
| 45 | | | | | | | 332 |

The data in the table above is plotted in Figure 4, from which it will be seen that there is a relatively smooth hue progression across the array along each row (the discontinuity shown arises on the transition from 360 degrees to 0 degrees, but in terms of apparent hue there is no discontinuity).

The next table below shows the relationship between card number (again counted along a row from the left) and the step on the reference colour wheel to which a card relates. It will be seen that although there are only 45 cards and 48 steps on the preferred reference colour wheel, by missing some steps out it is possible to cover the whole wheel. Moreover, in some instances the same step is also used for more than one card. Even with such design choices, however, the conformance characteristics can still be met, as will be shown later.

Example 1

Table of Colour Wheel Step verses Card Number from Left

| Card | R | O | Go | Y | G | B | V |
|---|---|---|---|---|---|---|---|
| 1 | 27 | | | | | | |
| 2 | 28 | | | | | | |
| 3 | 29 | | | | | | |
| 4 | 30 | | | | | | |
| 5 | 31 | | | | | | |
| 6 | 33 | | | | | | |
| 7 | | 34 | | | | | |
| 8 | | 35 | | | | | |
| 9 | | 36 | | | | | |
| 10 | | 38 | | | | | |
| 11 | | 39 | | | | | |
| 12 | | 40 | | | | | |
| 13 | | | 41 | | | | |
| 14 | | | 42 | | | | |
| 15 | | | 43 | | | | |
| 16 | | | 43 | | | | |
| 17 | | | 44 | | | | |
| 18 | | | 45 | | | | |
| 19 | | | | 46 | | | |
| 20 | | | | 47 | | | |
| 21 | | | | 48 | | | |
| 22 | | | | 1 | | | |
| 23 | | | | 2 | | | |
| 24 | | | | | 3 | | |
| 25 | | | | | 3 | | |
| 26 | | | | | 4 | | |
| 27 | | | | | 5 | | |
| 28 | | | | | 6 | | |
| 29 | | | | | 7 | | |
| 30 | | | | | 8 | | |
| 31 | | | | | 9 | | |
| 32 | | | | | | 10 | |
| 33 | | | | | | 11 | |
| 34 | | | | | | 12 | |
| 35 | | | | | | 13 | |

(continued)

| Card | R | O | Go | Y | G | B | V |
|---|---|---|---|---|---|---|---|
| 36 | | | | | | 14 | |
| 37 | | | | | | 15 | |
| 38 | | | | | | 16 | |
| 39 | | | | | | | 17 |
| 40 | | | | | | | 18 |
| 41 | | | | | | | 20 |
| 42 | | | | | | | 21 |
| 43 | | | | | | | 22 |
| 44 | | | | | | | 24 |
| 45 | | | | | | | 25 |

With the above information, it is possible to calculate a conformance value for such an array, in the manner described previously. Recall that conformance is a measure of the degree to which the hue angles of colours in a block are within a predetermined range of the 180 degree opposite colour on the colour reference wheel, and is preferably calculated as described previously. However, as a shortcut calculation where, as in the present case, all of the colours on a particular card have the same hue angle, it is also possible to find the ratio of the number of card combinations which fall within the predetermined angle range to the number of possible card combinations. This is shown in the matrix below, for a comparison of the red and green blocks noted above (here, the red and green sectors on the reference colour wheel are almost opposite).

| Red versus Green | 27 | 28 | 29 | 30 | 31 | 33 | |
|---|---|---|---|---|---|---|---|
| 3 | 24 | 25 | 26 | 27 | 28 | 30 | |
| 3 | 24 | 25 | 26 | 27 | 28 | 30 | |
| 4 | 23 | 24 | 25 | 26 | 27 | 29 | |
| 5 | 22 | 23 | 24 | 25 | 26 | 28 | |
| 6 | 21 | 22 | 23 | 24 | 25 | 27 | |
| 7 | 20 | 21 | 22 | 23 | 24 | 26 | |
| 8 | 19 | 20 | 21 | 22 | 23 | 25 | |
| 9 | 18 | 19 | 20 | 21 | 22 | 24 | |
| | | | | | | | |
| Red vs green | 27 | 28 | 29 | 30 | 31 | 33 | |
| 3 | 1 | 1 | 1 | 1 | 1 | 0 | |
| 3 | 1 | 1 | 1 | 1 | 1 | 0 | |
| 4 | 1 | 1 | 1 | 1 | 1 | 0 | |
| 5 | 1 | 1 | 1 | 1 | 1 | 1 | |
| 6 | 1 | 1 | 1 | 1 | 1 | 1 | |
| 7 | 1 | 1 | 1 | 1 | 1 | 1 | |
| 8 | 0 | 1 | 1 | 1 | 1 | 1 | |
| 9 | 0 | 0 | 1 | 1 | 1 | 1 | |
| | 6 | 7 | 8 | 8 | 8 | 5 | 42 |
| | 8 | 8 | 8 | 8 | 8 | 8 | 48 |

(continued)

| | | | | | | | |
|---|---|---|---|---|---|---|---|
| | | | | | | | 0.875 |

The upper matrix shows the difference in reference colour wheel steps between the hue steps on the reference colour wheel of the red block colour cards (steps 28 to 33 as shown), and the hue steps on the reference colour wheel of the green block colour cards (steps 3 to 9). Note that step 3 is repeated twice, as it is the hue of two colour cards in the green block. Given that the reference colour wheel is preferably divided into 48 steps, a 24 step difference between two steps indicates that those steps are substantially opposite on the reference colour wheel.

The lower matrix is a representation of the difference matrix obtained by applying the acceptable range value for conformity to the difference value. Here, two cards are considered to be in conformity if their hue values are within 24 +/_ 4 steps of each other i.e. between 20 to 28 steps of each other. Therefore, the lower matrix represents the difference matrix with a windowing function applied thereto, the windowing function being that if the difference value lies in the range then 20 to 28, then conformity is achieved and the value is replaced by a one. If outside this range the difference value is replaced by a 0.

To obtain the conformity value, the number of 1's in the lower matrix is added up, and the ratio taken of the obtained sum against the total number of entries in the matrix. In this example, the ratio is 42/48, or 0.875, to give a conformity value of 87.5%. Note that this is the conformity value just between the red and green blocks.

The above procedure can then be followed for every colour block pair within a row, where the sectors on the reference colour wheel of the two blocks are substantially opposite. In this example, opposing pairs of blocks, and the resulting conformity values obtained by following the above for each pair, are shown in the table below:-

| **Overall level of Conformance** | | | |
|---|---|---|---|
| First sector | Possible Combinations | with | No. of Conforming Combinations |
| R | 48 | G | 42 |
| O | 42 | B | 36 |
| Go | 42 | V | 34 |
| Y | 35 | V | 20 |
| G | 48 | R | 42 |
| B | 42 | O | 36 |
| V | 42 | Go | 34 |
| Totals | 299 | | 244 |
| | | | 0.81605 |

Thus, as will be seen, for the array of example 1 a total of 244 conforming card combinations are obtained, out of a possible 299 combinations. This gives a conformity ratio of 81.6%. Such a conformity value is very high, and hence such an array allows for very easy colour contrasting.

In the above, it will be seen that the violet block has been matched against both the Gold and yellow blocks. This is because, with an odd number of blocks in a row the case will always arise where the sector of one block on the reference colour wheel is substantially opposite the adjacent sectors of two other adjacent blocks. In such a case, a choice must be made as to which of the two blocks guidance should be given that colour contrasting can be performed. This is the case in the present example, as apparent from the table above. More particularly, the violet block is the substantially opposite block to both the gold and yellow blocks. However, the conformity between the gold and violet blocks is 34/42 = 80%, whereas the conformity between the yellow and violet blocks is only 20/35 = 57%. Therefore, although the violet block is the block with the highest conformity with the yellow block, and hence guidance should be given on the array that when selecting a yellow as a first colour then a violet gives contrasting colours, when selecting the contrasting colour to a violet colour, the block with the highest conformity value should be chosen as the recommendation i.e. in this case the gold block. Thus, guidance should be given that when selecting a violet as a first colour, then a gold would provide a contrasting colour.

Further examples will now be described. Please note that the further examples follow the format of the above described first example, and hence a less full explanation of each will be given. Reference should be made to the corresponding description of the first example above if in doubt as to the meaning of the data shown.

Example 2

In this example the number of stripe cards in each row = 48 ie the same as the number of steps on the reference colour wheel. In addition, the lightness and chroma values which define the different zones are arranged differently from example 1: in particular, compared to example 1, this example shows that it is not the number of cards in each sector but the divisions of the sectors that affects the resulting conformity value.

| Sector | Cards | Colour Wheel steps | lowest step | highest step | Lowest hue |
|---|---|---|---|---|---|
| R | 7 | 7 | 27 | 33 | 346 |
| O | 7 | 7 | 34 | 40 | 29.32 |
| Go | 5 | 5 | 41 | 45 | 61.14 |
| Y | 5 | 5 | 46 | 2 | 82.28 |
| G | 7 | 7 | 3 | 9 | 97.89 |
| B | 7 | 7 | 10 | 16 | 166.59 |
| V | 10 | 10 | 17 | 26 | 256.6 |

The above table sets out the number of cards in each block, reference colour wheel steps, hue angle, and lowest and highest reference wheel step for the second example, in the same manner as described previously for Example 1. There follows tables setting out the hue, lightness, and chrominance values for the first and last card (from the left) in each block, for each row, in the same manner as previously presented for Example 1.

| Table Example 2 Sector R 7 cards in each mood zone | | | | | | |
|---|---|---|---|---|---|---|
| | | | | | | |
| Start of Sector R | | | | End of sector R | | |
| H | Y | C | | H | Y | C |
| 350 | 7 | 23 | | 27 | 7 | 27 |
| 350 | 10 | 32 | | 27 | 15 | 56 |
| 350 | 11 | 43 | | 27 | 15 | 50 |
| 350 | 15 | 38 | | 27 | 21 | 44 |
| 350 | 26 | 34 | | 27 | 30 | 40 |
| 350 | 34 | 28 | | 27 | 38 | 32 |
| | | | | | | |
| 350 | 25 | 44 | | 27 | 28 | 43 |
| 350 | 35 | 38 | | 27 | 47 | 32 |
| 350 | 56 | 24 | | 27 | 63 | 21 |
| 350 | 64 | 18 | | 27 | 69 | 13 |
| 350 | 71 | 13 | | 27 | 76 | 9 |
| 350 | 77 | 9 | | 27 | 83 | 7 |
| | | | | | | |
| 350 | 13 | 8 | | 27 | 17 | 18 |
| 350 | 24 | 6 | | 27 | 30 | 13 |
| 350 | 41 | 4 | | 27 | 49 | 8 |
| 350 | 56 | 3 | | 27 | 64 | 5 |

(continued)

| Start of Sector R | | | | End of sector R | | |
|---|---|---|---|---|---|---|
| H | Y | C | | H | Y | C |
| 350 | 65 | 2 | | 27 | 73 | 4 |
| 350 | 73 | 2 | | 27 | 83 | 2 |
| | | | | | | |
| 350 | 13 | 25 | | 27 | 13 | 44 |
| 350 | 26 | 25 | | 27 | 28 | 36 |
| 350 | 39 | 18 | | 27 | 42 | 25 |
| 350 | 56 | 12 | | 27 | 53 | 18 |
| 350 | 68 | 7 | | 27 | 67 | 11 |
| 350 | 83 | 3 | | 27 | 83 | 4 |

| Table Example 2 Sector O Contains 7 cards in each mood zone | | | | | | |
|---|---|---|---|---|---|---|
| | | | | | | |
| Start of Sector O | | | | End of sector O | | |
| H | Y | C | | H | Y | C |
| 32 | 7 | 23 | | 59 | 9 | 16 |
| 32 | 10 | 43 | | 59 | 13 | 33 |
| 32 | 13 | 56 | | 59 | 24 | 57 |
| 32 | 15 | 55 | | 59 | 31 | 51 |
| 32 | 29 | 42 | | 59 | 34 | 47 |
| 32 | 43 | 30 | | 59 | 42 | 39 |
| | | | | | | |
| 32 | 30 | 51 | | 59 | 44 | 54 |
| 32 | 45 | 37 | | 59 | 49 | 38 |
| 32 | 57 | 25 | | 59 | 57 | 29 |
| 32 | 68 | 13 | | 59 | 72 | 16 |
| 32 | 78 | 11 | | 59 | 81 | 11 |
| 32 | 83 | 8 | | 59 | 85 | 8 |
| | | | | | | |
| 32 | 16 | 16 | | 59 | 19 | 18 |
| 32 | 29 | 11 | | 59 | 30 | 19 |
| 32 | 48 | 7 | | 59 | 40 | 15 |
| 32 | 64 | 4 | | 59 | 59 | 9 |
| 32 | 73 | 3 | | 59 | 67 | 8 |
| 32 | 83 | 2 | | 59 | 83 | 4 |
| | | | | | | |

(continued)

| Start of Sector O | | | | End of sector O | | |
|---|---|---|---|---|---|---|
| H | Y | C | | H | Y | C |
| 32 | 16 | 41 | | 59 | 20 | 49 |
| 32 | 25 | 28 | | 59 | 31 | 42 |
| 32 | 41 | 26 | | 59 | 44 | 31 |
| 32 | 53 | 19 | | 59 | 55 | 27 |
| 32 | 67 | 11 | | 59 | 65 | 19 |
| 32 | 83 | 4 | | 59 | 77 | 12 |

| Table Example 2 Sector Go 5 cards in each mood zone | | | | | | |
|---|---|---|---|---|---|---|
| | | | | | | |
| Start of Sector Go | | | | End of sector Go | | |
| H | Y | C | | H | Y | C |
| 63 | 8 | 19 | | 81 | 12 | 26 |
| 63 | 16 | 41 | | 81 | 23 | 53 |
| 63 | 28 | 65 | | 81 | 49 | 76 |
| 63 | 42 | 73 | | 81 | 61 | 87 |
| 63 | 51 | 68 | | 81 | 66 | 63 |
| 63 | 60 | 58 | | 81 | 71 | 43 |
| | | | | | | |
| 63 | 39 | 59 | | 81 | 56 | 63 |
| 63 | 54 | 44 | | 81 | 61 | 52 |
| 63 | 65 | 33 | | 81 | 70 | 37 |
| 63 | 72 | 25 | | 81 | 79 | 24 |
| 63 | 78 | 15 | | 81 | 81 | 18 |
| 63 | 86 | 11 | | 81 | 85 | 11 |
| | | | | | | |
| 63 | 18 | 17.7 | | 81 | 20 | 19 |
| 63 | 33 | 16.7 | | 81 | 33 | 14 |
| 63 | 51 | 10.9 | | 81 | 51 | 10 |
| 63 | 66 | 7 | | 81 | 67 | 8 |
| 63 | 74 | 5.7 | | 81 | 71 | 7 |
| 63 | 83 | 4.4 | | 81 | 79 | 5 |
| | | | | | | |
| 63 | 19 | 49 | | 81 | 41 | 70 |
| 63 | 34 | 47 | | 81 | 49 | 56 |
| 63 | 46 | 35 | | 81 | 58 | 42 |

(continued)

| Start of Sector Go | | | | End of sector Go | | |
|---|---|---|---|---|---|---|
| H | Y | C | | H | Y | C |
| 63 | 55 | 27 | | 81 | 64 | 33 |
| 63 | 64 | 17 | | 81 | 69 | 22 |
| 63 | 77 | 12 | | 81 | 77 | 17 |

| Table Example 2 Sector Y 5 cards in each mood zone | | | | | | |
|---|---|---|---|---|---|---|
| | | | | | | |
| Start of Sector Y | | | Intermediate hues | End of sector Y | | |
| H | Y | C | | H | Y | C |
| 83 | 9 | 18 | | 95 | 7 | 9 |
| 83 | 19 | 44 | | 95 | 29 | 46 |
| 83 | 48 | 75 | | 95 | 39 | 61 |
| 83 | 64 | 90 | | 95 | 53 | 64 |
| 83 | 66 | 81 | | 95 | 52 | 53 |
| 83 | 69 | 61 | | 95 | 59 | 49 |
| | | | | | | |
| 83 | 64 | 63 | | 95 | 62 | 76 |
| 83 | 66 | 54 | | 95 | 67 | 63 |
| 83 | 74 | 37 | | 95 | 73 | 50 |
| 83 | 78 | 27 | | 95 | 79 | 37 |
| 83 | 81 | 17 | | 95 | 83 | 25 |
| 83 | 86 | 12 | | 95 | 83 | 19 |
| | | | | | | |
| 83 | 27 | 22.6 | | 95 | 18 | 15 |
| 83 | 39 | 22.5 | | 95 | 26 | 14 |
| 83 | 53 | 21.8 | | 95 | 43 | 11 |
| 83 | 64 | 16.5 | | 95 | 57 | 10 |
| 83 | 76 | 11.2 | | 95 | 65 | 9 |
| 83 | 83 | 6.4 | | 95 | 83 | 8 |
| | | | | | | |
| 83 | 28 | 61 | | 95 | 21 | 34 |
| 83 | 59 | 53 | | 95 | 37 | 30 |
| 83 | 61 | 43 | | 95 | 55 | 30 |
| 83 | 63 | 35 | | 95 | 66 | 27 |
| 83 | 77 | 24 | | 95 | 78 | 25 |
| 83 | 83 | 13 | | 95 | 83 | 15 |

| Table Example 2 Sector G 7 cards in each mood zone | | | | | | |
|---|---|---|---|---|---|---|
| | | | | | | |
| Start of Sector G | | | Intermediate hues | End of sector G | | |
| H | Y | C | | H | Y | C |
| 101 | 7 | 10 | | 158 | 10 | 31 |
| 101 | 29 | 45 | | 158 | 15 | 35 |
| 101 | 39 | 62 | | 158 | 21 | 54 |
| 101 | 53 | 57 | | 158 | 33 | 40 |
| 101 | 52 | 54 | | 158 | 40 | 35 |
| 101 | 59 | 48 | | 158 | 49 | 30 |
| | | | | | | |
| 101 | 48 | 65 | | 158 | 33 | 48 |
| 101 | 55 | 56 | | 158 | 44 | 40 |
| 101 | 69 | 42 | | 158 | 57 | 31 |
| 101 | 78 | 33 | | 158 | 72 | 22 |
| 101 | 77 | 30 | | 158 | 76 | 15 |
| 101 | 85 | 17 | | 158 | 83 | 13 |
| | | | | | | |
| 101 | 22 | 21 | | 158 | 16 | 15 |
| 101 | 35 | 17 | | 158 | 29 | 12 |
| 101 | 52 | 14 | | 158 | 46 | 6 |
| 101 | 67 | 13 | | 158 | 63 | 5 |
| 101 | 75 | 12 | | 158 | 72 | 4 |
| 101 | 83 | 11 | | 158 | 83 | 3 |
| | | | | | | |
| 101 | 24 | 36 | | 158 | 16 | 35 |
| 101 | 40 | 30 | | 158 | 28 | 32 |
| 101 | 54 | 24 | | 158 | 48 | 23 |
| 101 | 71 | 18 | | 158 | 60 | 16 |
| 101 | 83 | 13 | | 158 | 67 | 15 |
| 101 | 83 | 10 | | 158 | 83 | 10 |

| Table Example 2 Sector B 7 cards in each mood zone | | | | | | |
|---|---|---|---|---|---|---|
| | | | | | | |
| Start of Sector B | | | | End of sector B | | |
| H | Y | C | | H | Y | C |
| 176 | 8 | 25 | | 252 | 7 | 15 |

(continued)

| Start of Sector B | | | | End of sector B | | |
|---|---|---|---|---|---|---|
| H | Y | C | | H | Y | C |
| 176 | 16 | 39 | | 252 | 9 | 25 |
| 176 | 18 | 45 | | 252 | 13 | 36 |
| 176 | 33 | 45 | | 252 | 22 | 32 |
| 176 | 40 | 29 | | 252 | 32 | 26 |
| 176 | 57 | 22 | | 252 | 43 | 21 |
| | | | | | | |
| 176 | 31 | 45 | | 252 | 26 | 39 |
| 176 | 50 | 36 | | 252 | 37 | 35 |
| 176 | 64 | 26 | | 252 | 53 | 26 |
| 176 | 71 | 18 | | 252 | 61 | 21 |
| 176 | 77 | 16 | | 252 | 70 | 12 |
| 176 | 82 | 12 | | 252 | 77 | 8 |
| | | | | | | |
| 176 | 16 | 14 | | 252 | 15 | 15 |
| 176 | 24 | 13 | | 252 | 28 | 12 |
| 176 | 43 | 12 | | 252 | 40 | 9 |
| 176 | 57 | 9 | | 252 | 55 | 7 |
| 176 | 73 | 5 | | 252 | 64 | 5 |
| 176 | 83 | 3 | | 252 | 73 | 3 |
| | | | | | | |
| 176 | 19 | 37 | | 252 | 11 | 26 |
| 176 | 33 | 28 | | 252 | 20 | 24 |
| 176 | 49 | 21 | | 252 | 38 | 29 |
| 176 | 61 | 17 | | 252 | 50 | 16 |
| 176 | 75 | 11 | | 252 | 56 | 13 |
| 176 | 83 | 9 | | 252 | 72 | 9 |

| Table Example 2 Sector V10 cards in each mood zone | | | | | | |
|---|---|---|---|---|---|---|
| | | | | | | |
| Start of Sector V | | | | End of sector V | | |
| H | Y | C | | H | Y | C |
| 261 | 8 | 188 | | 342 | 6 | 18 |
| 261 | 10 | 337 | | 342 | 9 | 31 |
| 261 | 18 | 351 | | 342 | 9 | 33 |
| 261 | 23 | 340 | | 342 | 15 | 30 |

(continued)

| Start of Sector V | | | | End of sector V | | |
|---|---|---|---|---|---|---|
| H | Y | C | | H | Y | C |
| 261 | 34 | 304 | | 342 | 27 | 29 |
| 261 | 50 | 177 | | 342 | 45 | 20 |
| | | | | | | |
| 261 | 22 | 35 | | 342 | 27 | 38 |
| 261 | 32 | 31 | | 342 | 47 | 27 |
| 261 | 46 | 23 | | 342 | 60 | 21 |
| 261 | 64 | 14 | | 342 | 69 | 10 |
| 261 | 69 | 10 | | 342 | 75 | 5 |
| 261 | 71 | 9 | | 342 | 83 | 3 |
| | | | | | | |
| 261 | 17 | 13 | | 342 | 9 | 8 |
| 261 | 26 | 11 | | 342 | 20 | 9 |
| 261 | 39 | 10 | | 342 | 35 | 7 |
| 261 | 54 | 8 | | 342 | 48 | 5 |
| 261 | 63 | 7 | | 342 | 64 | 4 |
| 261 | 72 | 3 | | 342 | 73 | 2 |
| | | | | | | |
| 261 | 8 | 26 | | 342 | 11 | 20 |
| 261 | 14 | 24 | | 342 | 23 | 21 |
| 261 | 27 | 24 | | 342 | 36 | 16 |
| 261 | 47 | 16 | | 342 | 54 | 11 |
| 261 | 63 | 10 | | 342 | 67 | 7 |
| 261 | 72 | 3 | | 342 | 83 | 3 |

| Example 2 | | | | | | | |
|---|---|---|---|---|---|---|---|
| Table of Hue verses Card Number from Left | | | | | | | |
| Card | R | O | Go | Y | G | B | V |
| 1 | 350 | | | | | | |
| 2 | 358 | | | | | | |
| 3 | 5 | | | | | | |
| 4 | 9 | | | | | | |
| 5 | 14 | | | | | | |
| 6 | 20 | | | | | | |
| 7 | 27 | | | | | | |
| 8 | | 32 | | | | | |
| 9 | | 36 | | | | | |

(continued)

| Example 2 | | | | | | | |
|---|---|---|---|---|---|---|---|
| Table of Hue verses Card Number from Left | | | | | | | |
| Card | R | O | Go | Y | G | B | V |
| 10 | | 41 | | | | | |
| 11 | | 45 | | | | | |
| 12 | | 50 | | | | | |
| 13 | | 54 | | | | | |
| 14 | | 59 | | | | | |
| 15 | | | 63 | | | | |
| 16 | | | 68 | | | | |
| 17 | | | 72 | | | | |
| 18 | | | 77 | | | | |
| 19 | | | 81 | | | | |
| 20 | | | | 83 | | | |
| 21 | | | | 86 | | | |
| 22 | | | | 88 | | | |
| 23 | | | | 90 | | | |
| 24 | | | | 95 | | | |
| 25 | | | | | 101 | | |
| 26 | | | | | 108 | | |
| 27 | | | | | 117 | | |
| 28 | | | | | 126 | | |
| 29 | | | | | 135 | | |
| 30 | | | | | 144 | | |
| 31 | | | | | 158 | | |
| 32 | | | | | | 176 | |
| 33 | | | | | | 194 | |
| 34 | | | | | | 212 | |
| 35 | | | | | | 225 | |
| 36 | | | | | | 234 | |
| 37 | | | | | | 243 | |
| 38 | | | | | | 252 | |
| 39 | | | | | | | 261 |
| 40 | | | | | | | 270 |
| 41 | | | | | | | 279 |
| 42 | | | | | | | 288 |
| 43 | | | | | | | 297 |
| 44 | | | | | | | 306 |
| 45 | | | | | | | 315 |

(continued)

| Example 2 | | | | | | | |
|---|---|---|---|---|---|---|---|
| Table of Hue verses Card Number from Left | | | | | | | |
| Card | R | O | Go | Y | G | B | V |
| 46 | | | | | | | 324 |
| 47 | | | | | | | 333 |
| 48 | | | | | | | 342 |

The above data is plotted in Figure 5 from which it will be seen that there is a relatively smooth hue progression across the array along each row (the discontinuity shown arises on the transition from 360 degrees to 0 degrees, but in terms of apparent hue there is no discontinuity).

The next table below shows the relationship between card number (again counted along a row from the left) and the step on the reference colour wheel to which a card relates. It will be seen that because there are 48 cards, no steps on the colour wheel need be missed, and there is a one to one correspondence between cards and steps.

| Example 2 | | | | | | | |
|---|---|---|---|---|---|---|---|
| Table of Colour Wheel Step verses Card Number from Left | | | | | | | |
| Card | R | O | Go | Y | G | B | V |
| 1 | 27 | | | | | | |
| 2 | 28 | | | | | | |
| 3 | 29 | | | | | | |
| 4 | 30 | | | | | | |
| 5 | 31 | | | | | | |
| 6 | 32 | | | | | | |
| 7 | 33 | | | | | | |
| 8 | | 34 | | | | | |
| 9 | | 35 | | | | | |
| 10 | | 36 | | | | | |
| 11 | | 37 | | | | | |
| 12 | | 38 | | | | | |
| 13 | | 39 | | | | | |
| 14 | | 40 | | | | | |
| 15 | | | 41 | | | | |
| 16 | | | 42 | | | | |
| 17 | | | 43 | | | | |
| 18 | | | 44 | | | | |
| 19 | | | 45 | | | | |
| 20 | | | | 46 | | | |
| 21 | | | | 47 | | | |
| 22 | | | | 48 | | | |
| 23 | | | | 1 | | | |
| 24 | | | | 2 | | | |

(continued)

| Example 2 | | | | | | | |
|---|---|---|---|---|---|---|---|
| Table of Colour Wheel Step verses Card Number from Left | | | | | | | |
| Card | R | O | Go | Y | G | B | V |
| 25 | | | | | 3 | | |
| 26 | | | | | 4 | | |
| 27 | | | | | 5 | | |
| 28 | | | | | 6 | | |
| 29 | | | | | 7 | | |
| 30 | | | | | 8 | | |
| 31 | | | | | 9 | | |
| 32 | | | | | | 10 | |
| 33 | | | | | | 11 | |
| 34 | | | | | | 12 | |
| 35 | | | | | | 13 | |
| 36 | | | | | | 14 | |
| 37 | | | | | | 15 | |
| 38 | | | | | | 16 | |
| 39 | | | | | | | 17 |
| 40 | | | | | | | 18 |
| 41 | | | | | | | 19 |
| 42 | | | | | | | 20 |
| 43 | | | | | | | 21 |
| 44 | | | | | | | 22 |
| 45 | | | | | | | 23 |
| 46 | | | | | | | 24 |
| 47 | | | | | | | 25 |
| 48 | | | | | | | 26 |

Now considering conformity, applying the same procedure as described previously in respect of Example 1, it is possible to obtain conformity values as shown in the table below:-

| **Overall level of Conformity** | | | |
|---|---|---|---|
| First sector | Number of possible Combinations | with | Number of Conforming Combinations |
| R | 49 | G | 43 |
| O | 49 | B | 43 |
| Go | 50 | V | 35 |
| Y | 40 | V | 35 |
| G | 49 | R | 43 |
| B | 49 | O | 43 |
| V | 50 | Go | 35 |

(continued)

| Overall level of Conformity | | | |
|---|---|---|---|
| First sector | Number of possible Combinations | with | Number of Conforming Combinations |
| Totals | 336 | | 277 |
| | | | 0.824405 |

Thus, in this example, a conformity value of 82% is obtained, showing that the array has good conformity and hence will be very useful for colour contrasting.

As with the first example, here the violet block has been matched against the gold and yellow blocks, but instead the yellow block has the higher conformity (35/40 for yellow, versus 35/50 for gold). Thus, the yellow block should be recommended for matching against the violet block, Generally, where there is a choice of two or more blocks to match against a block, the block with the highest conformity should be chosen.

Example 3

A further example will now be described, the description being in the same format as above.

| Sector | Cards | Colour Wheel steps | lowest step | highest step | Lowest hue |
|---|---|---|---|---|---|
| R | 6 | 8 | 27 | 34 | 346 |
| O | 6 | 8 | 35 | 42 | 33.87 |
| Go | 6 | 4 | 43 | 46 | 69.78 |
| Y | 5 | 4 | 47 | 2 | 84.55 |
| G | 8 | 8 | 3 | 10 | 97.89 |
| B | 7 | 8 | 11 | 18 | 184.77 |
| V | 7 | 8 | 19 | 26 | 274.78 |

The above table sets out the number of cards in each block, reference colour wheel steps, hue angle, and lowest and highest reference wheel step for the third example, in the same manner as described previously for Example 1. There follows tables setting out the hue, lightness, and chrominance values for the first and last card (from the left) in each block, for each row, in the same manner as previously presented for Example 1.

| Table Example 3 Sector R 6 cards in each mood zone | | | | | | |
|---|---|---|---|---|---|---|
| | | | | | | |
| Start of Sector R | | | | End of sector R | | |
| H | Y | C | | H | Y | C |
| 349 | 17 | 14 | | 29 | 17 | 18.4 |
| 349 | 30 | 10.3 | | 29 | 30 | 13.3 |
| 349 | 49 | 6.7 | | 29 | 49 | 8.2 |
| 349 | 64 | 4.3 | | 29 | 64 | 4.8 |
| 349 | 73 | 3.3 | | 29 | 73 | 3.8 |
| 349 | 83 | 2 | | 29 | 83 | 2 |
| | | | | | | |
| | | | | | | |
| 349 | 19 | 44.4 | | 29 | 30 | 51.1 |

(continued)

| Start of Sector R | | | | End of sector R | | |
|---|---|---|---|---|---|---|
| H | Y | C | | H | Y | C |
| 349 | 36 | 35.4 | | 29 | 45 | 36.9 |
| 349 | 48 | 27.6 | | 29 | 57 | 25 |
| 349 | 60 | 19.7 | | 29 | 68 | 12.7 |
| 349 | 72 | 12.1 | | 29 | 78 | 10.6 |
| 349 | 78 | 8.8 | | 29 | 83 | 7.6 |
| | | | | | | 0 |
| 349 | 7 | 22.9 | | 29 | 7 | 27.1 |
| 349 | 10 | 32.1 | | 29 | 15 | 55.5 |
| 349 | 11 | 43 | | 29 | 15 | 50 |
| 349 | 15 | 37.5 | | 29 | 21 | 43.6 |
| 349 | 26 | 33.5 | | 29 | 30 | 40 |
| 349 | 34 | 27.7 | | 29 | 38 | 31.8 |
| | | | | | | 0 |
| 349 | 12 | 28.1 | | 29 | 14 | 34.8 |
| 349 | 23 | 27 | | 29 | 27 | 32.3 |
| 349 | 42 | 19.8 | | 29 | 41 | 22.3 |
| 349 | 54 | 14.5 | | 29 | 52 | 15.6 |
| 349 | 67 | 9.3 | | 29 | 67 | 10 |
| 349 | 74 | 5.8 | | 29 | 74 | 6.6 |

| Table Example 3 Sector O Contains 6 cards in each mood zone | | | | | | |
|---|---|---|---|---|---|---|
| | | | | | | |
| Start of Sector O | | | | End of sector O | | |
| H | Y | C | | H | Y | C |
| 35 | 16 | 16.2 | | 66 | 21 | 32.1 |
| 35 | 29 | 11.8 | | 66 | 37 | 22.1 |
| 35 | 48 | 7.4 | | 66 | 48 | 17.1 |
| 35 | 64 | 4.4 | | 66 | 67 | 9.6 |
| 35 | 73 | 3.4 | | 66 | 75 | 7.1 |
| 35 | 83 | 1.7 | | 66 | 83 | 3.4 |
| | | | | | | |
| | | | | | | |
| 35 | 30 | 51.1 | | 66 | 39 | 59.3 |
| 35 | 45 | 36.9 | | 66 | 54 | 44 |
| 35 | 57 | 25 | | 66 | 65 | 33.3 |

(continued)

| Start of Sector O | | | | End of sector O | | |
|---|---|---|---|---|---|---|
| H | Y | C | | H | Y | C |
| 35 | 68 | 12.7 | | 66 | 72 | 25.4 |
| 35 | 78 | 10.6 | | 66 | 78 | 14.6 |
| 35 | 83 | 7.6 | | 66 | 86 | 10.6 |
| | | | | | | |
| 35 | 7 | 15.7 | | 66 | 8 | 18.6 |
| 35 | 10 | 30.8 | | 66 | 16 | 40.6 |
| 35 | 14 | 54.8 | | 66 | 28 | 65 |
| 35 | 19 | 62.1 | | 66 | 42 | 72.7 |
| 35 | 25 | 46.3 | | 66 | 51 | 68.2 |
| 35 | 38 | 33.7 | | 66 | 60 | 57.7 |
| | | | | | | |
| 35 | 16 | 40.7 | | 66 | 26 | 52 |
| 35 | 25 | 28.4 | | 66 | 41 | 47.5 |
| 35 | 41 | 26.3 | | 66 | 49 | 38.7 |
| 35 | 53 | 18.8 | | 66 | 57 | 29.9 |
| 35 | 67 | 11.3 | | 66 | 67 | 21.2 |
| 35 | 83 | 4 | | 66 | 77 | 12.4 |

| Table Example 3 Sector Go 6 cards in each mood zone | | | | | | |
|---|---|---|---|---|---|---|
| | | | | | | |
| Start of Sector Go | | | | End of sector Go | | |
| H | Y | C | | H | Y | C |
| 70 | 26 | 32.1 | | 84 | 27 | 22.6 |
| 70 | 44 | 21.5 | | 84 | 39 | 22.5 |
| 70 | 55 | 16.3 | | 84 | 53 | 21.8 |
| 70 | 61 | 13.6 | | 84 | 64 | 16.5 |
| 70 | 68 | 11 | | 84 | 76 | 11.2 |
| 70 | 75 | 8.4 | | 84 | 83 | 6.4 |
| | | | | | | |
| | | | | | | |
| 70 | 36 | 69.4 | | 84 | 56 | 62.7 |
| 70 | 55 | 51.8 | | 84 | 61 | 47.5 |
| 70 | 60 | 47.5 | | 84 | 73 | 39.8 |
| 70 | 71 | 34.7 | | 84 | 81 | 25.6 |
| 70 | 78 | 25.5 | | 84 | 83 | 21.4 |

(continued)

| Start of Sector Go | | | | End of sector Go | | |
|---|---|---|---|---|---|---|
| H | Y | C | | H | Y | C |
| 70 | 85 | 15.6 | | 84 | 86 | 16.6 |
| | | | | | | |
| 70 | 9 | 18.6 | | 84 | 12 | 30 |
| 70 | 19 | 46.4 | | 84 | 21 | 50 |
| 70 | 34 | 70 | | 84 | 40 | 60.8 |
| 70 | 49 | 79.7 | | 84 | 62 | 81.6 |
| 70 | 57 | 68.9 | | 84 | 63 | 74.6 |
| 70 | 68 | 47 | | 84 | 73 | 51.9 |
| | | | | | | |
| 70 | 27 | 60 | | 84 | 28 | 61.3 |
| 70 | 42 | 46 | | 84 | 59 | 53.3 |
| 70 | 53 | 33.7 | | 84 | 61 | 43.1 |
| 70 | 65 | 28.5 | | 84 | 63 | 34.6 |
| 70 | 74 | 19.2 | | 84 | 77 | 24.2 |
| 70 | 78 | 14.6 | | 84 | 83 | 12.9 |

| Table Example 3 Sector Y 5 cards in each mood zone | | | | | | |
|---|---|---|---|---|---|---|
| | | | | | | |
| Start of Sector Y | | | | End of sector Y | | |
| H | Y | C | | H | Y | C |
| 86 | 23 | 24.6 | | 95 | 18 | 15.2 |
| 86 | 36 | 18.5 | | 95 | 26 | 13.7 |
| 86 | 53 | 15.1 | | 95 | 43 | 11.3 |
| 86 | 67 | 12 | | 95 | 57 | 9.8 |
| 86 | 75 | 11 | | 95 | 65 | 9 |
| 86 | 83 | 6.2 | | 95 | 83 | 7.5 |
| | | | | | | |
| | | | | | | |
| 86 | 64 | 78.7 | | 95 | 62 | 75.5 |
| 86 | 71 | 56.7 | | 95 | 67 | 62.6 |
| 86 | 74 | 38.3 | | 95 | 73 | 49.7 |
| 86 | 77 | 42.4 | | 95 | 79 | 36.7 |
| 86 | 83 | 25 | | 95 | 83 | 25 |
| 86 | 89 | 13.5 | | 95 | 83 | 18.7 |
| | | | | | | |

(continued)

| Start of Sector Y | | | | End of sector Y | | |
|---|---|---|---|---|---|---|
| H | Y | C | | H | Y | C |
| 86 | 12 | 26.3 | | 95 | 7 | 9.3 |
| 86 | 23 | 52.5 | | 95 | 29 | 46.4 |
| 86 | 49 | 75.7 | | 95 | 39 | 61.3 |
| 86 | 61 | 86.7 | | 95 | 53 | 63.8 |
| 86 | 66 | 62.8 | | 95 | 52 | 53.2 |
| 86 | 71 | 42.6 | | 95 | 59 | 48.5 |
| | | | | | | |
| 86 | 28 | 61.3 | | 95 | 21 | 33.5 |
| 86 | 59 | 53.3 | | 95 | 37 | 29.6 |
| 86 | 61 | 43.1 | | 95 | 55 | 29.9 |
| 86 | 63 | 34.6 | | 95 | 66 | 26.5 |
| 86 | 77 | 24.2 | | 95 | 78 | 24.8 |
| 86 | 83 | 12.9 | | 95 | 83 | 15 |

| Table Example 3 Sector G 8 cards in each mood zone | | | | | | |
|---|---|---|---|---|---|---|
| | | | | | | |
| Start of Sector G | | | | End of sector G | | |
| H | Y | C | | H | Y | C |
| 103 | 22 | 20 | | 178 | 16 | 13.7 |
| 103 | 35 | 16.9 | | 178 | 24 | 11.8 |
| 103 | 52 | 13.8 | | 178 | 43 | 11.9 |
| 103 | 67 | 11.7 | | 178 | 57 | 9.4 |
| 103 | 75 | 12 | | 178 | 73 | 4.8 |
| 103 | 83 | 10.7 | | 178 | 83 | 2.5 |
| | | | | | | |
| | | | | | | |
| 101 | 48 | 65 | | 178 | 31 | 44.6 |
| 101 | 55 | 56 | | 178 | 50 | 36 |
| 101 | 69 | 41.9 | | 178 | 64 | 25.8 |
| 101 | 78 | 33.4 | | 178 | 71 | 18 |
| 101 | 77 | 29.5 | | 178 | 77 | 15.6 |
| 101 | 85 | 17.4 | | 178 | 82 | 11.5 |
| | | | | | | |
| 101 | 7 | 9.3 | | 178 | 8 | 22.9 |
| 101 | 29 | 46.4 | | 178 | 11 | 25.1 |

(continued)

| Start of Sector G | | | | End of sector G | | |
|---|---|---|---|---|---|---|
| H | Y | C | | H | Y | C |
| 101 | 39 | 61.3 | | 178 | 18 | 35.3 |
| 101 | 53 | 63.8 | | 178 | 30 | 46.7 |
| 101 | 52 | 53.2 | | 178 | 41 | 37.9 |
| 101 | 59 | 48.5 | | 178 | 50 | 32 |
| | | | | | | |
| 101 | 21 | 33.5 | | 178 | 19 | 37 |
| 101 | 37 | 29.6 | | 178 | 33 | 27.5 |
| 101 | 55 | 29.9 | | 178 | 49 | 21.1 |
| 101 | 66 | 26.5 | | 178 | 61 | 16.8 |
| 101 | 78 | 24.8 | | 178 | 75 | 11.1 |
| 101 | 83 | 15 | | 178 | 83 | 8.8 |

| Table Example 3 Sector B 7 cards in each mood zone | | | | | | |
|---|---|---|---|---|---|---|
| Contains colour wheel steps 11 to 18 | | | | | | |
| Start of Sector B | | | | End of sector B | | |
| H | Y | C | | H | Y | C |
| 191 | 19 | 15.1 | | 269 | 17 | 12.6 |
| 191 | 28 | 13.3 | | 269 | 26 | 10.5 |
| 191 | 40 | 11.5 | | 269 | 39 | 10.4 |
| 191 | 64 | 8.8 | | 269 | 54 | 7.9 |
| 191 | 73 | 6.2 | | 269 | 63 | 6.6 |
| 191 | 83 | 3.4 | | 269 | 72 | 3.2 |
| | | | | | | |
| | | | | | | |
| 191 | 32 | 34.6 | | 269 | 22 | 34.7 |
| 191 | 51 | 29.1 | | 269 | 32 | 30.8 |
| 191 | 60 | 23.9 | | 269 | 46 | 23.1 |
| 191 | 63 | 21.6 | | 269 | 64 | 13.5 |
| 191 | 79 | 10.9 | | 269 | 69 | 9.8 |
| 191 | 83 | 6.9 | | 269 | 71 | 9.1 |
| | | | | | | 0 |
| 191 | 9 | 24.7 | | 269 | 8 | 17.1 |
| 191 | 14 | 29.6 | | 269 | 11 | 32.1 |
| 191 | 22 | 27.5 | | 269 | 15 | 41 |
| 191 | 24 | 35.7 | | 269 | 18 | 27.6 |
| 191 | 39 | 24.4 | | 269 | 27 | 23.2 |

(continued)

| Table Example 3 Sector B 7 cards in each mood zone | | | | | | |
|---|---|---|---|---|---|---|
| Contains colour wheel steps 11 to 18 | | | | | | |
| Start of Sector B | | | | End of sector B | | |
| H | Y | C | | H | Y | C |
| 191 | 55 | 22.3 | | 269 | 39 | 18.8 |
| | | | | | | 0 |
| 191 | 11 | 22.1 | | 269 | 11 | 21.6 |
| 191 | 22 | 19.5 | | 269 | 18 | 21.6 |
| 191 | 39 | 16.9 | | 269 | 33 | 16.4 |
| 191 | 54 | 15.2 | | 269 | 46 | 12.9 |
| 191 | 63 | 12 | | 269 | 63 | 9.4 |
| 191 | 72 | 8 | | 269 | 72 | 4.5 |

| Table Example 3 Sector V 7 cards in each mood zone | | | | | | |
|---|---|---|---|---|---|---|
| Contains colour wheel steps 19 to 26 | | | | | | |
| Start of Sector V | | | | End of sector V | | |
| H | Y | C | | H | Y | C |
| 280 | 21 | 14.7 | | 335 | 13 | 8.1 |
| 280 | 35 | 10.8 | | 335 | 24 | 6.1 |
| 280 | 49 | 8.2 | | 335 | 41 | 4.2 |
| 280 | 65 | 5.6 | | 335 | 56 | 2.9 |
| 280 | 73 | 3 | | 335 | 65 | 2.3 |
| 280 | 83 | 1.5 | | 335 | 73 | 1.6 |
| | | | | | | |
| | | | | | | |
| 280 | 23 | 31 | | 335 | 27 | 37.6 |
| 280 | 33 | 27 | | 335 | 47 | 27.4 |
| 280 | 51 | 18.6 | | 335 | 60 | 21.4 |
| 280 | 67 | 9.6 | | 335 | 69 | 9.6 |
| 280 | 74 | 4 | | 335 | 75 | 5.1 |
| 280 | 83 | 2 | | 335 | 83 | 3 |
| | | | | | | 0 |
| 280 | 7 | 26.3 | | 335 | 6 | 17.9 |
| 280 | 14 | 43 | | 335 | 9 | 31.3 |
| 280 | 16 | 28.7 | | 335 | 9 | 33.3 |
| 280 | 24 | 24.5 | | 335 | 15 | 30 |
| 280 | 28 | 22.4 | | 335 | 27 | 28.5 |
| 280 | 33 | 20.2 | | 335 | 45 | 19.6 |

(continued)

| Table Example 3 Sector V 7 cards in each mood zone | | | | | | |
|---|---|---|---|---|---|---|
| Contains colour wheel steps 19 to 26 | | | | | | |
| Start of Sector V | | | | End of sector V | | |
| H | Y | C | | H | Y | C |
| | | | | | | 0 |
| 280 | 9 | 24.1 | | 335 | 12 | 22.5 |
| 280 | 14 | 20.2 | | 335 | 23 | 22.8 |
| 280 | 27 | 20.1 | | 335 | 37 | 17.5 |
| 280 | 44 | 14.4 | | 335 | 46 | 12.1 |
| 280 | 65 | 6.6 | | 335 | 68 | 8.5 |
| 280 | 73 | 3.5 | | 335 | 74 | 4.4 |

Example 3

Table of Hue verses Card Number from Left

| Card | R | O | Go | Y | G | B | V |
|---|---|---|---|---|---|---|---|
| 1 | 349 | | | | | | |
| 2 | 357 | | | | | | |
| 3 | 8 | | | | | | |
| 4 | 16 | | | | | | |
| 5 | 22 | | | | | | |
| 6 | 29 | | | | | | |
| 7 | | 35 | | | | | |
| 8 | | 41 | | | | | |
| 9 | | 47 | | | | | |
| 10 | | 53 | | | | | |
| 11 | | 60 | | | | | |
| 12 | | 66 | | | | | |
| 13 | | | 70 | | | | |
| 14 | | | 73 | | | | |
| 15 | | | 76 | | | | |
| 16 | | | 79 | | | | |
| 17 | | | 82 | | | | |
| 18 | | | 84 | | | | |
| 19 | | | | 86 | | | |
| 20 | | | | 89 | | | |
| 21 | | | | 91 | | | |
| 22 | | | | 93 | | | |

(continued)

| Card | R | O | Go | Y | G | B | V |
|---|---|---|---|---|---|---|---|
| 23 | | | | 95 | | | |
| 24 | | | | | 101 | | |
| 25 | | | | | 108 | | |
| 26 | | | | | 117 | | |
| 27 | | | | | 126 | | |
| 28 | | | | | 135 | | |
| 29 | | | | | 144 | | |
| 30 | | | | | 157 | | |
| 31 | | | | | 175 | | |
| 32 | | | | | | 191 | |
| 33 | | | | | | 204 | |
| 34 | | | | | | 217 | |
| 35 | | | | | | 230 | |
| 36 | | | | | | 243 | |
| 37 | | | | | | 256 | |
| 38 | | | | | | 269 | |
| 39 | | | | | | | 280 |
| 40 | | | | | | | 290 |
| 41 | | | | | | | 300 |
| 42 | | | | | | | 307 |
| 43 | | | | | | | 315 |
| 44 | | | | | | | 325 |
| 45 | | | | | | | 335 |

The above data is plotted in Figure 6 from which it will be seen that there is a relatively smooth hue progression across the array along each row (the discontinuity shown arises on the transition from 360 degrees to 0 degrees, but in terms of apparent hue there is no discontinuity).

The next table below shows the relationship between card number (again counted along a row from the left) and the step on the reference colour wheel to which a card relates.

| Table of Colour Wheel Step verses Card number from left | | | | | | | |
|---|---|---|---|---|---|---|---|
| Card | R | O | Go | Y | G | B | V |
| 1 | 27 | | | | | | |
| 2 | 28 | | | | | | |
| 3 | 30 | | | | | | |
| 4 | 31 | | | | | | |
| 5 | 32 | | | | | | |
| 6 | 33 | | | | | | |
| 7 | | 35 | | | | | |
| 8 | | 36 | | | | | |

(continued)

| Table of Colour Wheel Step verses Card number from left | | | | | | | |
|---|---|---|---|---|---|---|---|
| Card | R | O | Go | Y | G | B | V |
| 9 | | 37 | | | | | |
| 10 | | 39 | | | | | |
| 11 | | 40 | | | | | |
| 12 | | 42 | | | | | |
| 13 | | | 43 | | | | |
| 14 | | | 43 | | | | |
| 15 | | | 44 | | | | |
| 16 | | | 45 | | | | |
| 17 | | | 46 | | | | |
| 18 | | | 46 | | | | |
| 19 | | | | 47 | | | |
| 20 | | | | 48 | | | |
| 21 | | | | 1 | | | |
| 22 | | | | 2 | | | |
| 23 | | | | 2 | | | |
| 24 | | | | | 3 | | |
| 25 | | | | | 4 | | |
| 26 | | | | | 5 | | |
| 27 | | | | | 6 | | |
| 28 | | | | | 7 | | |
| 29 | | | | | 8 | | |
| 30 | | | | | 9 | | |
| 31 | | | | | 10 | | |
| 32 | | | | | | 11 | |
| 33 | | | | | | 12 | |
| 34 | | | | | | 13 | |
| 35 | | | | | | 14 | |
| 36 | | | | | | 15 | |
| 37 | | | | | | 16 | |
| 38 | | | | | | 18 | |
| 39 | | | | | | | 19 |
| 40 | | | | | | | 20 |
| 41 | | | | | | | 21 |
| 42 | | | | | | | 22 |
| 43 | | | | | | | 23 |
| 44 | | | | | | | 25 |
| 45 | | | | | | | 26 |

Now, considering conformity in the same manner as described above for the previous examples gives the following :-

| **Overall level of compliance of example 3** | | | | |
|---|---|---|---|---|
| First sector | Possible Combinations | with | Conforming combinations | |
| R | 48 | G | 40 | |
| O | 42 | B | 34 | |
| Go | 42 | V | 35 | |
| Y | 35 | V | 26 | |
| G | 48 | R | 40 | |
| B | 42 | O | 35 | |
| V | 42 | Go | 35 | |
| Totals | 299 | | 243 | 0.812709 |

Thus, even with this further arrangement different from the first and second examples already described, a conformity value of 81.2% is obtained.

Again, as with the previous examples, a choice must be made between yellow and gold as to which is recommended to contrast with violets. In this example gold is chosen, as it has the higher conformity.

Example 4

A further example will now be described.

| Sector | Cards | Colour Wheel steps | lowest step | highest step | Lowest hue |
|---|---|---|---|---|---|
| R | 8 | 8 | 27 | 34 | 346 |
| O | 8 | 8 | 35 | 42 | 33.87 |
| Go | 4 | 4 | 43 | 46 | 69.78 |
| Y | 4 | 4 | 47 | 2 | 84.55 |
| G | 8 | 8 | 3 | 10 | 97.89 |
| B | 8 | 8 | 11 | 18 | 184.77 |
| V | 8 | 8 | 19 | 26 | 274.78 |

The above table sets out the number of cards in each block, reference colour wheel steps, hue angle, and lowest and highest reference wheel step for the fourth example, in the same manner as described previously for Example 1. There follows tables setting out the hue, lightness, and chrominance values for the first and last card (from the left) in each block, for each row, in the same manner as previously presented for Example 1.

| Start of Sector R | | | | End of sector R | | |
|---|---|---|---|---|---|---|
| H | Y | C | | H | Y | C |
| 349 | 17 | 14 | | 29 | 17 | 18.4 |
| 349 | 30 | 10.3 | | 29 | 30 | 13.3 |
| 349 | 49 | 6.7 | | 29 | 49 | 8.2 |
| 349 | 64 | 4.3 | | 29 | 64 | 4.8 |
| 349 | 73 | 3.3 | | 29 | 73 | 3.8 |
| 349 | 83 | 2 | | 29 | 83 | 2 |

(continued)

| Start of Sector R | | | | End of sector R | | |
|---|---|---|---|---|---|---|
| H | Y | C | | H | Y | C |
| | | | | | | |
| | | | | | | |
| 349 | 19 | 44.4 | | 29 | 30 | 51.1 |
| 349 | 36 | 35.4 | | 29 | 45 | 36.9 |
| 349 | 48 | 27.6 | | 29 | 57 | 25 |
| 349 | 60 | 19.7 | | 29 | 68 | 12.7 |
| 349 | 72 | 12.1 | | 29 | 78 | 10.6 |
| 349 | 78 | 8.8 | | 29 | 83 | 7.6 |
| | | | | | | |
| 349 | 7 | 22.9 | | 29 | 7 | 27.1 |
| 349 | 10 | 32.1 | | 29 | 15 | 55.5 |
| 349 | 11 | 43 | | 29 | 15 | 50 |
| 349 | 15 | 37.5 | | 29 | 21 | 43.6 |
| 349 | 26 | 33.5 | | 29 | 30 | 40 |
| 349 | 34 | 27.7 | | 29 | 38 | 31.8 |
| | | | | | | |
| 349 | 12 | 28.1 | | 29 | 14 | 34.8 |
| 349 | 23 | 27 | | 29 | 27 | 32.3 |
| 349 | 42 | 19.8 | | 29 | 41 | 22.3 |
| 349 | 54 | 14.5 | | 29 | 52 | 15.6 |
| 349 | 67 | 9.3 | | 29 | 67 | 10 |
| 349 | 74 | 5.8 | | 29 | 74 | 6.6 |

| Start of Sector O | | | | End of sector O | | |
|---|---|---|---|---|---|---|
| H | Y | C | | H | Y | C |
| 35 | 16 | 16.2 | | 66 | 21 | 32.1 |
| 35 | 29 | 11.8 | | 66 | 37 | 22.1 |
| 35 | 48 | 7.4 | | 66 | 48 | 17.1 |
| 35 | 64 | 4.4 | | 66 | 67 | 9.6 |
| 35 | 73 | 3.4 | | 66 | 75 | 7.1 |
| 35 | 83 | 1.7 | | 66 | 83 | 3.4 |
| | | | | | | |
| | | | | | | |
| 35 | 30 | 51.1 | | 66 | 39 | 59.3 |
| 35 | 45 | 36.9 | | 66 | 54 | 44 |
| 35 | 57 | 25 | | 66 | 65 | 33.3 |

(continued)

| Start of Sector O | | | | End of sector O | | |
|---|---|---|---|---|---|---|
| H | Y | C | | H | Y | C |
| 35 | 68 | 12.7 | | 66 | 72 | 25.4 |
| 35 | 78 | 10.6 | | 66 | 78 | 14.6 |
| 35 | 83 | 7.6 | | 66 | 86 | 10.6 |
| | | | | | | |
| 35 | 7 | 15.7 | | 66 | 8 | 18.6 |
| 35 | 10 | 30.8 | | 66 | 16 | 40.6 |
| 35 | 14 | 54.8 | | 66 | 28 | 65 |
| 35 | 19 | 62.1 | | 66 | 42 | 72.7 |
| 35 | 25 | 46.3 | | 66 | 51 | 68.2 |
| 35 | 38 | 33.7 | | 66 | 60 | 57.7 |
| | | | | | | |
| 35 | 16 | 40.7 | | 66 | 26 | 52 |
| 35 | 25 | 28.4 | | 66 | 41 | 47.5 |
| 35 | 41 | 26.3 | | 66 | 49 | 38.7 |
| 35 | 53 | 18.8 | | 66 | 57 | 29.9 |
| 35 | 67 | 11.3 | | 66 | 67 | 21.2 |
| 35 | 83 | 4 | | 66 | 77 | 12.4 |

| Start of Sector Go | | | | End of sector Go | | |
|---|---|---|---|---|---|---|
| H | Y | C | | H | Y | C |
| 70 | 26 | 32.1 | | 84 | 27 | 22.6 |
| 70 | 44 | 21.5 | | 84 | 39 | 22.5 |
| 70 | 55 | 16.3 | | 84 | 53 | 21.8 |
| 70 | 61 | 13.6 | | 84 | 64 | 16.5 |
| 70 | 68 | 11 | | 84 | 76 | 11.2 |
| 70 | 75 | 8.4 | | 84 | 83 | 6.4 |
| | | | | | | |
| | | | | | | |
| 70 | 36 | 69.4 | | 84 | 56 | 62.7 |
| 70 | 55 | 51.8 | | 84 | 61 | 47.5 |
| 70 | 60 | 47.5 | | 84 | 73 | 39.8 |
| 70 | 71 | 34.7 | | 84 | 81 | 25.6 |
| 70 | 78 | 25.5 | | 84 | 83 | 21.4 |
| 70 | 85 | 15.6 | | 84 | 86 | 16.6 |
| | | | | | | |
| 70 | 9 | 18.6 | | 84 | 12 | 30 |

(continued)

| Start of Sector Go | | | | End of sector Go | | |
|---|---|---|---|---|---|---|
| H | Y | C | | H | Y | C |
| 70 | 19 | 46.4 | | 84 | 21 | 50 |
| 70 | 34 | 70 | | 84 | 40 | 60.8 |
| 70 | 49 | 79.7 | | 84 | 62 | 81.6 |
| 70 | 57 | 68.9 | | 84 | 63 | 74.6 |
| 70 | 68 | 47 | | 84 | 73 | 51.9 |
| | | | | | | |
| 70 | 27 | 60 | | 84 | 28 | 61.3 |
| 70 | 42 | 46 | | 84 | 59 | 53.3 |
| 70 | 53 | 33.7 | | 84 | 61 | 43.1 |
| 70 | 65 | 28.5 | | 84 | 63 | 34.6 |
| 70 | 74 | 19.2 | | 84 | 77 | 24.2 |
| 70 | 78 | 14.6 | | 84 | 83 | 12.9 |

| Start of Sector Y | | | | End of sector Y | | |
|---|---|---|---|---|---|---|
| H | Y | C | | H | Y | C |
| 86 | 23 | 24.6 | | 95 | 18 | 15.2 |
| 86 | 36 | 18.5 | | 95 | 26 | 13.7 |
| 86 | 53 | 15.1 | | 95 | 43 | 11.3 |
| 86 | 67 | 12 | | 95 | 57 | 9.8 |
| 86 | 75 | 11 | | 95 | 65 | 9 |
| 86 | 83 | 6.2 | | 95 | 83 | 7.5 |
| | | | | | | |
| | | | | | | |
| 86 | 64 | 78.7 | | 95 | 62 | 75.5 |
| 86 | 71 | 56.7 | | 95 | 67 | 62.6 |
| 86 | 74 | 38.3 | | 95 | 73 | 49.7 |
| 86 | 77 | 42.4 | | 95 | 79 | 36.7 |
| 86 | 83 | 25 | | 95 | 83 | 25 |
| 86 | 89 | 13.5 | | 95 | 83 | 18.7 |
| | | | | | | |
| 86 | 12 | 26.3 | | 95 | 7 | 9.3 |
| 86 | 23 | 52.5 | | 95 | 29 | 46.4 |
| 86 | 49 | 75.7 | | 95 | 39 | 61.3 |
| 86 | 61 | 86.7 | | 95 | 53 | 63.8 |
| 86 | 66 | 62.8 | | 95 | 52 | 53.2 |
| 86 | 71 | 42.6 | | 95 | 59 | 48.5 |

(continued)

| Start of Sector Y | | | | End of sector Y | | |
|---|---|---|---|---|---|---|
| H | Y | C | | H | Y | C |
| | | | | | | |
| 86 | 28 | 61.3 | | 95 | 21 | 33.5 |
| 86 | 59 | 53.3 | | 95 | 37 | 29.6 |
| 86 | 61 | 43.1 | | 95 | 55 | 29.9 |
| 86 | 63 | 34.6 | | 95 | 66 | 26.5 |
| 86 | 77 | 24.2 | | 95 | 78 | 24.8 |
| 86 | 83 | 12.9 | | 95 | 83 | 15 |

| Start of Sector G | | | | End of sector G | | |
|---|---|---|---|---|---|---|
| H | Y | C | | H | Y | C |
| 103 | 22 | 20 | | 178 | 16 | 13.7 |
| 103 | 35 | 16.9 | | 178 | 24 | 11.8 |
| 103 | 52 | 13.8 | | 178 | 43 | 11.9 |
| 103 | 67 | 11.7 | | 178 | 57 | 9.4 |
| 103 | 75 | 12 | | 178 | 73 | 4.8 |
| 103 | 83 | 10.7 | | 178 | 83 | 2.5 |
| | | | | | | |
| | | | | | | |
| 101 | 48 | 65 | | 178 | 31 | 44.6 |
| 101 | 55 | 56 | | 178 | 50 | 36 |
| 101 | 69 | 41.9 | | 178 | 64 | 25.8 |
| 101 | 78 | 33.4 | | 178 | 71 | 18 |
| 101 | 77 | 29.5 | | 178 | 77 | 15.6 |
| 101 | 85 | 17.4 | | 178 | 82 | 11.5 |
| | | | | | | |
| 101 | 7 | 9.3 | | 178 | 8 | 22.9 |
| 101 | 29 | 46.4 | | 178 | 11 | 25.1 |
| 101 | 39 | 61.3 | | 178 | 18 | 35.3 |
| 101 | 53 | 63.8 | | 178 | 30 | 46.7 |
| 101 | 52 | 53.2 | | 178 | 41 | 37.9 |
| 101 | 59 | 48.5 | | 178 | 50 | 32 |
| | | | | | | |
| 101 | 21 | 33.5 | | 178 | 19 | 37 |
| 101 | 37 | 29.6 | | 178 | 33 | 27.5 |
| 101 | 55 | 29.9 | | 178 | 49 | 21.1 |
| 101 | 66 | 26.5 | | 178 | 61 | 16.8 |

(continued)

| Start of Sector G | | | | End of sector G | | |
|---|---|---|---|---|---|---|
| H | Y | C | | H | Y | C |
| 101 | 78 | 24.8 | | 178 | 75 | 11.1 |
| 101 | 83 | 15 | | 178 | 83 | 8.8 |

| Start of Sector B | | | | End of sector B | | |
|---|---|---|---|---|---|---|
| H | Y | C | | H | Y | C |
| 191 | 19 | 15.1 | | 269 | 17 | 12.6 |
| 191 | 28 | 13.3 | | 269 | 26 | 10.5 |
| 191 | 40 | 11.5 | | 269 | 39 | 10.4 |
| 191 | 64 | 8.8 | | 269 | 54 | 7.9 |
| 191 | 73 | 6.2 | | 269 | 63 | 6.6 |
| 191 | 83 | 3.4 | | 269 | 72 | 3.2 |
| | | | | | | |
| | | | | | | |
| 191 | 32 | 34.6 | | 269 | 22 | 34.7 |
| 191 | 51 | 29.1 | | 269 | 32 | 30.8 |
| 191 | 60 | 23.9 | | 269 | 46 | 23.1 |
| 191 | 63 | 21.6 | | 269 | 64 | 13.5 |
| 191 | 79 | 10.9 | | 269 | 69 | 9.8 |
| 191 | 83 | 6.9 | | 269 | 71 | 9.1 |
| | | | | | | |
| 191 | 9 | 24.7 | | 269 | 8 | 17.1 |
| 191 | 14 | 29.6 | | 269 | 11 | 32.1 |
| 191 | 22 | 27.5 | | 269 | 15 | 41 |
| 191 | 24 | 35.7 | | 269 | 18 | 27.6 |
| 191 | 39 | 24.4 | | 269 | 27 | 23.2 |
| 191 | 55 | 22.3 | | 269 | 39 | 18.8 |
| | | | | | | |
| 191 | 11 | 22.1 | | 269 | 11 | 21.6 |
| 191 | 22 | 19.5 | | 269 | 18 | 21.6 |
| 191 | 39 | 16.9 | | 269 | 33 | 16.4 |
| 191 | 54 | 15.2 | | 269 | 46 | 12.9 |
| 191 | 63 | 12 | | 269 | 63 | 9.4 |
| 191 | 72 | 8 | | 269 | 72 | 4.5 |

| Start of Sector V | | | | End of sector V | | |
|---|---|---|---|---|---|---|
| H | Y | C | | H | Y | C |
| 280 | 21 | 14.7 | | 335 | 13 | 8.1 |
| 280 | 35 | 10.8 | | 335 | 24 | 6.1 |
| 280 | 49 | 8.2 | | 335 | 41 | 4.2 |
| 280 | 65 | 5.6 | | 335 | 56 | 2.9 |
| 280 | 73 | 3 | | 335 | 65 | 2.3 |
| 280 | 83 | 1.5 | | 335 | 73 | 1.6 |
| | | | | | | |
| | | | | | | |
| 280 | 23 | 31 | | 335 | 27 | 37.6 |
| 280 | 33 | 27 | | 335 | 47 | 27.4 |
| 280 | 51 | 18.6 | | 335 | 60 | 21.4 |
| 280 | 67 | 9.6 | | 335 | 69 | 9.6 |
| 280 | 74 | 4 | | 335 | 75 | 5.1 |
| 280 | 83 | 2 | | 335 | 83 | 3 |
| | | | | | | |
| 280 | 7 | 26.3 | | 335 | 6 | 17.9 |
| 280 | 14 | 43 | | 335 | 9 | 31.3 |
| 280 | 16 | 28.7 | | 335 | 9 | 33.3 |
| 280 | 24 | 24.5 | | 335 | 15 | 30 |
| 280 | 28 | 22.4 | | 335 | 27 | 28.5 |
| 280 | 33 | 20.2 | | 335 | 45 | 19.6 |
| | | | | | | |
| 280 | 9 | 24.1 | | 335 | 12 | 22.5 |
| 280 | 14 | 20.2 | | 335 | 23 | 22.8 |
| 280 | 27 | 20.1 | | 335 | 37 | 17.5 |
| 280 | 44 | 14.4 | | 335 | 46 | 12.1 |
| 280 | 65 | 6.6 | | 335 | 68 | 8.5 |
| 280 | 73 | 3.5 | | 335 | 74 | 4.4 |

Example 4

Table of Hue verses Card Number from Left

| Card | R | O | Go | Y | G | B | V |
|---|---|---|---|---|---|---|---|
| 1 | 350.14 | | | | | | |
| 2 | 358.00 | | | | | | |
| 3 | 4.77 | | | | | | |
| 4 | 9.32 | | | | | | |

(continued)

| Card | R | O | Go | Y | G | B | V |
|---|---|---|---|---|---|---|---|
| 5 | 13.86 | | | | | | |
| 6 | 20.46 | | | | | | |
| 7 | 27.05 | | | | | | |
| 8 | 31.59 | | | | | | |
| 9 | | 36.14 | | | | | |
| 10 | | 40.68 | | | | | |
| 11 | | 45.23 | | | | | |
| 12 | | 49.77 | | | | | |
| 13 | | 54.32 | | | | | |
| 14 | | 58.86 | | | | | |
| 15 | | 63.41 | | | | | |
| 16 | | 67.50 | | | | | |
| 17 | | | 72.05 | | | | |
| 18 | | | 76.59 | | | | |
| 19 | | | 81.14 | | | | |
| 20 | | | 83.41 | | | | |
| 21 | | | | 85.68 | | | |
| 22 | | | | 87.95 | | | |
| 23 | | | | 90.23 | | | |
| 24 | | | | 94.77 | | | |
| 25 | | | | | 101.00 | | |
| 26 | | | | | 108.41 | | |
| 27 | | | | | 117.05 | | |
| 28 | | | | | 126.14 | | |
| 29 | | | | | 135.23 | | |
| 30 | | | | | 144.32 | | |
| 31 | | | | | 157.50 | | |
| 32 | | | | | 175.68 | | |
| 33 | | | | | | 193.86 | |
| 34 | | | | | | 211.59 | |
| 35 | | | | | | 225.23 | |
| 36 | | | | | | 234.32 | |
| 37 | | | | | | 243.41 | |
| 38 | | | | | | 252.05 | |
| 39 | | | | | | 261.14 | |
| 40 | | | | | | 270.23 | |
| 41 | | | | | | | 279.32 |
| 42 | | | | | | | 288.41 |

(continued)

| Card | R | O | Go | Y | G | B | V |
|---|---|---|---|---|---|---|---|
| 43 | | | | | | | 297.05 |
| 44 | | | | | | | 306.14 |
| 45 | | | | | | | 315.23 |
| 46 | | | | | | | 324.32 |
| 47 | | | | | | | 333.41 |
| 48 | | | | | | | 342.05 |

The above data is plotted in Figure 7 from which it will be seen that there is a relatively smooth hue progression across the array along each row (the discontinuity shown arises on the transition from 360 degrees to 0 degrees, but in terms of apparent hue there is no discontinuity).

The next table below shows the relationship between card number (again counted along a row from the left) and the step on the reference colour wheel to which a card relates.

Table of Colour Wheel Step verses Card number from left

| Card | R | O | Go | Y | G | B | V |
|---|---|---|---|---|---|---|---|
| 1 | 27 | | | | | | |
| 2 | 28 | | | | | | |
| 3 | 29 | | | | | | |
| 4 | 30 | | | | | | |
| 5 | 31 | | | | | | |
| 6 | 32 | | | | | | |
| 7 | 33 | | | | | | |
| 8 | 34 | | | | | | |
| 9 | | 35 | | | | | |
| 10 | | 36 | | | | | |
| 11 | | 37 | | | | | |
| 12 | | 38 | | | | | |
| 13 | | 39 | | | | | |
| 14 | | 40 | | | | | |
| 15 | | 41 | | | | | |
| 16 | | 42 | | | | | |
| 17 | | | 43 | | | | |
| 18 | | | 44 | | | | |
| 19 | | | 45 | | | | |
| 20 | | | 46 | | | | |
| 21 | | | | 47 | | | |
| 22 | | | | 48 | | | |
| 23 | | | | 1 | | | |
| 24 | | | | 2 | | | |
| 25 | | | | | 3 | | |

(continued)

| Card | R | O | Go | Y | G | B | V |
|---|---|---|---|---|---|---|---|
| 26 | | | | | 4 | | |
| 27 | | | | | 5 | | |
| 28 | | | | | 6 | | |
| 29 | | | | | 7 | | |
| 30 | | | | | 8 | | |
| 31 | | | | | 9 | | |
| 32 | | | | | 10 | | |
| 33 | | | | | | 11 | |
| 34 | | | | | | 12 | |
| 35 | | | | | | 13 | |
| 36 | | | | | | 14 | |
| 37 | | | | | | 15 | |
| 38 | | | | | | 16 | |
| 39 | | | | | | 17 | |
| 40 | | | | | | 18 | |
| 41 | | | | | | | 19 |
| 42 | | | | | | | 20 |
| 43 | | | | | | | 21 |
| 44 | | | | | | | 22 |
| 45 | | | | | | | 23 |
| 46 | | | | | | | 24 |
| 47 | | | | | | | 25 |
| 48 | | | | | | | 26 |

Considering conformity:-

| **Overall level of conformity of example 4** | | | | |
|---|---|---|---|---|
| First sector | Possible Combinations | with | Conforming combinations | |
| R | 64 | G | 52 | |
| O | 64 | B | 52 | |
| Go | 32 | V | 26 | |
| Y | 32 | V | 26 | |
| G | 64 | R | 52 | |
| B | 64 | O | 52 | |
| V | 32 | Go | 26 | |
| Totals | 352 | | 286 | 0.8125 |

Thus, again a conformity value of 81.25% is achieved, with this yet further arrangement.

Example 5

Another example will be described next. In this example, only three rows are present, and a different block pattern in terms of the number of cards in each block is used. The block pattern, hue angles, hue steps and the like are shown in the table below, presented in the same manner as previously described for example 1.

| Sector | Cards | Colour Wheel steps | lowest step | highest step | Lowest hue |
|---|---|---|---|---|---|
| R | 6 | 8 | 27 | 33 | 346.1 |
| O | 6 | 5 | 34 | 38 | 29.32 |
| Go | 6 | 5 | 39 | 43 | 52.05 |
| Y | 5 | 6 | 44 | 2 | 74.32 |
| G | 8 | 8 | 3 | 10 | 97.98 |
| B | 7 | 10 | 11 | 20 | 184.77 |
| V | 7 | 6 | 21 | 26 | 292.73 |

The block hue, luminance and chromaticity ranges for each row are shown in the tables below.

| Start of Sector R | | | | End of sector R | | |
|---|---|---|---|---|---|---|
| H | Y | C | | H | Y | C |
| 345 | 13 | 8 | | 25 | 17 | 18 |
| 345 | 24 | 6 | | 25 | 30 | 13 |
| 345 | 41 | 4 | | 25 | 49 | 8 |
| 345 | 56 | 3 | | 25 | 64 | 5 |
| 345 | 65 | 2 | | 25 | 73 | 4 |
| 345 | 73 | 2 | | 25 | 83 | 2 |
| | | | | | | |
| 345 | 7 | 23 | | 25 | 7 | 27 |
| 345 | 10 | 32 | | 25 | 15 | 56 |
| 345 | 11 | 43 | | 25 | 15 | 50 |
| 345 | 15 | 38 | | 25 | 21 | 44 |
| 345 | 26 | 34 | | 25 | 30 | 40 |
| 345 | 34 | 28 | | 25 | 38 | 32 |
| | | | | | | |
| 345 | 13 | 25 | | 25 | 13 | 44 |
| 345 | 26 | 25 | | 25 | 28 | 36 |
| 345 | 39 | 18 | | 25 | 42 | 25 |
| 345 | 56 | 12 | | 25 | 53 | 18 |
| 345 | 68 | 7 | | 25 | 67 | 11 |
| 345 | 83 | 3 | | 25 | 83 | 4 |

| Start of Sector O | | | | End of sector O | | |
|---|---|---|---|---|---|---|
| H | Y | C | | H | Y | C |
| 31 | 15 | 10 | | 52 | 18 | 18 |
| 31 | 28 | 7 | | 52 | 31 | 14 |
| 31 | 40 | 5 | | 52 | 50 | 9 |
| 31 | 55 | 4 | | 52 | 65 | 5 |
| 31 | 64 | 4 | | 52 | 74 | 5 |
| 31 | 73 | 3 | | 52 | 83 | 3 |
| | | | | | | |
| 31 | 7 | 23 | | 52 | 8 | 19 |
| 31 | 10 | 43 | | 52 | 13 | 37 |
| 31 | 13 | 56 | | 52 | 26 | 60 |
| 31 | 15 | 55 | | 52 | 29 | 56 |
| 31 | 29 | 42 | | 52 | 36 | 47 |
| 31 | 43 | 30 | | 52 | 44 | 38 |
| | | | | | | |
| 31 | 14 | 25 | | 52 | 19 | 43 |
| 31 | 27 | 32 | | 52 | 27 | 40 |
| 31 | 41 | 22 | | 52 | 45 | 26 |
| 31 | 52 | 26 | | 52 | 56 | 19 |
| 31 | 67 | 10 | | 52 | 68 | 12 |
| 31 | 74 | 7 | | 52 | 83 | 5 |

| Start of Sector Go | | | | End of sector Go | | |
|---|---|---|---|---|---|---|
| H | Y | C | | H | Y | C |
| 55 | 18 | 19 | | 73 | 23 | 20 |
| 55 | 31 | 13 | | 73 | 41 | 15 |
| 55 | 50 | 8 | | 73 | 53 | 11 |
| 55 | 65 | 5 | | 73 | 59 | 8 |
| 55 | 74 | 4 | | 73 | 67 | 6 |
| 55 | 83 | 2 | | 73 | 74 | 3 |
| | | | | | | |
| 55 | 9 | 16 | | 73 | 9 | 20 |
| 55 | 13 | 32 | | 73 | 18 | 35 |
| 55 | 24 | 57 | | 73 | 40 | 61 |
| 55 | 31 | 51 | | 73 | 51 | 76 |
| 55 | 34 | 47 | | 73 | 61 | 63 |
| 55 | 42 | 39 | | 73 | 70 | 46 |
| | | | | | | |

(continued)

| Start of Sector Go | | | | End of sector Go | | |
|---|---|---|---|---|---|---|
| H | Y | C | | H | Y | C |
| 55 | 20 | 49 | | 73 | 27 | 60 |
| 55 | 31 | 42 | | 73 | 42 | 46 |
| 55 | 44 | 31 | | 73 | 53 | 34 |
| 55 | 55 | 27 | | 73 | 65 | 28 |
| 55 | 65 | 19 | | 73 | 74 | 19 |
| 55 | 77 | 12 | | 73 | 78 | 15 |

| Start of Sector Y | | | | End of sector Y | | |
|---|---|---|---|---|---|---|
| H | Y | C | | H | Y | C |
| 77 | 24 | 17 | | 93 | 18 | 15 |
| 77 | 41 | 17 | | 93 | 26 | 14 |
| 77 | 47 | 15 | | 93 | 43 | 11 |
| 77 | 60 | 10 | | 93 | 57 | 10 |
| 77 | 67 | 8 | | 93 | 65 | 9 |
| 77 | 83 | 4 | | 93 | 83 | 8 |
| | | | | | | |
| 77 | 12 | 30 | | 93 | 7 | 9 |
| 77 | 21 | 50 | | 93 | 29 | 46 |
| 77 | 40 | 61 | | 93 | 39 | 61 |
| 77 | 62 | 82 | | 93 | 53 | 64 |
| 77 | 63 | 75 | | 93 | 52 | 53 |
| 77 | 73 | 52 | | 93 | 59 | 49 |
| | | | | | | |
| 77 | 24 | 47 | | 93 | 21 | 34 |
| 77 | 50 | 59 | | 93 | 37 | 32 |
| 77 | 57 | 36 | | 93 | 55 | 30 |
| 77 | 62 | 35 | | 93 | 66 | 27 |
| 77 | 78 | 23 | | 93 | 78 | 25 |
| 77 | 83 | 10 | | 93 | 83 | 15 |

| Start of Sector G | | | | End of sector G | | |
|---|---|---|---|---|---|---|
| H | Y | C | | H | Y | C |
| 101 | 18 | 15 | | 175 | 16 | 14 |
| 101 | 26 | 14 | | 175 | 24 | 12 |
| 101 | 43 | 11 | | 175 | 43 | 12 |

(continued)

| Start of Sector G | | | | End of sector G | | |
|---|---|---|---|---|---|---|
| H | Y | C | | H | Y | C |
| 101 | 57 | 9 | | 175 | 57 | 9 |
| 101 | 65 | 9 | | 175 | 73 | 5 |
| 101 | 83 | 7 | | 175 | 83 | 3 |
| | | | | | | |
| 101 | 9 | 21 | | 175 | 8 | 25 |
| 101 | 21 | 38 | | 175 | 16 | 39 |
| 101 | 38 | 63 | | 175 | 18 | 45 |
| 101 | 47 | 74 | | 175 | 33 | 45 |
| 101 | 48 | 50 | | 175 | 40 | 29 |
| 101 | 58 | 42 | | 175 | 57 | 22 |
| 0 | | | | | | |
| 101 | 24 | 35 | | 175 | 19 | 37 |
| 101 | 40 | 30 | | 175 | 33 | 28 |
| 101 | 54 | 24 | | 175 | 49 | 21 |
| 101 | 71 | 18 | | 175 | 61 | 17 |
| 101 | 83 | 13 | | 175 | 75 | 11 |
| 101 | 83 | 10 | | 175 | 83 | 9 |

| Start of Sector B | | | | End of sector B | | |
|---|---|---|---|---|---|---|
| H | Y | C | | H | Y | C |
| 192 | 19 | 15 | | 288 | 19 | 17 |
| 192 | 28 | 13 | | 288 | 32 | 13 |
| 192 | 40 | 12 | | 288 | 50 | 9 |
| 192 | 64 | 9 | | 288 | 65 | 5 |
| 192 | 73 | 6 | | 288 | 73 | 3 |
| 192 | 83 | 3 | | 288 | 83 | 1 |
| | | | | | | |
| 192 | 9 | 25 | | 288 | 7 | 26 |
| 192 | 14 | 30 | | 288 | 14 | 43 |
| 192 | 22 | 28 | | 288 | 16 | 28 |
| 192 | 24 | 36 | | 288 | 24 | 24 |
| 192 | 39 | 24 | | 288 | 28 | 22 |
| 192 | 55 | 22 | | 288 | 33 | 20 |
| | | | | | | |
| 192 | 11 | 22 | | 288 | 14 | 24 |
| 192 | 22 | 19 | | 288 | 21 | 22 |

(continued)

| Start of Sector B | | | | End of sector B | | |
|---|---|---|---|---|---|---|
| H | Y | C | | H | Y | C |
| 192 | 39 | 17 | | 288 | 34 | 27 |
| 192 | 54 | 15 | | 288 | 46 | 13 |
| 192 | 63 | 12 | | 288 | 59 | 10 |
| 192 | 72 | 8 | | 288 | 67 | 7 |

| Start of Sector V | | | | End of sector V | | |
|---|---|---|---|---|---|---|
| H | Y | C | | H | Y | C |
| 297 | 10 | 11 | | 333 | 9 | 9 |
| 297 | 17 | 12 | | 333 | 20 | 9 |
| 297 | 36 | 8 | | 333 | 35 | 7 |
| 297 | 49 | 6 | | 333 | 48 | 5 |
| 297 | 65 | 4 | | 333 | 64 | 4 |
| 297 | 73 | 3 | | 333 | 73 | 2 |
| | | | | | | |
| 297 | 8 | 13 | | 333 | 6 | 18 |
| 297 | 8 | 29 | | 333 | 9 | 31 |
| 297 | 11 | 25 | | 333 | 9 | 33 |
| 297 | 19 | 26 | | 333 | 15 | 30 |
| 297 | 22 | 24 | | 333 | 27 | 29 |
| 297 | 31 | 20 | | 333 | 45 | 20 |
| | | | | | | |
| 297 | 10 | 22 | | 333 | 12 | 22 |
| 297 | 21 | 20 | | 333 | 23 | 23 |
| 297 | 35 | 17 | | 333 | 37 | 18 |
| 297 | 53 | 12 | | 333 | 46 | 12 |
| 297 | 68 | 8 | | 333 | 68 | 9 |
| 297 | 74 | 4 | | 333 | 74 | 4 |

Table of Hue verses Card Number from Left

| Card | R | O | Go | Y | G | B | V |
|---|---|---|---|---|---|---|---|
| 1 | 345 | | | | | | |
| 2 | 354 | | | | | | |
| 3 | 5 | | | | | | |
| 4 | 9 | | | | | | |
| 5 | 17 | | | | | | |
| 6 | 25 | | | | | | |

(continued)

| Card | R | O | Go | Y | G | B | V |
|---|---|---|---|---|---|---|---|
| 7 | | 31 | | | | | |
| 8 | | 36 | | | | | |
| 9 | | 40 | | | | | |
| 10 | | 45 | | | | | |
| 11 | | 48 | | | | | |
| 12 | | 52 | | | | | |
| 13 | | | 55 | | | | |
| 14 | | | 59 | | | | |
| 15 | | | 63 | | | | |
| 16 | | | 67 | | | | |
| 17 | | | 70 | | | | |
| 18 | | | 73 | | | | |
| 19 | | | | 77 | | | |
| 20 | | | | 81 | | | |
| 21 | | | | 85 | | | |
| 22 | | | | 89 | | | |
| 23 | | | | 93 | | | |
| 24 | | | | | 101 | | |
| 25 | | | | | 108 | | |
| 26 | | | | | 117 | | |
| 27 | | | | | 126 | | |
| 28 | | | | | 135 | | |
| 29 | | | | | 144 | | |
| 30 | | | | | 157 | | |
| 31 | | | | | 175 | | |
| 32 | | | | | | 192 | |
| 33 | | | | | | 219 | |
| 34 | | | | | | 227 | |
| 35 | | | | | | 241 | |
| 36 | | | | | | 255 | |
| 37 | | | | | | 273 | |
| 38 | | | | | | 288 | |
| 39 | | | | | | | 297 |
| 40 | | | | | | | 302 |
| 41 | | | | | | | 308 |
| 42 | | | | | | | 315 |
| 43 | | | | | | | 320 |
| 44 | | | | | | | 327 |

(continued)

| Card | R | O | Go | Y | G | B | V |
|---|---|---|---|---|---|---|---|
| 45 | | | | | | | 333 |

The above data is plotted in Figure 8 from which it will be seen that there is a relatively smooth hue progression across the array along each row (the discontinuity shown arises on the transition from 360 degrees to 0 degrees, but in terms of apparent hue there is no discontinuity).

The next table below shows the relationship between card number (again counted along a row from the left) and the step on the reference colour wheel to which a card relates.

| Table of Colour Wheel step verses card number from left | | | | | | | |
|---|---|---|---|---|---|---|---|
| | R | O | Go | Y | G | B | V |
| 1 | 26 | | | | | | |
| 2 | 28 | | | | | | |
| 3 | 29 | | | | | | |
| 4 | 30 | | | | | | |
| 5 | 31 | | | | | | |
| 6 | 33 | | | | | | |
| 7 | | 34 | | | | | |
| 8 | | 35 | | | | | |
| 9 | | 36 | | | | | |
| 10 | | 37 | | | | | |
| 11 | | 38 | | | | | |
| 12 | | 38 | | | | | |
| 13 | | | 39 | | | | |
| 14 | | | 40 | | | | |
| 15 | | | 41 | | | | |
| 16 | | | 42 | | | | |
| 17 | | | 43 | | | | |
| 18 | | | 43 | | | | |
| 19 | | | | 44 | | | |
| 20 | | | | 45 | | | |
| 21 | | | | 47 | | | |
| 22 | | | | 48 | | | |
| 23 | | | | 2 | | | |
| 24 | | | | | 3 | | |
| 25 | | | | | 4 | | |
| 26 | | | | | 5 | | |
| 27 | | | | | 6 | | |
| 28 | | | | | 7 | | |
| 29 | | | | | 8 | | |
| 30 | | | | | 9 | | |

(continued)

| Table of Colour Wheel step verses card number from left | | | | | | | |
|---|---|---|---|---|---|---|---|
| | R | O | Go | Y | G | B | V |
| 31 | | | | | 10 | | |
| 32 | | | | | | 11 | |
| 33 | | | | | | 13 | |
| 34 | | | | | | 14 | |
| 35 | | | | | | 15 | |
| 36 | | | | | | 16 | |
| 37 | | | | | | 18 | |
| 38 | | | | | | 20 | |
| 39 | | | | | | | 21 |
| 40 | | | | | | | 22 |
| 41 | | | | | | | 22 |
| 42 | | | | | | | 23 |
| 43 | | | | | | | 24 |
| 44 | | | | | | | 24 |
| 45 | | | | | | | 25 |

Finally, again considering conformity, calculated in the same manner as in the previous examples:-

| **Overall level of Conformity** | | | |
|---|---|---|---|
| First sector Possible Combinations | | with | Conforming combinations |
| R | 48 | G | 39 |
| O | 42 | B | 29 |
| Go | 42 | B | 31 |
| Y | 35 | V | 33 |
| G | 48 | R | 39 |
| B | 42 | Go | 31 |
| V | 35 | Y | 33 |
| | 292 | | 235 |
| | | | 0.804795 |

Thus, with three rows a conformity value of 80.4% is achieved. Note here that in this example a different block (in this case blue) has been matched as substantially opposing two other blocks on the reference colour wheel. Under the same principles as before, however, the block with the highest conformity (in this case the gold block) with the blue block has been selected for the guidance to be given in respect of the blue block.

Note that in all of the above examples the most conforming block to any particular block has been the same irrespective of the row or zone. Thus, in the above fifth example, red has been matched with green and vice versa, and this finding holds true regardless of the row in which colours are being selected (remember that the difference between rows is in tonal characteristics given by the lightness and chromaticity values). In the next and final example to be described, however, such a finding is not true, and different contrasting guidance must be given for the same colour block in a row, dependent upon the row or zone it is in.

Example 6

In this example, data for three rows are given. Here, the first row of data is the same as the same as the second row in Example 5, the second row is the same as the second row in Example 3, and the third row is the same as the fourth row in Example 1.

Tables showing the hue, lightness and chromaticity values for each block are given below.

| Start of Sector R | | | | End of sector R | | |
|---|---|---|---|---|---|---|
| H | Y | C | | H | Y | C |
| 345 | 7 | 23 | | 25 | 7 | 27 |
| 345 | 10 | 32 | | 25 | 15 | 56 |
| 345 | 11 | 43 | | 25 | 15 | 50 |
| 345 | 15 | 38 | | 25 | 21 | 44 |
| 345 | 26 | 34 | | 25 | 30 | 40 |
| 345 | 34 | 28 | | 25 | 38 | 32 |
| | | | | | | |
| | | | | | | |
| | | | | | | |
| Start of Sector R | | | | End of sector R | | |
| H | Y | C | | H | Y | C |
| 349 | 19 | 44.4 | | 29 | 30 | 51.1 |
| 349 | 36 | 35.4 | | 29 | 45 | 36.9 |
| 349 | 48 | 27.6 | | 29 | 57 | 25 |
| 349 | 60 | 19.7 | | 29 | 68 | 12.7 |
| 349 | 72 | 12.1 | | 29 | 78 | 10.6 |
| 349 | 78 | 8.8 | | 29 | 83 | 7.6 |
| | | | | | | |
| | | | | | | |
| Start of Sector R | | | | End of sector R | | |
| H | Y | C | | H | Y | C |
| 349 | 13 | 25 | | 24 | 13 | 44 |
| 349 | 26 | 25 | | 24 | 28 | 36 |
| 349 | 39 | 18 | | 24 | 42 | 25 |
| 349 | 56 | 12 | | 24 | 53 | 18 |
| 349 | 68 | 7 | | 24 | 67 | 11 |
| 349 | 83 | 3 | | 24 | 83 | 4 |

| Start of Sector O | | | | End of sector O | | |
|---|---|---|---|---|---|---|
| H | Y | C | | H | Y | C |
| 31 | 7 | 23 | | 52 | 8 | 19 |
| 31 | 10 | 43 | | 52 | 13 | 37 |

(continued)

| Start of Sector O | | | | End of sector O | | |
|---|---|---|---|---|---|---|
| H | Y | C | | H | Y | C |
| 31 | 13 | 56 | | 52 | 26 | 60 |
| 31 | 15 | 55 | | 52 | 29 | 56 |
| 31 | 29 | 42 | | 52 | 36 | 47 |
| 31 | 43 | 30 | | 52 | 44 | 38 |
| | | | | | | |
| | | | | | | |
| | | | | | | |
| Start of Sector O | | | | End of sector O | | |
| H | Y | C | | H | Y | C |
| 35 | 30 | 51.1 | | 66 | 39 | 59.3 |
| 35 | 45 | 36.9 | | 66 | 54 | 44 |
| 35 | 57 | 25 | | 66 | 65 | 33.3 |
| 35 | 68 | 12.7 | | 66 | 72 | 25.4 |
| 35 | 78 | 10.6 | | 66 | 78 | 14.6 |
| 35 | 83 | 7.6 | | 66 | 86 | 10.6 |
| | | | | | | |
| | | | | | | |
| Start of Sector O | | | | End of sector O | | |
| H | Y | C | | H | Y | C |
| 32 | 16 | 41 | | 58 | 20 | 49 |
| 32 | 25 | 28 | | 58 | 31 | 42 |
| 32 | 41 | 26 | | 58 | 44 | 31 |
| 32 | 53 | 19 | | 58 | 55 | 27 |
| 32 | 67 | 11 | | 58 | 65 | 19 |
| 32 | 83 | 4 | | 58 | 77 | 12 |

| Start of Sector Go | | | | End of sector Go | | |
|---|---|---|---|---|---|---|
| H | Y | C | | H | Y | C |
| 55 | 9 | 16 | | 73 | 9 | 20 |
| 55 | 13 | 32 | | 73 | 18 | 35 |
| 55 | 24 | 57 | | 73 | 40 | 61 |
| 55 | 31 | 51 | | 73 | 51 | 76 |
| 55 | 34 | 47 | | 73 | 61 | 63 |
| 55 | 42 | 39 | | 73 | 70 | 46 |
| | | | | | | |
| | | | | | | |

(continued)

| Start of Sector Go | | | | End of sector Go | | |
|---|---|---|---|---|---|---|
| H | Y | C | | H | Y | C |
| | | | | | | |
| Start of Sector Go | | | | End of sector Go | | |
| H | Y | C | | H | Y | C |
| 70 | 36 | 69.4 | | 84 | 56 | 62.7 |
| 70 | 55 | 51.8 | | 84 | 61 | 47.5 |
| 70 | 60 | 47.5 | | 84 | 73 | 39.8 |
| 70 | 71 | 34.7 | | 84 | 81 | 25.6 |
| 70 | 78 | 25.5 | | 84 | 83 | 21.4 |
| 70 | 85 | 15.6 | | 84 | 86 | 16.6 |
| | | | | | | |
| | | | | | | |
| Start of Sector Go | | | | End of sector Go | | |
| H | Y | C | | H | Y | C |
| 63 | 19 | 49 | | 80 | 41 | 70 |
| 63 | 34 | 47 | | 80 | 49 | 56 |
| 63 | 46 | 35 | | 80 | 58 | 42 |
| 63 | 55 | 27 | | 80 | 64 | 33 |
| 63 | 64 | 17 | | 80 | 69 | 22 |
| 63 | 77 | 12 | | 80 | 77 | 17 |

| Start of Sector Y | | | | End of sector Y | | |
|---|---|---|---|---|---|---|
| H | Y | C | | H | Y | C |
| 77 | 12 | 30 | | 93 | 7 | 9 |
| 77 | 21 | 50 | | 93 | 29 | 46 |
| 77 | 40 | 61 | | 93 | 39 | 61 |
| 77 | 62 | 82 | | 93 | 53 | 64 |
| 77 | 63 | 75 | | 93 | 52 | 53 |
| 77 | 73 | 52 | | 93 | 59 | 49 |
| | | | | | | |
| | | | | | | |
| | | | | | | |
| Start of Sector Y | | | | End of sector Y | | |
| H | Y | C | | H | Y | C |
| 86 | 64 | 78.7 | | 95 | 62 | 75.5 |
| 86 | 71 | 56.7 | | 95 | 67 | 62.6 |

(continued)

| Start of Sector Y | | | | End of sector Y | | |
|---|---|---|---|---|---|---|
| H | Y | C | | H | Y | C |
| 86 | 74 | 38.3 | | 95 | 73 | 49.7 |
| 86 | 77 | 42.4 | | 95 | 79 | 36.7 |
| 86 | 83 | 25 | | 95 | 83 | 25 |
| 86 | 89 | 13.5 | | 95 | 83 | 18.7 |
| | | | | | | |
| | | | | | | |
| 84 | 28 | 61 | | 98 | 21 | 34 |
| 84 | 59 | 53 | | 98 | 37 | 30 |
| 84 | 61 | 43 | | 98 | 55 | 30 |
| 84 | 63 | 35 | | 98 | 66 | 27 |
| 8 | 77 | 24 | | 98 | 78 | 25 |
| 84 | 83 | 13 | | 98 | 83 | 15 |

| Start of Sector G | | | | End of sector G | | |
|---|---|---|---|---|---|---|
| H | Y | C | | H | Y | C |
| 101 | 9 | 21 | | 175 | 8 | 25 |
| 101 | 21 | 38 | | 175 | 16 | 39 |
| 101 | 38 | 63 | | 175 | 18 | 45 |
| 101 | 47 | 74 | | 175 | 33 | 45 |
| 101 | 48 | 50 | | 175 | 40 | 29 |
| 101 | 58 | 42 | | 175 | 57 | 22 |
| | | | | | | |
| | | | | | | |
| | | | | | | |
| Start of Sector G | | | | End of sector G | | |
| H | Y | C | | H | Y | C |
| 101 | 48 | 65 | | 178 | 31 | 44.6 |
| 101 | 55 | 56 | | 178 | 50 | 36 |
| 101 | 69 | 41.9 | | 178 | 64 | 25.8 |
| 101 | 78 | 33.4 | | 178 | 71 | 18 |
| 101 | 77 | 29.5 | | 178 | 77 | 15.6 |
| 101 | 85 | 17.4 | | 178 | 82 | 11.5 |
| | | | | | | |
| | | | | | | |

(continued)

| Start of Sector G | | | | End of sector G | | |
|---|---|---|---|---|---|---|
| H | Y | C | | H | Y | C |
| 103 | 24 | 36 | | 162 | 16 | 35 |
| 103 | 40 | 30 | | 162 | 28 | 32 |
| 103 | 54 | 24 | | 162 | 48 | 23 |
| 103 | 71 | 18 | | 162 | 60 | 16 |
| 103 | 83 | 13 | | 162 | 67 | 15 |
| 103 | 83 | 10 | | 162 | 83 | 10 |
| | | | | | | |
| Start of Sector B | | | | End of sector B | | |
| H | Y | C | | H | Y | C |
| 192 | 9 | 25 | | 288 | 7 | 26 |
| 192 | 14 | 30 | | 288 | 14 | 43 |
| 192 | 22 | 28 | | 288 | 16 | 28 |
| 192 | 24 | 36 | | 288 | 24 | 24 |
| 192 | 39 | 24 | | 288 | 28 | 22 |
| 192 | 55 | 22 | | 288 | 33 | 20 |
| | | | | | | |
| | | | | | | |
| | | | | | | |
| Start of Sector B | | | | End of sector B | | |
| H | Y | C | | H | Y | C |
| 191 | 32 | 34.6 | | 269 | 22 | 34.7 |
| 191 | 51 | 29.1 | | 269 | 32 | 30.8 |
| 191 | 60 | 23.9 | | 269 | 46 | 23.1 |
| 191 | 63 | 21.6 | | 269 | 64 | 13.5 |
| 191 | 79 | 10.9 | | 269 | 69 | 9.8 |
| 191 | 83 | 6.9 | | 269 | 71 | 9.1 |
| | | | | | | |
| | | | | | | |
| Start of Sector B | | | | End of sector B | | |
| H | Y | C | | H | Y | C |
| 172 | 19 | 37 | | 250 | 11 | 26 |
| 172 | 33 | 28 | | 250 | 20 | 24 |
| 172 | 49 | 21 | | 250 | 38 | 29 |
| 172 | 61 | 17 | | 250 | 50 | 16 |

(continued)

| Start of Sector B | | | | End of sector B | | |
|---|---|---|---|---|---|---|
| H | Y | C | | H | Y | C |
| 172 | 75 | 11 | | 250 | 56 | 13 |
| 172 | 83 | 9 | | 250 | 72 | 9 |

| Start of Sector V | | | | End of sector V | | |
|---|---|---|---|---|---|---|
| H | Y | C | | | | |
| 297 | 8 | 13 | | 333 | 6 | 18 |
| 297 | 8 | 29 | | 333 | 9 | 31 |
| 297 | 11 | 25 | | 333 | 9 | 33 |
| 297 | 19 | 26 | | 333 | 15 | 30 |
| 297 | 22 | 24 | | 333 | 27 | 29 |
| 297 | 31 | 20 | | 333 | 45 | 20 |
| | | | | | | |
| | | | | | | |
| | | | | | | |
| Start of Sector V | | | | End of sector V | | |
| H | Y | C | | | | |
| 280 | 23 | 31 | | 335 | 27 | 37.6 |
| 280 | 33 | 27 | | 335 | 47 | 27.4 |
| 280 | 51 | 18.6 | | 335 | 60 | 21.4 |
| 280 | 67 | 9.6 | | 335 | 69 | 9.6 |
| 280 | 74 | 4 | | 335 | 75 | 5.1 |
| 280 | 83 | 2 | | 335 | 83 | 3 |
| | | | | | | |
| | | | | | | |
| Start of Sector V | | | | End of sector V | | |
| H | Y | C | | | | |
| 262 | 8 | 26 | | 341 | 11 | 20 |
| 262 | 14 | 24 | | 341 | 23 | 21 |
| 262 | 27 | 24 | | 341 | 36 | 16 |
| 262 | 47 | 16 | | 341 | 54 | 11 |
| 262 | 63 | 10 | | 341 | 67 | 7 |
| 262 | 72 | 3 | | 341 | 83 | 3 |

Conformity values can be calculated from the data given in the previous examples from which the above data is taken, as shown in the table below:-

| | | Conformity |
|---|---|---|
| Example 5 | Zone 1 | 0.805 |
| Example 3 | Zone2 | 0.813 |
| Example 1 | Zone3 | 0.816 |
| | | 0.811333 |

Thus, a total conformity of 81.1 % is obtained, but to obtain this figure it is necessary for different contrasting advice to be given for the same block in different rows, in accordance with the following table:-

| | | | | | |
|---|---|---|---|---|---|
| If selecting from | R | co-ordinate with | G | in the same zone | |
| If selecting from | O | co-ordinate with | B | in the same zone | |
| If selecting from | Go | co-ordinate with | V | in the same zone | Except in zone 2 where b contrasts |
| If selecting from | Y | co-ordinate with | V | in the same zone | |
| If selecting from | G | co-ordinate with | R | in the same zone | |
| If selecting from | B | co-ordinate with | O | in the same zone | Except in zone 2 where Go contrasts |
| If selecting from | V | co-ordinate with | Go | in the same zone | Except in zone 2 where Y contrasts |

Thus, from the examples it becomes apparent that colours can be selected for stripe cards in blocks which allow for high conformity figures to be obtained with many different arrangements in terms of numbers of cards, and numbers of rows, although in some cases different contrasting advice may be given for some blocks in some rows to obtain such figures.

Moreover, the principles of conformity as described above can be applied to produce any colour display array within the scope of the invention regardless of the particular reference colour wheel used. As will be appreciated, any particular reference wheel used which depicts acceptable contrasting colours in approximate 180 degree opposition to each other is by definition a product of prevailing fashion and artistic appreciation which specify that particular contrasting colours look good together.

Thus, given any reference colour wheel which opposes acceptable contrasting colours the conformity principles described above can be used in colour selection from a given reference wheel to achieve a colour display which has the necessary conformance characteristics, thus providing for easy colour contrasting by unskilled users.

To select colours for any particular block in an array can be performed by generally dividing up the steps of the reference colour wheel into the number of blocks in a row, and allocating hues to each block accordingly. However, as noted from the examples above the number of stripe cards in a block can differ dependent upon the general colour to be displayed in a block, to take into account factors such as popularity of a colour and human sensitivity to colours, as discussed previously. This leads to different blocks in a row accounting for more or less steps on the reference colour wheel then other blocks in the same row. Moreover, artistic and marketing reasons may mean that some colours are placed within blocks that detract from achieving optimal conformity. Having come up with a colour laydown, however, conformity calculations as described above can be performed to calculate the conformity of the selection, with changes then being made on an iterative basis to obtain a desired conformity value. Such changes can take into account the scientific bases for achieving an optimal conformity as described herein, as well as artistic and marketing reasons for choosing a particular colour. The lower the level of conformity value desired and the angle range over which substantially opposing hues are said to conform dictates the degree of freedom with which colours can be chosen, with a higher conformity value and smaller angle reducing the degree of freedom, for any particular reference colour wheel.

## APPENDIX A

Colour standards can be measured using a DataColor Spectraflash instrument such as the Spectraflash 500 or Spectraflash 600 models. The measurement is made with Specular component included. The tristimulus (XYZ) values are calculated for illuminant D65 using 10 degree Observer data. Visual Basic functions may be used to calculate CIELab LABCH values from XYZ values, as follows:

```
Type WhitePointData
  X As Single
  Y As Single
  Z As Single
End Type

'(Whitepoint data for D65,10 degree is: x 94.811, y 100, z 107.304)

Type XYZData
  X As Single
  Y As Single
  Z As Single
End Type

Type LABData
  L As Single
  A As Single
  B As Single
End Type

Type LCHData
  L As Single
  C As Single
  H As Single
```

```
End Type

Function XYZ_LAB(XYZ As XYZData, wht As WhitePointData) As LABData
'to calculate LAB values from XYZs

Dim Xr As Single
Dim Yr As Single
Dim Zr As Single
Dim fXr As Single
Dim fYr As Single
Dim fZr As Single

Xr = XYZ.X / wht.X
Yr = XYZ.Y / wht.Y
Zr = XYZ.Z / wht.Z

If Xr > 0.008856 Then
  fXr = Xr ^ (1 / 3)
Else
  fXr = 7.787 * Xr + 16 / 116
End If

If Yr > 0.008856 Then
  fYr = Yr ^ (1 / 3)
Else
  fYr = 7.787 * Yr + 16 / 116
End If

If Zr > 0.008856 Then
  fZr = Zr ^ (1 / 3)
Else
  fZr = 7.787 * Zr + 16 / 116
```

```
End If

XYZ_LAB.L = 116 * fYr - 16
XYZ_LAB.A = 500 * (fXr - fYr)
XYZ_LAB.B = 200 * (fYr - fZr)

End Function
```

**Claims**

1. A colour display system for aiding the selection and combination of colours in colour scheming, **characterised in that:**

   the system comprises an array (10) of colour sample elements (12) each of a respective colour, the elements being grouped in discrete blocks (14) according to hue, chromaticity and lightness;
   the colour sample elements of each block all have colours which are within a hue range respective to that block and which have predetermined chromaticity and lightness properties associated with that block;
   the blocks are arranged in at least 3 parallel lines (16) according to their associated chromaticity and lightness properties such that all of the blocks in each line have similar or the same respective associated chromaticity and lightness properties;
   each line contains M blocks, where $6 \leq M \leq 12$ which are arranged in a hue range sequence along the line;
   within each block the colour sample elements are arranged in a series of hue increments in the direction of the said lines and corresponding to the sequence of their hues angles in the CIELAB colour spaces,, and in a series of lightness increments such that lightness increases in the orthogonal direction; and
   the angular range of hues in each block, as defined by the CIELAB colour space, vary in size between blocks such that the blocks containing the 90 degrees CIELAB hue have a hue angle range of one half or less than one half the size of the hue angle range of the blocks containing the 270 degrees CIELAB hue.

2. A system according to claim 1, wherein the hue range sequence along each line corresponds to the sequence of the hue ranges in the visible spectrum such that the array contains M parallel non-overlapping hue range segments each running in a direction orthogonal to the lines.

3. A system according to claim 2, wherein the lines are horizontally oriented rows and the hue range segments comprise vertically oriented columns.

4. A system according to claim 3, wherein, for any first block in any one of the rows, there is another, second block which has a conformity, as hereinbefore defined, of at least 75%, based on a reference colour wheel having *n* sectors of equal angle which map onto the CIELAB colour space as mapped sectors of unequal angles which, in a first angular range between 140 and 230 degrees hue in the CIELAB colour space, have an average subtended angle per sector of $(2 \pm 0.2)360/n$ degrees in the CIELAB colour space.

5. A system according to claim 4, wherein the maximum angle subtended by any of the mapped sectors in the CIELAB colour space is that of a sector lying between 150 and 220 degrees hue.

6. A system according to claim 4 or claim 5, wherein, in a second angular range of between 78 and 98 degrees in the CIELAB colour space, the mapped sectors have an average subtended angle per sector of $(0.4 \pm 0.04)360/n$ degrees.

7. A system according to any of claims 4 to 6, wherein, in a third angular range of between 1 and 79 degrees hue in the CIELAB colour space, the mapped sectors have an average subtended angle per sector of $(0.65 \pm 0.06)360/n$

degrees.

**8.** A system according to claim 7, wherein the mapped sectors in the third angular range exhibit a maximum subtended angle at or near 20 degrees hue on the CIELAB colour space.

**9.** A system according to any of claims 4 to 8, wherein *n* is an integer divisible by 6 and/or 8 and is at least 36.

**10.** A system according to any of claims 4 to 9, wherein the conformity is at least 80%.

**11.** A system according to any of claims 4 to 10, wherein the preferred angular deviation for calculating conformity is ± 30 degrees on the reference colour wheel.

**12.** A system according to any preceding claim, wherein M is 7, 8 or 9, wherein the blocks of each line include 2 blocks together encompassing a hue angle range of at least 140 degrees in the CIELAB colour space, which range includes hues having CIELAB colour space angles of 255 degrees Hue and 315 degrees Hue.

**13.** A system according to claim 12, wherein the said hue ranges of the individual blocks in each line are of equal angular extent on a reference colour wheel having *n* sectors of equal angle which map onto the CIELAB colour space as mapped sectors of unequal angles according to at least one of the following conditions:-

(a) in an angular range of between 140 and 230 degrees hue in the CIELAB colour space, the mapped sectors have an average subtended angle per sector of (2 ± 0.2)360/*n* degrees;
(b) in an angular range of between 78 and 98 degrees in the CIELAB colour space, the mapped sectors have an average subtended angle per sector of (0.4 ± 0.04)360/n degrees; and
(c) in an angular range of between 1 and 79 degrees in the CIELAB colour space, the mapped sectors have an average subtended angle per sector of (0.65 ± 0.06)360/*n* degrees.

**14.** A system according to any of claims 4 to 11, wherein M is an odd number and the said hue ranges of the individual blocks in each line are of unequal angular extent on the said reference colour wheel.

**15.** A system according to claim 14, wherein the angular extent of the hue range of one of the blocks of the line on the said reference colour wheel is at least 1.5 times the angular extent of the hue range of at least one of the other blocks of the line.

**16.** A system according to claim 14, wherein the angular extent of the hue range of one of the blocks of the line on the said reference colour wheel is substantially twice the angular extent of each of the hue ranges of two blocks containing hues which most closely oppose those of the said one block in the reference colour wheel, the other blocks having hue ranges of equal angular extent on the said reference colour wheel.

**17.** A system according to any preceding claim, wherein the lightness and chromaticity properties of the colours of the colour sample elements in the at least 3 lines conform to the following conditions (i), (ii) and (iii) respectively:

(i) the colour is substantially fully saturated or is a mixture of the fully saturated colour and black;
(ii) the colour does not meet condition (i) and is a mixture of a saturated colour and a visibly significant level of white, but has no visibly significant level of black, for any given hue, the lightness being of higher than any colour in (i); and
(ii) the colour does not meet condition (i) nor condition (ii) but is in the group of colours that are mixtures dominated by grey, but contain a visibly significant level of saturated colour, and for any hue and lightness have alower chromaticity than those colours of the same hue and lightness meeting conditions (i) and (ii).

**18.** A system according to claim 17, wherein the blocks are arranged in at least 4 parallel lines, having at least two lines meeting condition (iii), the colours in one of the two lines having higher chromaticity at any given hue and lightness than the colours of the other of the two lines.

**19.** A system according to any preceding claim, wherein the number of colour sample elements in the array is in the range of from 700 to 2400.

**20.** An interior or exterior design process comprising selecting and combining colours from an array (10) of colour sample elements (12) each of a respective colour, **characterised in that**:

the colours are grouped in the array into discrete blocks (14) according to hue, chromaticity and lightness;
the colour sample elements of each block all have colours which are within a hue range respective to that group and which have predetermined chromaticity and lightness properties associated with that group
the blocks are arranged in at least 3 parallel lines (16) according to their associated chromaticity and lightness properties such that all of the groups in each zone have similar or the same respective associated chromaticity and lightness properties;
each line contains M groups, where $6 \leq M \leq 12$ which are arranged in a hue range sequence;
within each block the colour sample elements are arranged in a series of hue increments in the direction of the said lines and corresponding to the sequence of their hues angles in the CIELAB colour spaces, and in a series of lightness increments such that lightness increases in an orthogonal direction; and
the angular range of hues in each block, as defined by the CIELAB colour space, vary in size between blocks such that the groups containing the 90 degrees CIELAB hue have a hue angle range of one half or less than one half the size of the hue angle range of the blocks containing the 270 degrees CIELAB hue.

**21.** A process according to claim 20, including selecting a first colour from a first said group, identifying a second said group in the same zone according to a guide pairing groups in a predetermined manner, and identifying at least one second colour from the second group to form a contrasting colour scheme.

**22.** A process according to claim 20 or claim 21 in which the hue ranges of the individual said groups of the array are such that for any first said group in any one of the zones, there is another, second group which has a conformity of at least 75%, based on a reference colour wheel having n sectors of equal angle which map onto the CIELAB colour space as mapped sectors of unequal angles which, in a first angular range of between 140 and 230 degrees hue in the CIELAB colour space, have an average subtended angle per sector of $(2 \pm 0.2)360/n$ degrees in the CIELAB colour space, and which in a second angular range of between 78 and 98 degrees in the CIELAB colour space, have an average subtended angle per sector of $(0.4 \pm 0.04)360/n$ degrees, wherein the term "conformity" means a parameter quantifying the degree to which elements of a one said group of colour sample elements in the array combine with elements of another group of elements in the array, the parameter being calculated (a) by counting, for each element i of the one group, the elements of the other group which have a hue within a predetermined angular deviation from the hue directly opposite that of the element i on a reference colour wheel, and (b) by summing the counts of all elements i of the one group and expressing the sum as a percentage of the total number of possible pairings of the elements i and the elements of the other group.

**23.** A method of decorating interior or exterior surfaces of a building, comprising selecting and combining colours according to the process of any of claims 20 to 22, and applying paint having the selected and combined colours to respective juxtaposed areas of the interior or exterior surfaces.

**24.** A method of colour scheming comprising selecting and combining colours according to the process of any one of claims 20 to 22.

**25.** A collection of colour items for decorating a building space, wherein the colours of the items are chosen according to the process of any of claims 20 to 22.

**26.** A collection according to claim 25, wherein the items comprise a collection of paints selected for a particular building space.

**27.** A retail space for marketing coloured items comprising a collection of such items displayed in a juxtaposed arrangement, wherein the colours of the items are chosen according to the process of any of claims 20 to 22.

**28.** A collection according to claim 25 or claim 26, wherein the items include any painted surfaces, fabrics, tiles, floor coverings, wallpapers, dyed surfaces.

**29.** A system according to any one of claims 1 to 19 further comprising at least one guide device indicating the pairing of predetermined blocks in each line.

## Patentansprüche

1. System zur Farbdarstellung für die Unterstützung der Auswahl und Kombination von Farben bei der Farbabstimmung, **dadurch gekennzeichnet, dass:**

   das System einen Array (10) von Farbprobenelementen (12) von jeweils einer Farbe umfasst, wobei die Elemente nach ihrem Buntton, ihrer Chromatizität und ihrer Helligkeit in separaten Blöcken (14) gruppiert sind,
   die Farbprobenelemente eines jeden Blocks alle Farben haben, die innerhalb eines Bunttonbereichs des betreffenden Blocks liegen und die mit diesem Block assoziierte, vorher festgelegte Chromatizitäts- und Helligkeitseigenschaften haben,
   die Blöcke gemäß ihren assoziierten Chromatizitäts- und Helligkeitseigenschaften in wenigstens 3 parallelen Reihen (16) so angeordnet sind, dass alle der Blöcke in jeder Reihe jeweils ähnliche oder gleiche assoziierte Chromatizitäts- und Helligkeitseigenschaften haben,
   jede Reihe M Blöcke enthält, wobei $6 \leq M \leq 12$ ist, die in einer Abfolge von Bunttonbereichen entlang der Reihe angeordnet sind,
   innerhalb eines jeden Blocks die Farbprobenelemente in einer Reihe von Bunttoninkrementen in der Richtung der genannten Reihen und entsprechend der Abfolge ihrer Bunttonwinkel im CIELAB-Farbraum und in einer Reihe von Helligkeitsinkrementen so angeordnet sind, dass die Helligkeit in orthogonaler Richtung zunimmt, und der Winkelbereich der Bunttöne in jedem Block, wie er vom CIELAB-Farbraum definiert wird, bezüglich der Größe zwischen den Blöcken so variiert, dass die Blöcke, die den 90-Grad-CIELAB-Buntton enthalten, einen Bunttonwinkelbereich von der Hälfte oder weniger als der Hälfte der Größe des Bunttonwinkelbereichs der Blöcke haben, die den 270-Grad-CIELAB-Buntton enthalten.

2. System gemäß Anspruch 1, wobei die Abfolge der Bunttonbereiche entlang jeder Reihe der Abfolge der Bunttonbereiche im sichtbaren Spektrum entspricht, sodass der Array M parallele, nicht überlappende Bunttonbereichsegmente enthält, die alle in einer Richtung orthogonal zu den Reihen verlaufen.

3. System gemäß Anspruch 2, wobei die Reihen horizontal ausgerichtete Reihen sind und die Bunttonbereichsegmente vertikal ausgerichtete Reihen umfassen.

4. System gemäß Anspruch 3, wobei es für jeden ersten Block in jeder der Reihen einen weiteren, zweiten Block gibt, der eine Konformität, wie sie hier zuvor definiert wurde, von wenigstens 75 % hat, basierend auf einem Referenzfarbrad mit *n* Sektoren von gleichem Winkel, die auf dem CIELAB-Farbraum als abgebildete Sektoren mit ungleichen Winkeln abgebildet sind, die, in einem ersten Winkelbereich zwischen dem 140- und dem 230-Grad-Buntton im CIELAB-Farbraum, einen durchschnittlichen gegenüberliegenden Winkel pro Sektor von $(2 \pm 0{,}2)360/n$ Grad im CIELAB-Farbraum haben.

5. System gemäß Anspruch 4, wobei der Maximalwinkel, dem irgendeiner der abgebildeten Sektoren im CIELAB-Farbraum gegenüber liegt, derjenige eines Sektors ist, der zwischen dem 150- und dem 220-Grad-Buntton liegt.

6. System gemäß Anspruch 4 oder Anspruch 5, wobei in einem zweiten Winkelbereich zwischen 78 und 98 Grad im CIELAB-Farbraum die abgebildeten Sektoren einen durchschnittlichen gegenüberliegenden Winkel pro Sektor von $(0{,}4 \pm 0{,}04)360/n$ Grad haben.

7. System gemäß einem beliebigen der Ansprüche 4 bis 6, wobei in einem dritten Winkelbereich zwischen dem 1- und dem 79-Grad-Buntton im CIELAB-Farbraum die abgebildeten Sektoren einen durchschnittlichen gegenüberliegenden Winkel pro Sektor von $(0{,}65 \pm 0{,}06)360/n$ Grad haben.

8. System gemäß Anspruch 7, wobei die abgebildeten Sektoren im dritten Winkelbereich einen maximalen gegenüberliegenden Winkel von oder in der Gegend von 20 Grad an Bunttönen im CIELAB-Farbraum aufweisen.

9. System gemäß einem beliebigen der Ansprüche 4 bis 8, wobei n eine durch 6 und/oder 8 teilbare ganze Zahl ist und wenigstens 36 ist.

10. System gemäß einem beliebigen der Ansprüche 4 bis 9, wobei die Konformität bei wenigstens 80 % liegt.

11. System gemäß einem beliebigen der Ansprüche 4 bis 10, wobei die bevorzugte Winkelabweichung für die Berechnung der Konformität bei $\pm$ 30 Grad auf dem Referenzfarbrad liegt.

**12.** System gemäß einem beliebigen der vorhergehenden Ansprüche, wobei M 7, 8 oder 9 ist, wobei die Blöcke einer jeden Reihe 2 Blöcke einschließen, die zusammen einen Bunttonwinkelbereich von wenigstens 140 Grad im CIELAB-Farbraum umspannen, wobei dieser Bereich Bunttöne mit CIELAB-Farbraumwinkeln des 255-Grad-Bunttons und des 315-Grad-Bunttons einschließt.

**13.** System gemäß Anspruch 12, wobei die besagten Bunttonbereiche der einzelnen Blöcke in jeder Reihe die gleiche Winkelgröße auf einem Referenzfarbrad mit *n* Sektoren von gleichem Winkel haben, die auf dem CIELAB-Farbraum als abgebildete Sektoren von ungleichen Winkeln gemäß wenigstens einer der folgenden Bedingungen abgebildet sind:

a) In einem Winkelbereich zwischen Bunttönen von 140 und von 230 Grad im CIELAB-Farbraum haben die abgebildeten Sektoren einen durchschnittlichen gegenüberliegenden Winkel pro Sektor von $(2 \pm 0{,}2)360/n$ Grad,
b) in einem Winkelbereich zwischen 78 und 98 Grad im CIELAB-Farbraum haben die abgebildeten Sektoren einen durchschnittlichen gegenüberliegenden Winkel pro Sektor von $(0{,}4 \pm 0{,}04)360/n$ Grad, und
c) in einem Winkelbereich zwischen 1 und 79 Grad im CIELAB-Farbraum haben die abgebildeten Sektoren einen durchschnittlichen gegenüberliegenden Winkel pro Sektor von $(0{,}65 \pm 0{,}06)360/n$ Grad.

**14.** System gemäß einem beliebigen der Ansprüche 4 bis 11, wobei M eine ungerade Zahl ist und die besagten Bunttonbereiche der einzelnen Blöcke in jeder Reihe unterschiedliche Winkelgrößen auf dem besagten Referenzfarbrad besitzen.

**15.** System gemäß Anspruch 14, wobei die Winkelgröße des Bunttonbereichs eines der Blöcke der Reihe auf dem besagten Referenzfarbrad beim wenigstens 1,5-Fachen der Winkelgröße des Bunttonbereichs von wenigstens einem der anderen Blöcke der Reihe liegt.

**16.** System gemäß Anspruch 14, wobei die Winkelgröße des Bunttonbereichs eines der Blöcke der Reihe auf dem besagten Referenzfarbrad im Wesentlichen beim Doppelten der Winkelgröße eines jeden der Bunttonbereiche von zwei Blöcken liegt, die Bunttöne enthalten, die denen des genannten einen Blocks im Referenzfarbrad am genauesten entgegengesetzt sind, wobei die anderen Blöcke Bunttonbereiche der gleichen Winkelgröße auf dem besagten Referenzfarbrad aufweisen.

**17.** System gemäß einem beliebigen der vorhergehenden Ansprüche, wobei die Helligkeits- und Chromatizitätseigenschaften der Farben der Farbprobenelemente in den wenigstens 3 Reihen die folgenden Bedingungen i), ii) bzw. iii) erfüllen:

i) Die Farbe ist im Wesentlichen vollständig gesättigt oder eine Mischung der vollständig gesättigten Farbe und von Schwarz,
ii) die Farbe erfüllt nicht die Bedingung i) und ist eine Mischung einer gesättigten Farbe und einer sichtbar signifikanten Menge an Weiß, hat aber keine sichtbar signifikante Menge an Schwarz, für jeden gegebenen Buntton, wobei die Helligkeit größer als diejenige einer beliebigen Farbe in i) ist, und
iii) die Farbe erfüllt weder die Bedingung i) noch die Bedingung ii), liegt aber in der Gruppe von Farben, die von Grau dominierte Mischungen sind, aber eine sichtbar signifikante Menge einer gesättigten Farbe enthalten und für jeden Buntton und jede Helligkeit eine niedrigere Chromatizität haben als diejenigen Farben mit dem gleichen Buntton und der gleichen Helligkeit, die die Bedingungen i) und ii) erfüllen.

**18.** System gemäß Anspruch 17, wobei die Blöcke in wenigstens 4 parallelen Reihen angeordnet sind, wobei wenigstens zwei Reihen die Bedingung iii) erfüllen, wobei die Farben in einer der zwei Reihen bei jedem gegebenen Buntton und jeder gegebenen Helligkeit eine höhere Chromatizität haben als die Farben der anderen der beiden Reihen.

**19.** System gemäß einem beliebigen der vorhergehenden Ansprüche, wobei die Zahl der Farbprobenelemente im Array im Bereich von 700 bis 2400 liegt.

**20.** Designprozess für Innen oder Außen, der das Auswählen und Kombinieren von Farben aus einem Array (10) von Farbprobenelementen (12) mit jeweils einer Farbe umfasst, **dadurch gekennzeichnet, dass**:

die Farben in dem Array gemäß ihrem Buntton, ihrer Chromatizität und ihrer Helligkeit in separaten Blöcken (14) gruppiert sind,

die Farbprobenelemente eines jeden Blocks alle Farben haben, die innerhalb eines Bunttonbereichs des betreffenden Blocks liegen und die mit dieser Gruppe assoziierte, vorher festgelegte Chromatizitäts- und Helligkeitseigenschaften haben,
die Blöcke in wenigstens 3 parallelen Reihen (16) gemäß ihren assoziierten Chromatizitäts- und Helligkeitseigenschaften so angeordnet sind, dass alle der Blöcke in jeder Zone ähnliche oder die gleichen jeweiligen assoziierten Chromatizitäts- und Helligkeitseigenschaften haben,
jede Reihe M Blöcke enthält, wobei $6 \leq M \leq 12$ ist, die in einer Abfolge von Bunttonbereichen angeordnet sind, innerhalb eines jeden Blocks die Farbprobenelemente in einer Reihe von Bunttoninkrementen in der Richtung der besagten Reihen und entsprechend der Abfolge ihrer Bunttonwinkel im CIELAB-Farbraum und in einer Reihe von Helligkeitsinkrementen so angeordnet sind, dass die Helligkeit in orthogonaler Richtung zunimmt, und der Winkelbereich der Munttöne in jedem Block, wie er vom CIELAB-Farbraum definiert wird, bezüglich der Größe zwischen den Blöcken so variiert, dass die Blöcke, die den 90-Grad-CIELAB-Buntton enthalten, einen Bunttonwinkelbereich von der Hälfte oder weniger als der Hälfte der Größe des Bunttonwinkelbereichs der Blöcke haben, die den 270-Grad-CIELAB-Buntton enthalten.

**21.** Prozess gemäß Anspruch 20, der das Auswählen einer ersten Farbe aus einer ersten besagten Gruppe, das Identifizieren einer zweiten besagten Gruppe in der gleichen Zone mittels einer Hilfsvorrichtung, die Gruppen auf zuvor festgelegte Weise paart, und das Identifizieren wenigstens einer zweiten Farbe aus der zweiten Gruppe zur Bildung eines Farbschemas aus kontrastierenden Farben einschließt.

**22.** Prozess gemäß Anspruch 20 oder Anspruch 21, wobei die Bunttonbereiche der einzelnen besagten Gruppen des Array von der Art sind, dass es für jede erste besagte Gruppe in jeder der Zonen eine andere, zweite Gruppe gibt, die eine Konformität von wenigstens 75 % hat, basierend auf einem Referenzfarbrad mit *n* Sektoren von gleichem Winkel, die auf dem CIELAB-Farbraum als abgebildete Sektoren von ungleichen Winkeln abgebildet sind, die in einem ersten Winkelbereich zwischen den Bunttönen von 140 und 230 Grad im CIELAB-Farbraum einen durchschnittlichen gegenüberliegenden Winkel pro Sektor von $(2 \pm 0{,}2)360/n$ Grad im CIELAB-Farbraum haben, und die in einem zweiten Winkelbereich zwischen 78 und 98 Grad im CIELAB-Farbraum einen durchschnittlichen gegenüberliegenden Winkel pro Sektor von $(0{,}4 \pm 0{,}04)360/n$ Grad haben, wobei der Begriff "Konformität" einen Parameter bedeutet, der das Ausmaß quantifiziert, in dem Elemente einer besagten Gruppe von Farbprobenelementen im Array mit Elementen einer anderen Gruppe von Elementen im Array zusammengehen, wobei der Parameter berechnet wird a) durch das Zählen, für jedes Element i der einen Gruppe, der Elemente der anderen Gruppe, die einen Buntton innerhalb einer vorher festgelegten Winkelabweichung vom Buntton direkt gegenüber demjenigen des Elements i auf einem Referenzfarbrad haben, und b) durch das Summieren der Zählergebnisse aller Elemente i der einen Gruppe und das Ausdrücken der Summe als prozentualer Anteil der Gesamtzahl möglicher Paarungen der Elemente i und der Elemente der anderen Gruppe.

**23.** Verfahren zur Dekoration innerer oder äußerer Oberflächen eines Gebäudes, wobei das Verfahren das Auswählen und Kombinieren von Farben gemäß dem Prozess nach einem beliebigen der Ansprüche 20 bis 22 und das Aufbringen eines Anstrichs mit den ausgewählten und kombinierten Farben auf jeweils nebeneinander liegende Bereiche der inneren oder äußeren Oberflächen umfasst.

**24.** Verfahren zur Farbabstimmung, das das Auswählen und Kombinieren von Farben gemäß dem Prozess nach einem beliebigen der Ansprüche 20 bis 22 umfasst.

**25.** Kollektion von farbigen Artikeln für das Dekorieren eines Bauraums, wobei die Farben der Artikel gemäß dem Prozess nach einem beliebigen der Ansprüche 20 bis 22 ausgewählt sind.

**26.** Kollektion gemäß Anspruch 25, wobei die Artikel eine für einen bestimmten Bauraum ausgewählte Kollektion von Anstrichen umfassen.

**27.** Handelsfläche für das Vertreiben farbiger Artikel, die eine Kollektion derartiger Artikel umfasst, die nebeneinander angeordnet ausgestellt sind, wobei die Farben der Artikel gemäß dem Prozess nach einem beliebigen der Ansprüche 20 bis 22 ausgewählt sind.

**28.** Kollektion gemäß Anspruch 25 oder Anspruch 26, wobei die Artikel beliebige angestrichene Oberflächen, Stoffe, Fliesen, Bodenbeläge, Tapeten und gefärbte Oberflächen einschließen.

**29.** System gemäß einem beliebigen der Ansprüche 1 bis 19, das ferner wenigstens eine Hilfsvorrichtung umfasst, die die Paarung vorher festgelegter Blöcke in jeder Reihe angibt.

## Revendications

1. Système d'affichage en couleurs pour faciliter la sélection et la combinaison de couleurs dans l'établissement d'un modèle de couleur, **caractérisé en ce que** :

   le système comprend un réseau (10) d'éléments d'échantillons de couleurs (12) chacun d'une couleur respective, les éléments étant groupés en blocs discrets (14) suivant la teinte, la chromaticité et l'intensité de couleur ;
   les éléments d'échantillons en couleurs de chaque bloc ont tous des couleurs qui sont comprises dans une gamme de teintes par rapport à ce bloc et qui ont des propriétés de chromaticité et d'intensité de couleur prédéterminées associées à ce bloc ;
   les blocs sont disposés en au moins 3 lignes parallèles (16) en fonction de leurs propriétés de chromaticité et d'intensité de lumière associées de telle sorte que tous les blocs dans chaque ligne aient des propriétés de chromaticité et d'intensité de couleur associées respectives similaires ou identiques ;
   chaque ligne contient M blocs, où $6 \leq M \leq 12$, qui sont disposés dans une séquence de gamme de teintes le long de la ligne ;
   dans chaque bloc, les éléments d'échantillons en couleurs sont disposés dans une série d'incréments de teintes dans la direction desdites lignes et correspondant à la séquence de leurs angles de teintes dans les espaces de couleurs CIELAB, et en une série d'incréments d'intensité de couleur de telle sorte que l'intensité de couleur augmente dans la direction orthogonale ; et
   la gamme angulaire de teintes dans chaque bloc, comme définie par l'espace de couleurs CIELAB, varie en ce qui concerne les dimensions entre les blocs de telle sorte que les blocs contenant la teinte CIELAB à 90 degrés possèdent un intervalle d'angles de teintes égal ou inférieur à la moitié de la moitié des dimensions de l'intervalle d'angles de teintes des blocs contenant la teinte CIELAB à 270 degrés.

2. Système suivant la revendication 1, dans lequel la séquence de gammes de teintes le long de chaque ligne correspond à la séquence des gammes de teintes dans le spectre visible de telle sorte que le réseau contienne M segments de gammes de teintes parallèles sans chevauchement s'étendant chacun dans une direction perpendiculaire aux lignes.

3. Système suivant la revendication 2, dans lequel les lignes sont des rangées orientées horizontalement et les segments de gammes de teintes comprennent des colonnes orientées verticalement.

4. Système suivant la revendication 3, dans lequel, pour n'importe quel premier bloc dans n'importe laquelle des rangées, il existe un autre bloc consistant en un second bloc qui a une conformité, comme défini précédemment, d'au moins 75 %, sur la base d'une roue de couleurs de référence ayant n secteurs de même angle qui s'étendent sur l'espace de couleurs CIELAB sous forme de secteurs cartographiés d'angles inégaux qui, dans un premier intervalle angulaire entre 140 et 230 degrés de teinte dans l'espace de couleurs CIELAB, ont un angle sous-tendu moyen par secteur de $(2 \pm 0{,}2)\ 360/n$ degrés dans l'espace de couleurs CIELAB.

5. Système suivant la revendication 4, dans lequel l'angle maximum sous-tendu par n'importe lequel des secteurs cartographiés dans l'espace de couleurs CIELAB est celui d'un secteur s'étendant entre 150 et 220 degrés de teinte.

6. Système suivant la revendication 4 ou la revendication 5, dans lequel, dans le second intervalle angulaire entre 78 et 98 degrés dans l'espace de couleurs CIELAB, les secteurs cartographiés ont un angle sous-tendu moyen par secteur de $(4 \pm 0{,}04)360/n$ degrés.

7. Système suivant l'une quelconque des revendications 4 à 6, dans lequel, dans un troisième intervalle angulaire entre 1 et 79 degrés de teinte dans l'espace de couleurs CIELAB, les secteurs cartographiés ont un angle sous-tendu moyen par secteur de $(0{,}65 \pm 0{,}06)360/n$ degrés.

8. Système suivant la revendication 7, dans lequel les secteurs cartographiés dans le troisième intervalle angulaire présentent un angle sous-tendu maximal égal à ou proche de 20 degrés de teinte sur l'espace de couleurs CIELAB.

9. Système suivant l'une quelconque des revendications 4 à 8, dans lequel n représente un nombre entier divisible par 6 et/ou 8 et est égal à au moins 36.

**10.** Système suivant l'une quelconque des revendications 4 à 9, dans lequel la conformité est égale à au moins 80 %.

**11.** Système suivant l'une quelconque des revendications 4 à 10, dans lequel l'écart angulaire préféré pour le calcul de la conformité est égal à $\pm$ 30 degrés sur la roue de couleurs de référence.

**12.** Système suivant l'une quelconque des revendications précédentes, dans lequel M est égal à 7, 8 ou 9, dans lequel les blocs de chaque ligne comprennent 2 blocs comprenant conjointement une gamme d'angles de teintes d'au moins 140 degrés dans l'espace de couleurs CIELAB, gamme qui comprend des teintes ayant des angles d'espace de couleurs CIELAB de 255 degrés de teinte et 315 degrés de teinte.

**13.** Système suivant la revendication 12, dans lequel lesdites gammes de teintes des blocs individuels dans chaque ligne ont une étendue angulaire égale sur une roue de couleurs de référence ayant n secteurs d'angle égal qui sont disposés sur l'espace de couleurs CIELAB sous forme de secteurs cartographiés d'angles inégaux d'après au moins une des conditions suivantes :

(a) dans un intervalle angulaire entre 140 et 230 degrés de teinte dans l'espace de couleurs CIELAB, les secteurs cartographiés ont un angle sous-tendu moyen par secteur de $(2 \pm 0{,}2)360/n$ degrés ;
(b) dans un intervalle angulaire entre 78 et 98 degrés de teinte dans l'espace de couleurs CIELAB, les secteurs cartographiés ont un angle sous-tendu moyen par secteur de $(0{,}4 \pm 0{,}04)360/n$ degrés ; et
(c) dans un intervalle angulaire entre 1 et 79 degrés de teinte dans l'espace de couleurs CIELAB, les secteurs cartographiés ont un angle sous-tendu moyen par secteur de $(0{,}65 \pm 0{,}06)\ 360/n$ degrés ;

**14.** Système suivant l'une quelconque des revendications 4 à 11, dans lequel M est un nombre impair et lesdites gammes de teintes des blocs individuels dans chaque ligne ont une étendue angulaire inégale sur ladite roue de couleurs de référence.

**15.** Système suivant la revendication 14, dans lequel l'étendue angulaire de la gamme de teintes d'un des blocs de la ligne sur ladite roue de couleurs de référence est égal à au moins 1,5 fois l'étendue angulaire de la gamme de teintes d'au moins un des autres blocs de la ligne.

**16.** Système suivant la revendication 14, dans lequel l'étendue angulaire de la gamme de teintes d'un des blocs de la ligne sur ladite roue de couleurs de référence est pratiquement double de l'étendue angulaire de chacune des gammes de teintes de deux blocs contenant des teintes qui s'opposent plus étroitement à celles dudit un bloc dans la roue de couleurs de référence, les autres blocs ayant des gammes de teintes d'étendue angulaire inégale sur ladite roue de couleurs de référence.

**17.** Système suivant l'une quelconque des revendications précédentes, dans lequel les propriétés d'intensité de couleur et de chromaticité des couleurs des éléments d'échantillons en couleurs dans lesdites au moins 3 lignes satisfont respectivement les conditions (i), (ii) et (iii) suivantes :

(i) la couleur est pratiquement totalement saturée ou est un mélange de la couleur totalement saturée et de la couleur noire ;
(ii) la couleur ne satisfait pas à la condition (i) et est un mélange d'une couleur saturée et d'un degré visiblement significatif de blanc, mais ne possède aucun degré visiblement significatif de noir, pour n'importe quelle teinte donnée, l'intensité de couleur étant supérieure à celle de n'importe quelle couleur en (i) ; et
(ii) la couleur ne satisfait ni la condition (i) ni la condition (ii) mais est située dans le groupe de couleurs qui sont des mélanges dominés par le gris, mais qui contiennent un degré visiblement significatif de couleur saturée et, pour n'importe quelle teinte et n'importe quelle intensité de couleur, ont une chromaticité inférieure à celle des couleurs de la même teinte et de la même intensité de couleur satisfaisant les conditions (i) et (ii).

**18.** Système suivant la revendication 17, dans lequel les blocs sont disposés en au moins 4 lignes parallèles, comprenant au moins deux lignes satisfaisant à la condition (iii), les couleurs dans une des deux lignes ayant une chromaticité supérieure à n'importe quelle teinte et n'importe quelle intensité de couleur données à celles des couleurs de l'autre des deux lignes;

**19.** Système suivant l'une quelconque des revendications précédentes, dans lequel le nombre d'éléments d'échantillons en couleurs dans le réseau est compris dans l'intervalle de 700 à 2400.

**20.** Procédé de conception intérieur ou extérieur, comprenant la sélection et la combinaison de couleurs à partir d'un réseau (10) d'éléments d'échantillons en couleurs (12) chacun d'une couleur respective, **caractérisé en ce que** :

les couleurs sont groupées dans le réseau en blocs discrets (14) en fonction de la teinte, de la chromaticité, et de l'intensité de couleurs ;
les éléments d'échantillons en couleurs de chaque bloc ont tous des couleurs qui sont comprises dans une gamme de teintes par rapport à ce groupe et qui ont une des propriétés de chromaticité et d'intensité de couleurs prédéterminées associées à ce groupe ;
les blocs sont disposés en au moins 3 lignes parallèles (16) en fonction de leurs propriétés de chromaticité et d'intensité de couleur associées de telle sorte que tous les groupes dans chaque zone possèdent des propriétés de chromaticité et d'intensité de couleur associées respectives similaires ou identiques ;
chaque ligne contient M groupes, où $6 \leq M \leq 12$, qui sont disposés dans une séquence de gammes de teintes ;
dans chaque bloc, les éléments d'échantillons en couleurs sont disposés dans une série d'incréments de teintes dans la direction desdites lignes et correspondant à la séquence de leurs angles de teintes dans les espaces de couleurs CIELAB, et dans une série d'incréments d'intensité de couleur de telle sorte que l'intensité de couleur augmente dans une direction orthogonale ; et
la gamme angulaire de teintes dans chaque bloc, comme définie par l'espace de couleurs CIELAB, varie en ce qui concerne les dimensions entre les blocs de telle sorte que les blocs contenant la teinte CIELAB à 90 degrés possèdent une gamme d'angles de teintes égale à la moitié ou inférieure à la moitié des dimensions de la gamme d'angles de teintes des blocs contenant la teinte CIELAB à 270 degrés.

**21.** Procédé suivant la revendication 20, comprenant la sélection d'une première couleur à partir d'un tel premier groupe, l'identification d'un tel second groupe dans la même zone en fonction d'un groupe d'appariements de guidage d'une manière prédéterminée, et l'identification d'au moins une seconde couleur à partir du second groupe pour former un schéma de couleurs contrastantes.

**22.** Procédé suivant la revendication 20 ou la revendication 21, dans lequel les gammes de teintes desdits groupes individuels du réseau sont telles que, pour n'importe quel tel premier groupe dans l'une quelconque des zones, il existe un autre groupe, consistant en un second groupe, qui a une conformité d'au moins 75 %, d'après une roue de couleurs de référence comprenant *n* secteurs d'angle égal qui s'adapte sur l'espace de couleurs CIELAB sous forme de secteurs cartographiés d'angles inégaux qui, dans un premier intervalle angulaire entre 140 et 230 degrés de teintes dans l'espace de couleurs CIELAB, ont un angle sous-tendu moyen par secteur de $(2 \pm 0{,}2)\ 360/n$ degrés dans l'espace de couleurs CIELAB et qui, dans un second intervalle angulaire entre 78 et 98 degrés dans l'espace de couleurs CIELAB, ont un angle sous-tendu moyen par secteur de $(0{,}4 \pm 0{,}09)\ 360/n$ degrés dans l'espace de couleurs CIELAB, où le terme "conformité" désigne un paramètre quantifiant le degré auquel les éléments d'un tel groupe d'éléments d'échantillons en couleurs dans le réseau se combinent avec les éléments d'un autre groupe d'éléments dans le réseau, le paramètre étant calculé (a) en comptant, pour chaque élément i d'un groupe, les éléments de l'autre groupe qui ont une teinte dans un écart angulaire prédéterminé par rapport à la teinte directement opposé à celle de l'élément i sur une roue de couleurs de référence, et (b) en calculant la somme des valeurs de comptage de tous les éléments i d'un groupe et en exprimant la somme sous forme d'un pourcentage du nombre total d'appariements possibles des éléments i et des éléments de l'autre groupe.

**23.** Procédé pour décorer des surfaces intérieures ou extérieures d'un bâtiment, comprenant la sélection et la combinaison de couleurs suivant le procédé de l'une quelconque des revendications 20 à 22, et l'application d'une peinture ayant les couleurs sélectionnées et combinées à des zones juxtaposées respectives des surfaces intérieures ou extérieures.

**24.** Procédé d'établissement d'un schéma en couleurs, comprenant la sélection et la combinaison de couleurs suivant le procédé de l'une quelconque des revendications 20 à 22.

**25.** Ensemble d'éléments en couleurs pour décorer un espace d'un bâtiment, dans lequel les couleurs des éléments sont choisies suivant le procédé de l'une quelconque des revendications 20 à 22.

**26.** Ensemble suivant la revendication 25, dans lequel les éléments comprennent un ensemble de peintures choisies pour un espace de bâtiment particulier.

**27.** Espace de vente au détail pour commercialiser des éléments en couleurs comprenant un ensemble de ces éléments présenté suivant une disposition juxtaposée, dans lequel les couleurs des éléments sont choisies suivant le procédé de l'une quelconque des revendications 20 à 22.

**28.** Ensemble suivant la revendication 25 ou la revendication 26, dans lequel les éléments comprennent n'importe quels surfaces peintes, étoffes, carreaux, revêtements de sol, papiers peints et surfaces teintées.

**29.** Système suivant l'une quelconque des revendications 1 à 19, comprenant en outre au moins un dispositif de guidage indiquant l'appariement des blocs prédéterminés dans chaque ligne.

FIG. 1

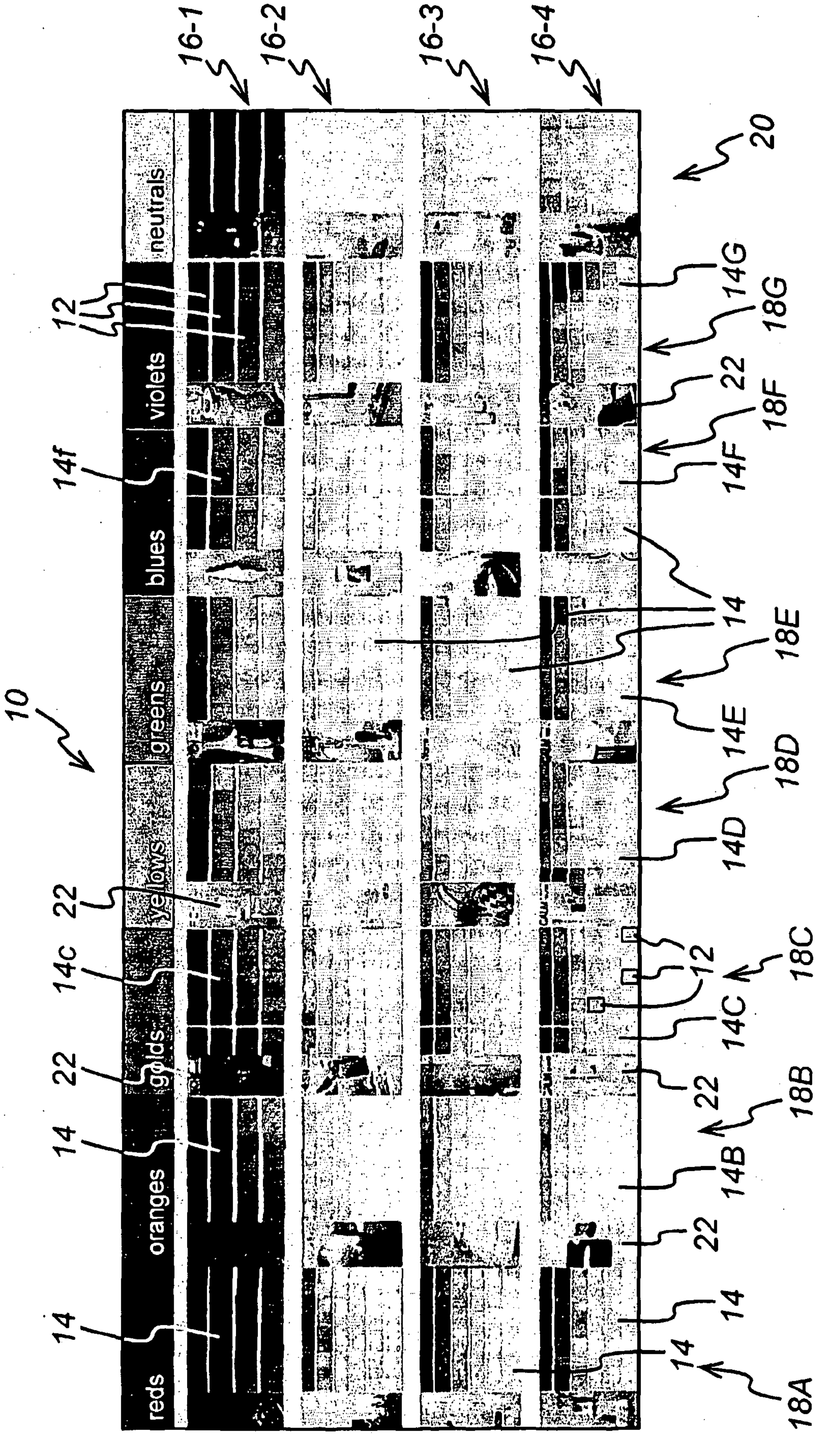
reds
oranges
golds
yellows
greens
blues
violets
neutrals
10
12
14
14c
14f
14B
14C
14D
14E
14F
14G
16-1
16-2
16-3
16-4
18A
18B
18C
18D
18E
18F
18G
20
22

FIG. 2

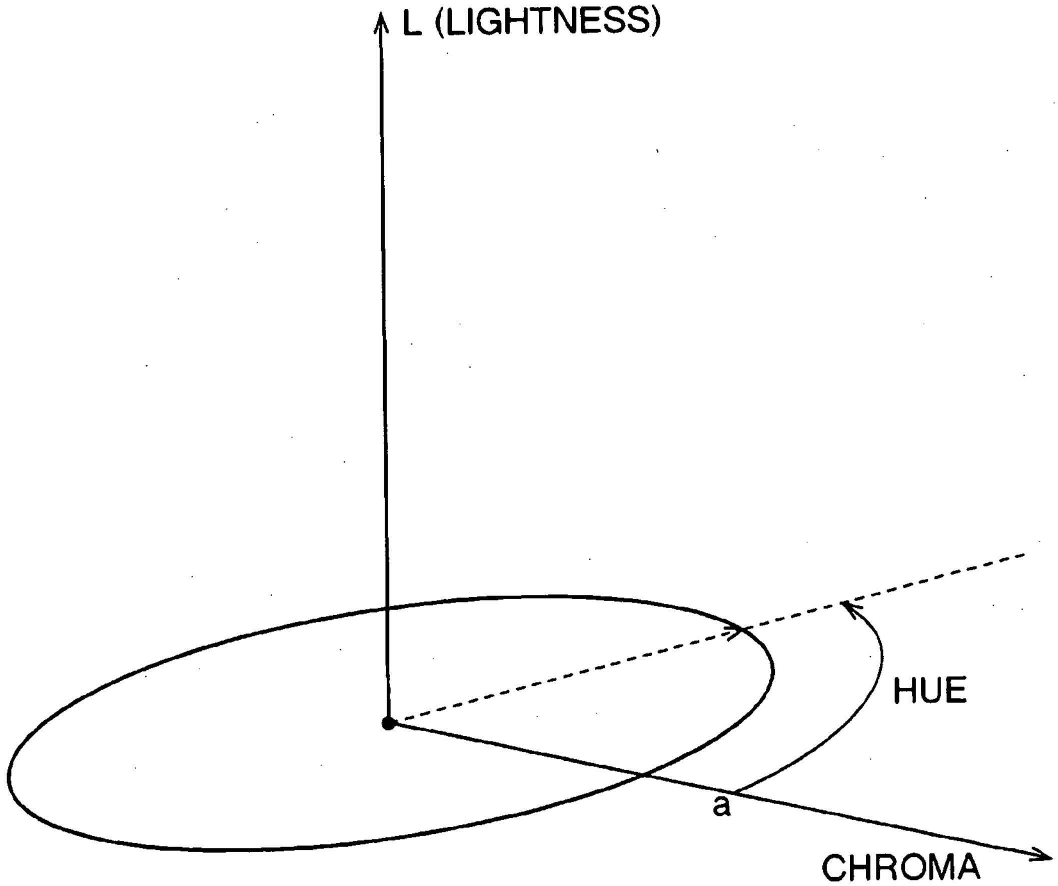

*FIG. 3A*

Hue step verses Step

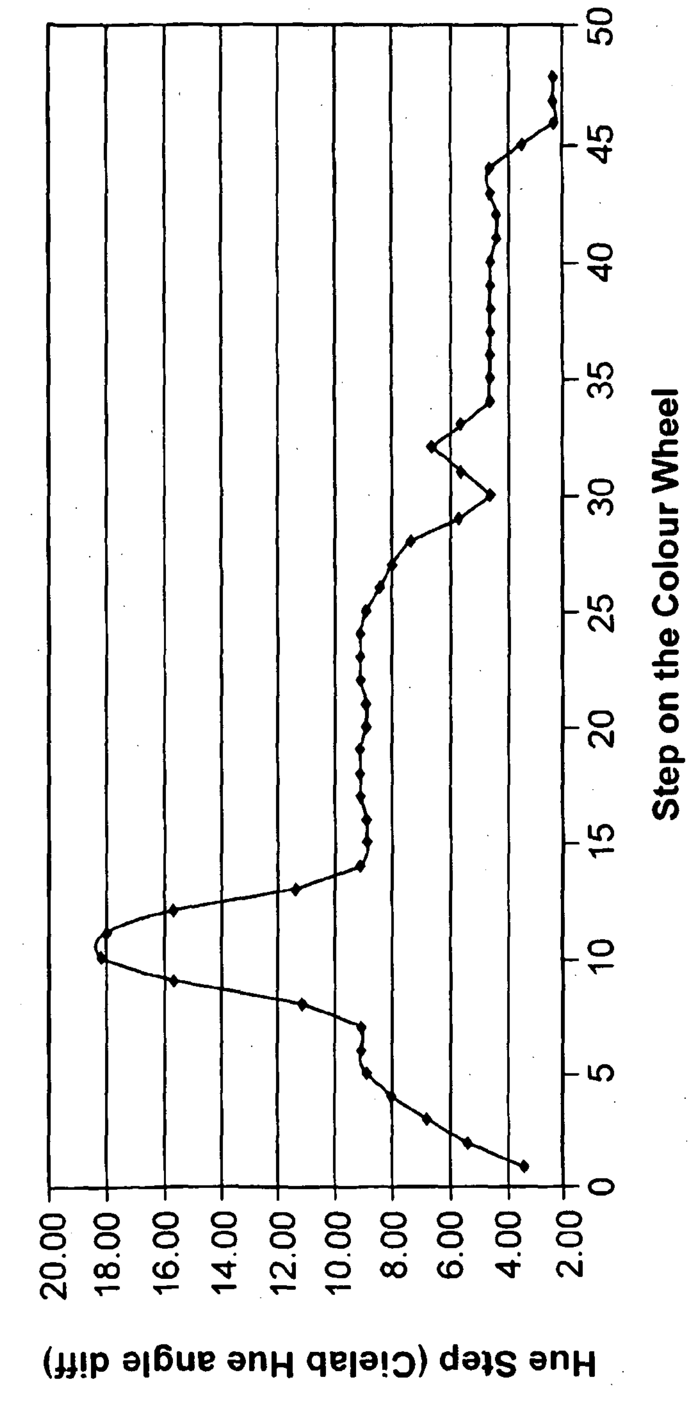

FIG. 3B

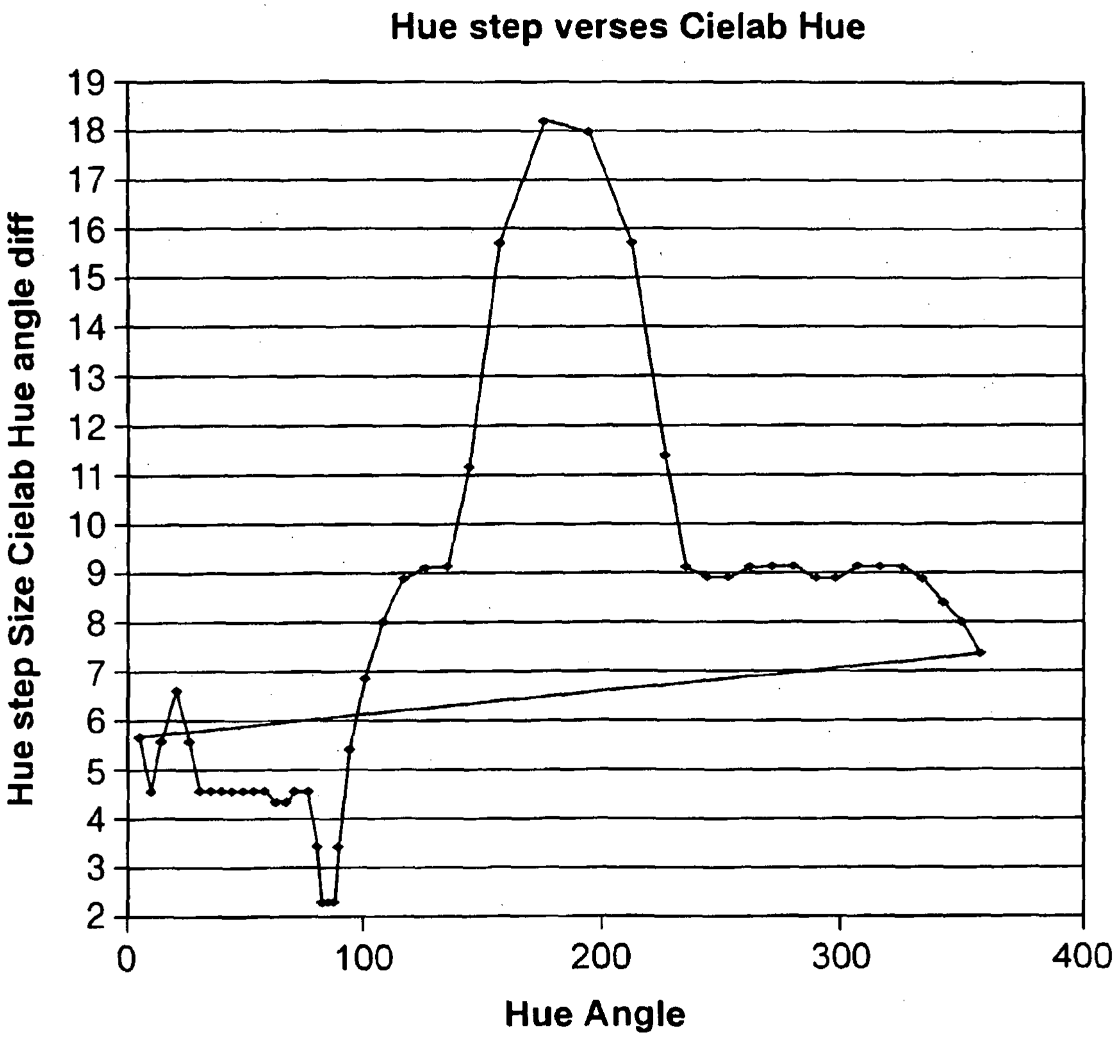
Hue step verses Cielab Hue
Hue step Size Cielab Hue angle diff
19
18
17
16
15
14
13
12
11
10
9
8
7
6
5
4
3
2
0
100
200
300
400
Hue Angle

FIG. 4

Example 1: Hue verses Card

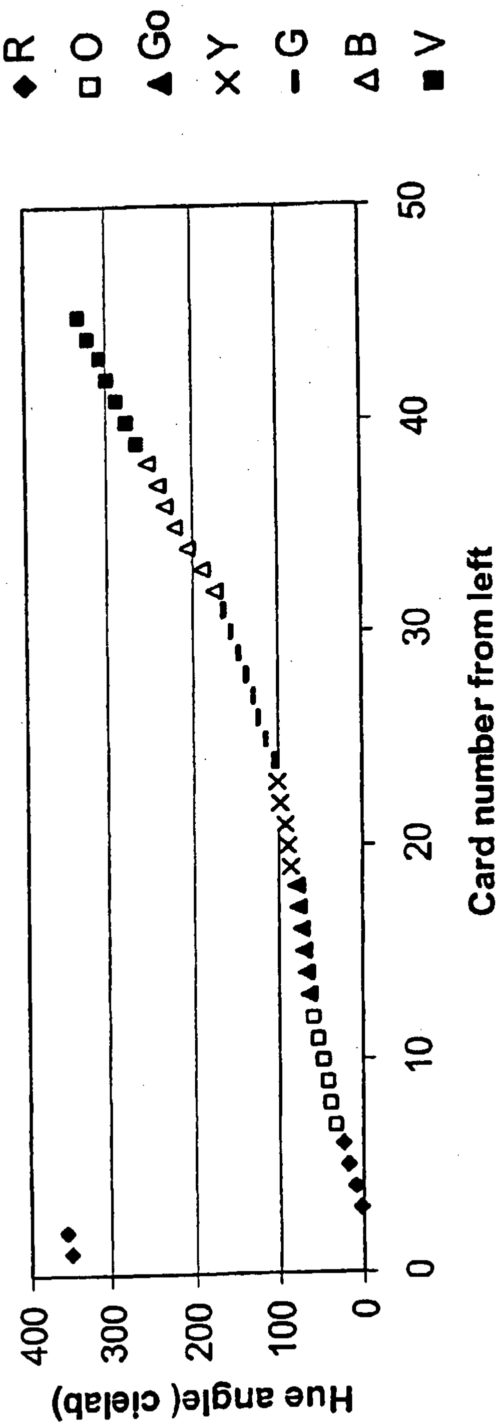

FIG. 5

Example 2: Hue verses Card

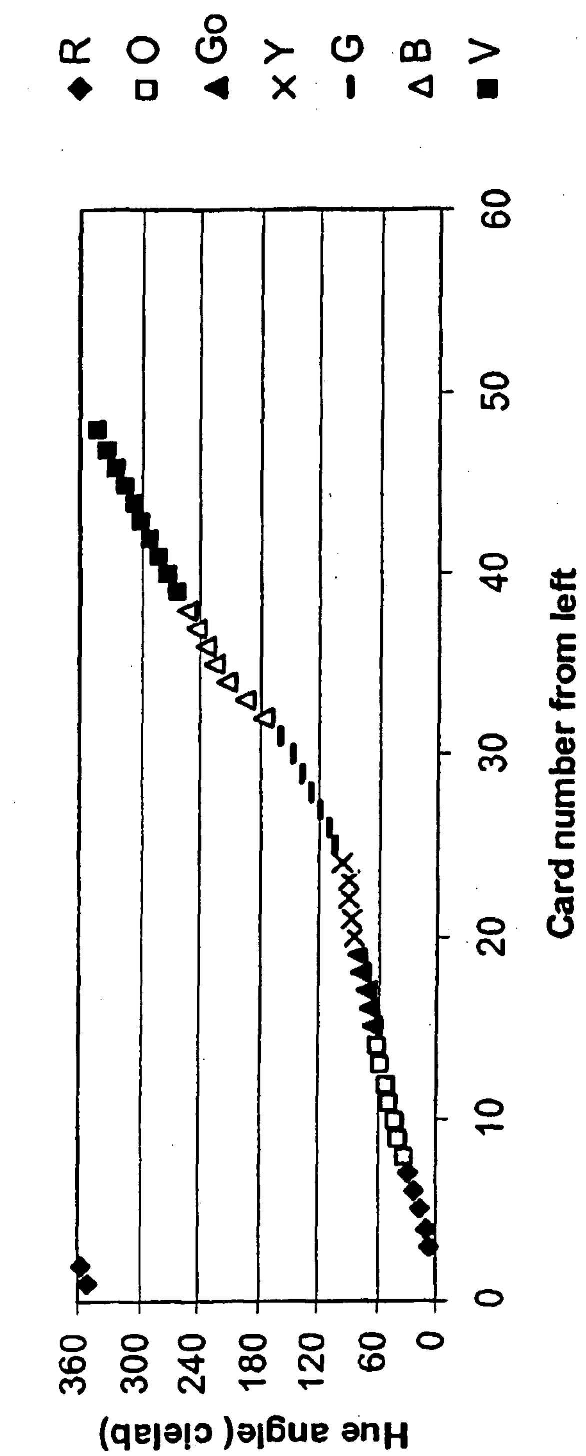

FIG. 6

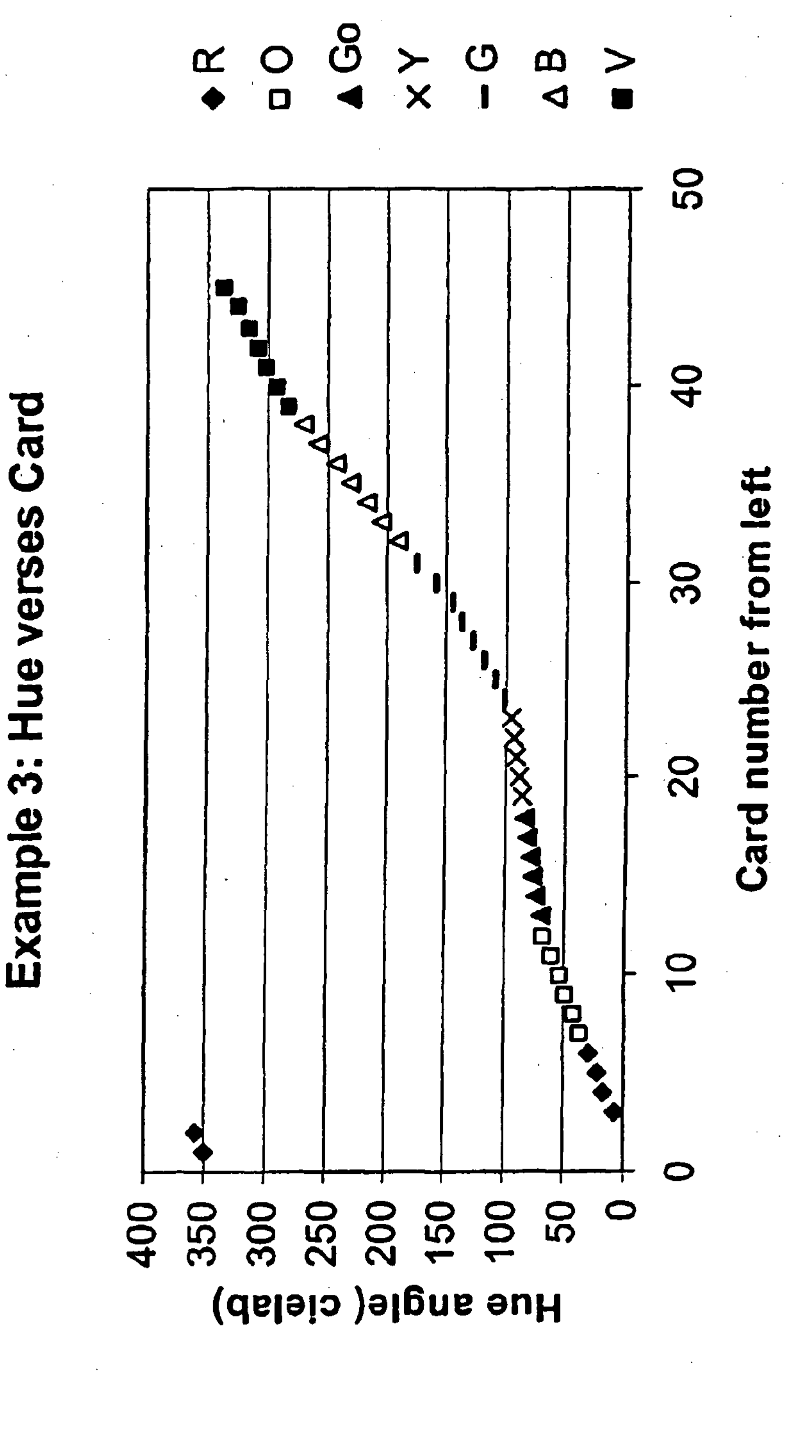
Example 3: Hue verses Card
Hue angle( cielab)
400
350
300
250
200
150
100
50
0
10
20
30
40
50
Card number from left
R
O
Go
Y
G
B
V

FIG. 7

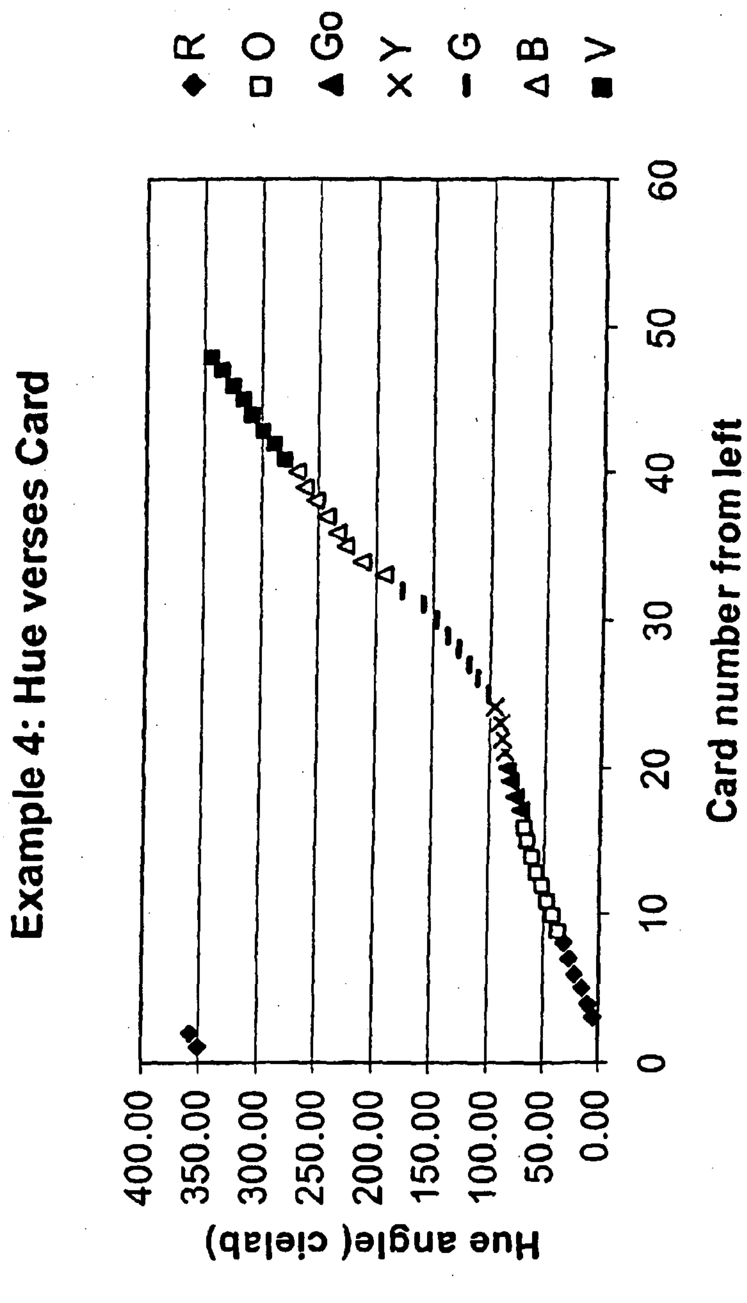
Example 4: Hue verses Card
Hue angle( cielab)
400.00
350.00
300.00
250.00
200.00
150.00
100.00
50.00
0.00
0
10
20
30
40
50
60
Card number from left
R
O
Go
Y
G
B
V

*FIG. 8*

**Example 5: Hue verses Card**

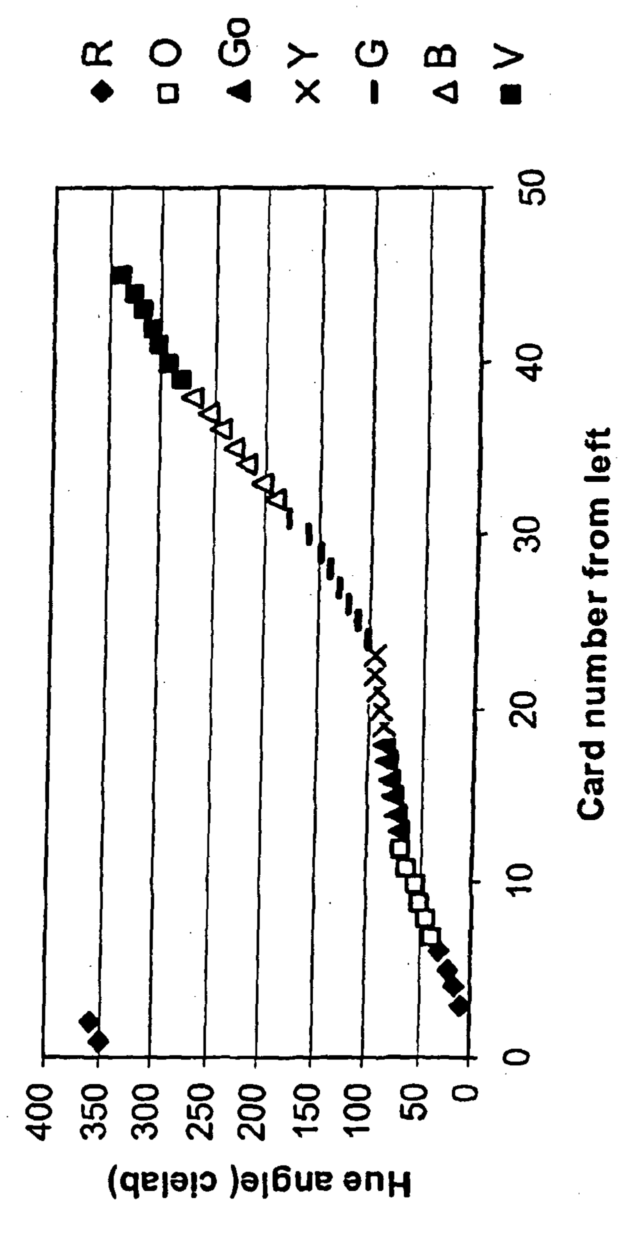

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2004046802 A